# EUROPÄISCHE PATENTSCHRIFT

(11) **EP 4 214 905 B1**
(45) Veröffentlichungstag und Bekanntmachung des Hinweises auf die Patenterteilung: **14.02.2024**
(21) Anmeldenummer: 21794542.7
(22) Anmeldetag: 18.10.2021
(51) Int. Cl.: H04L 12/40, H04L 69/40

(54) **AUTOMATISIERUNGSSYSTEM MIT EINER MASTER-SLAVE-STRUKTUR, VERTEILER UND VERFAHREN ZUR TELEGRAMMÜBERTRAGUNG**
AUTOMATION SYSTEM HAVING A MASTER-SLAVE STRUCTURE, DISTRIBUTOR, AND METHOD FOR TELEGRAM TRANSMISSION
SYSTÈME D'AUTOMATISATION À STRUCTURE MAÎTRE-ESCLAVE, DISTRIBUTEUR ET PROCÉDÉ DE TRANSMISSION DE TÉLÉGRAMMES

(30) Priorität: 22.10.2020 DE 102020127804
(43) Veröffentlichungstag der Anmeldung: 26.07.2023
(73) Patentinhaber: Beckhoff Automation GmbH, 33415 Verl (DE)
(72) Erfinder: BÜTTNER, Holger, 12205 Berlin (DE); JANSSEN, Dirk, 33415 Verl (DE); VONNAHME, Erik, 33154 Salzkotten (DE); BUNTE, Thorsten, 33335 Gütersloh (DE); RETTIG, Thomas, 33378 Rheda-Wiedenbrück (DE)
(74) Vertreter: Patentanwaltskanzlei WILHELM & BECK
(86) Internationale Anmeldenummer: PCT/EP2021/078776
(87) Internationale Veröffentlichungsnummer: WO 2022/084232

(56) Entgegenhaltungen:
- EP-A1- 3 647 888
- DE-A1-102008 037 610
- DE-A1-102015 105 929
- DE-B3-102006 055 889

## Beschreibung

Die Erfindung betrifft ein Automatisierungssystem mit einer Master-Slave-Struktur und ein Verfahren zur Telegrammübertragung in einem solchen Automatisierungssystem.

Die Patentanmeldung beansprucht die Priorität der deutschen Patentanmeldung DE 10 2020 127 804.7, eingereicht am 22.10.2020 mit dem Titel AUTOMATISIERUNGSSYSTEM MIT EINER MASTER-SLAVE-STRUKTUR, VERTEILER UND VERFAHREN ZUR TELEGRAMMÜBERTRAGUNG.

In der Fertigungs- und Automatisierungstechnik werden oft serielle Netzwerksysteme eingesetzt, bei denen die dezentral angeordneten Geräte einer Maschinenperipherie wie E/A-Module, Messumformer, Antriebe, Ventile und Bedienerterminals mit Automatisierungs-, Engineerings- oder Visualisierungssystemen kommunizieren. Alle Teilnehmer sind dabei über einen seriellen Datenbus, vorzugsweise über einen Feldbus, miteinander vernetzt, wobei der Datenaustausch über den Datenbus in der Regel auf der Grundlage des Master-Slave-Prinzips in Form von Datenpaketen, auch als Telegramme bezeichnet, ausgeführt wird.

Die Master-Einheiten am Datenbus, in der Regel die Steuergeräte, sind im Besitz einer Buszugriffsberechtigung und bestimmen den Datentransfer auf dem Datenbus. Die Slave-Einheiten am Datenbus, in der Regel Maschinenperipheriegeräte, haben keine Buszugriffsberechtigung, d. h. sie dürfen nur empfangene Telegramme quittieren oder auf Anfrage einer Master-Einheit Telegramme an diese übermitteln.

Die Telegramme, auch als Frames bezeichnet, setzen sich aus Steuerdaten und Nutzdaten zusammen. Als Protokoll zum Steuern des Datenaustausches auf den Datenbus wird dabei oft der Ethernet-Standard verwendet, der Telegramme mit einer Länge von bis zu 1500 Byte bei einer gleichzeitig hohen Übertragungsgeschwindigkeit von bis zu 10 Gbit/sec ermöglicht.

Der Datenbus des Master-Slave-Automatisierungssystems besitzt oft eine Ringstruktur, bei der die einzelnen Slave-Einheiten am Übertragungsweg zu einem Ring zusammengeschlossen sind, wobei jeder Teilnehmer mit zwei Nachbarn und der erste und der letzte Teilnehmer im Ring mit der Master-Einheit verbunden ist. Die Übertragung der Telegramme erfolgt dabei in eine Richtung ausgehend von der Master-Einheit über deren Sendeeinheit zur ersten angeschlossenen Slave-Einheit und von dort zur nächsten, bis die in Datenübertragungsrichtung letzte Slave-Einheit im Ring erreicht ist, und dann von der letzten Slave-Einheit zurück zur Empfangseinheit der Master-Einheit.

Eine Anforderung an Master-Slave-Automatisierungssysteme, insbesondere beim Einsatz in der Fertigungs- und Prozessautomatisierung, ist eine hohe Fehlertoleranz, also die Fähigkeit des Automatisierungssystems, trotz des Auftretens von Fehlern die geforderte Funktion, d. h. zum Beispiel die Herstellung eines Werkstücks, zu gewährleisten. Fehler im Automatisierungssystem, die ohne Beeinträchtigung überstanden werden müssen, sind dabei neben Fehlern in den Telegrammen auch der Ausfall eines Teilnehmers im Übertragungsweg bzw. eine Unterbrechung des Übertragungsweges, beispielsweise durch physikalisches Durchtrennen des Übertragungsmediums.

Aus der EP 1 869 836 B1 ist ein Master-Slave-Automatisierungssystem bekannt, bei dem der Datenbus eine Doppelringtopologie mit zwei getrennten Kommunikationspfaden aufweist, die eine Master-Einheit mit Slave-Einheiten verbindet. Die Master-Einheit erzeugt zwei Telegramme mit einem identischen Nutzdatenblock, die gegenläufig auf den beiden Kommunikationspfaden umlaufen. Im Fehlerfall, bei einem Streckenfehler im Datenbus, werden in den beiden an die Unterbrechungsstelle angrenzenden Slave-Einheiten die zwei getrennten Kommunikationspfade kurzgeschlossen. Durch Überlagerung der Nutzdatenblocks der beiden Telegramme nach dem Umlauf in der Master-Einheit kann ein kombiniertes Datenfeld erzeugt werden, in dem unbesehen davon, wie die Telegramme über die Kommunikationspfade zur Master-Einheit rückgekoppelt werden, alle von den Slave-Einheiten zu übermittelnden Daten enthalten sind.

Um einen Ausfall einer Master-Einheit zu kompensieren, ist in der EP 3 072 262 B1 eine Erweiterung eines Master-Slave-Automatisierungssystems beschrieben, bei dem zwei Master-Einheiten am Datenbus vorgesehen sind. Beim Ausfall der einen Master-Einheit kann dann eine zweite Ersatz-Master-Einheit die Kommunikation übernehmen. Um eine solche Umschaltung durchführen zu können, benötigt die zweite Ersatz-Master-Einheit eine Zusatz-Hardware, weshalb die Ersatz-Master-Einheit nicht oder nur mit zusätzlichem Aufwand in einem beliebigen Industrie-PC realisierbar ist.

Aus der DE 10 2006 055 889 B3 ist ein Automatisierungssystem mit redundanter Master-Einheit, wenigstens einer Slave-Einheit und einem ringförmigen Datenbus bekannt, wobei ferner zwei Verteiler mit jeweils einer Vermittlungseinrichtung vorgesehen sind, über die die Master-Einheiten mit dem ringförmigen Datenbus verbunden sind.

Aus der DE 10 2008 037 610 A1 ist ein Automatisierungssystem mit redundanter Master-Einheit, wenigstens einer Slave-Einheit und einem ringförmigen Datenbus bekannt, wobei durch einen Umschalter entweder die erste oder die zweite Master-Einheit mit dem ringförmigen Datenbus verbunden ist.

Weiterer Stand der Technik ist aus der DE 10 2015 105 929 bekannt.

Aufgabe der vorliegenden Erfindung ist es, ein Automatisierungssystem mit einer Master-Slave-Struktur und ein Verfahren zur Telegrammübertragung in einem solchen Automatisierungssystem bereitzustellen, die eine verbesserte Neukonfiguration des Telegrammübertragungsweges beim Master-Einheit-Betriebswechsel ermöglichen.

Diese Aufgabe wird durch ein Automatisierungssystem nach Anspruch 1 und ein Verfahren nach Anspruch 7 gelöst. Bevorzugte Weiterbildungen sind in den abhängigen Ansprüchen angegeben.

Ein Automatisierungssystem mit einer Mehrzahl von Teilnehmern, und einem ringförmigen Datenbus umfasst als Teilnehmer eine erste Master-Einheit, einen ersten Verteiler, eine zweite Master-Einheit, einen zweiten Verteiler und wenigstens eine Slave-Einheit.

Die erste Master-Einheit und die zweite Master-Einheit weisen jeweils eine Steuereinrichtung auf, die ausgelegt ist, Telegramme zu erzeugen, wobei die Telegramme jeweils einen Steuerdatenblock mit einer individuellen Kennung und einen Nutzdatenblock umfassen.

Der erste Verteiler weist eine Vermittlungseinrichtung, eine erste Sende-/Empfangseinrichtung und eine zweite Sende-/Empfangseinrichtung auf, wobei die Vermittlungseinrichtung mit der Steuereinrichtung der ersten Master-Einheit und der ersten und zweiten Sende-/Empfangseinrichtung verbunden ist, um nach Auswerten von in den Telegrammen enthaltenen individuellen Kennungen auf der Grundlage der in der Vermittlungseinrichtung festgelegten ersten Vermittlungsregelung die Telegramme zwischen der Steuereinrichtung der ersten Master-Einheit, der ersten Sende-/Empfangseinrichtung und der zweiten Sende-/Empfangseinrichtung zu übertragen.

Der zweite Verteiler weist eine Vermittlungseinrichtung, eine erste Sende-/Empfangseinrichtung und eine zweite Sende-/Empfangseinrichtung auf, wobei die Vermittlungseinrichtung mit einer Steuereinrichtung der zweiten Master-Einheit und der ersten und zweiten Sende-/Empfangseinrichtung verbunden ist, um nach Auswertung der in den Telegrammen enthaltenen individuellen Kennung auf der Grundlage einer in der Vermittlungseinrichtung festgelegten zweiten Vermittlungsregelung die Telegramme zwischen der Steuereinrichtung der zweiten Master-Einheit, der ersten Sende-/Empfangseinrichtung und der zweiten Sende-/Empfangseinrichtung zu übertragen.

Die ersten Sende-/Empfangseinrichtungen des ersten Verteilers und des zweiten Verteilers sind über den ringförmigen Datenbus verbunden, um Telegramme zwischen den ersten Sende-/Empfangseinrichtungen des ersten Verteilers und des zweiten Verteilers zu übertragen. Ferner sind die zweiten Sende-/Empfangseinrichtungen des ersten Verteilers und des zweiten Verteilers über den ringförmigen Datenbus verbunden, um Telegramme zwischen den zweiten Sende-/Empfangseinrichtungen des ersten Verteilers und des zweiten Verteilers zu übertragen.

Die Slave-Einheit weist eine Verarbeitungseinheit, eine erste Sende-/Empfangseinrichtung und eine zweite Sende-/Empfangseinrichtung auf, wobei die Verarbeitungseinheit mit der ersten Sende-/Empfangseinrichtung und der zweiten Sende-/Empfangseinrichtung verbunden und ausgelegt ist, um zwischen der ersten Sende-/Empfangseinrichtung und der zweiten Sende-/Empfangseinrichtung ausgetauschte Telegramme zu verarbeiten, und wobei die erste Sende-/Empfangseinrichtung mit dem Datenbus verbunden ist, um Telegramme auf dem Datenbus mit der ersten Sende-/Empfangseinrichtung des ersten Verteilers auszutauschen, wobei die zweite Sende-/Empfangseinrichtung mit dem Datenbus verbunden ist, um Telegramme auf dem Datenbus mit der ersten Sende-/Empfangseinrichtung des zweiten Verteilers auszutauschen.

In einem ersten Betriebsmodus leitet die in der Vermittlungseinrichtung des ersten Verteilers festgelegte erste Vermittlungsregelung von der ersten Master-Einheit empfangene Telegramme zur ersten Sende-/Empfangseinrichtung weiter. Ferner leitet die in der Vermittlungseinrichtung des ersten Verteilers festgelegte erste Vermittlungsregelung von durch die zweite Sende-/Empfangseinrichtung empfangene Telegramme zur ersten Master-Einheit weiter. Die in der Vermittlungseinrichtung des zweiten Verteilers festgelegte zweite Vermittlungsregelung leitet außerdem von der ersten Sende-/Empfangseinrichtung empfangene erste Telegramme zur zweiten Sende-/Empfangseinrichtung weiter.

In einem zweiten Betriebsmodus leitet die in der Vermittlungseinrichtung des zweiten Verteilers festgelegte zweite Vermittlungsregelung von der zweiten Master-Einheit empfangene Telegramme zur zweiten Sende-/Empfangseinrichtung weiter. Ferner leitet die in der Vermittlungseinrichtung des zweiten Verteilers festgelegte zweite Vermittlungsregelung von der ersten Sende-/Empfangseinrichtung empfangene Telegramme zur zweiten Master-Einheit weiter. Die in der Vermittlungseinrichtung des ersten Verteilers festgelegte erste Vermittlungsregelung leitet außerdem von der zweiten Sende-/Empfangseinrichtung empfangene Telegramme zur ersten Sende-/Empfangseinrichtung weiter.

Diese Ausgestaltung des Master-Slave-Automatisierungssystems ermöglicht mit einem geringen zusätzlichen Hardwareaufwand, dass bei einem Umschalten zwischen zwei Betriebsmodi, beispielsweise aufgrund des Ausfalls der aktuell für die Steuerung des Automatisierungssystems zuständigen Master-Einheit, automatisch der Telegrammübertragungsweg in Echtzeit neu konfiguriert wird. Die Fehlertoleranzfunktionalität wird durch die beiden, zusätzlich im Automatisierungssystem vorgesehenen, Verteiler bzw. durch deren vorgespeicherte Vermittlungsregelungen bewirkt, die selbstständig von der einen Master-Einheit auf die andere Master-Einheit umstellen.

Der Datenbus kann einen ersten Kommunikationspfad und einen zweiten Kommunikationspfad umfassen, wobei die ersten Sende-/Empfangseinrichtungen des ersten Verteilers und des zweiten Verteilers jeweils mit dem ersten Kommunikationspfad und dem zweiten Kommunikationspfad des Datenbusses verbunden sind, um Telegramme auf dem ersten Kommunikationspfad und dem zweiten Kommunikationspfad des Datenbusses zu übertragen. Die erste Sende-/Empfangseinrichtung der Slave-Einheit ist mit dem ersten Kommunikationspfad und dem zweiten Kommunikationspfad des Datenbusses verbunden, um Telegramme auf dem ersten Kommunikationspfad und dem zweiten Kommunikationspfad des Datenbusses mit der ersten Sende-/Empfangseinrichtung des ersten Verteilers auszutauschen. Die zweite Sende-/Empfangseinrichtung der Slave-Einheit ist mit dem ersten Kommunikationspfad und dem zweiten Kommunikationspfad des Datenbusses verbunden, um Telegramme auf dem ersten Kommunikationspfad und dem zweiten Kommunikationspfad des Datenbusses mit der ersten Sende-/Empfangseinrichtung des zweiten Verteilers auszutauschen.

In dem ersten Betriebsmodus erzeugt die Steuereinrichtung der ersten Master-Einheit erste Telegramme mit einer ersten Kennung und zweite Telegramme mit einer zweiten Kennung, die einen identischen Nutzdatenblock aufweisen. Die in der Vermittlungseinrichtung des ersten Verteilers festgelegte erste Vermittlungsregelung leitet dann von der ersten Master-Einheit empfangene erste Telegramme zur ersten Sende-/Empfangseinrichtung und von der ersten Master-Einheit empfangene zweite Telegramme zur zweiten Sende-/Empfangseinrichtung weiter. Weiterhin leitet die in der Vermittlungseinrichtung des ersten Verteilers festgelegte erste Vermittlungsregelung von der ersten Sende-/Empfangseinrichtung empfangene zweite Telegramme und von der zweiten Sende-/Empfangseinrichtung empfangene erste Telegramme zur ersten Master-Einheit weiter. Ferner leitet die in der Vermittlungseinrichtung des zweiten Verteilers festgelegte zweite Vermittlungsregelung von der zweiten Sende-/Empfangseinrichtung empfangene zweite Telegramme zur ersten Sende-/Empfangseinrichtung weiter. Außerdem leitet die in der Vermittlungseinrichtung des zweiten Verteilers festgelegte zweite Vermittlungsregelung von der ersten Sende-/Empfangseinrichtung empfangene erste Telegramme zur zweiten Sende-/Empfangseinrichtung weiter.

In dem zweiten Betriebsmodus erzeugt die Steuereinrichtung der zweiten Master-Einheit dritte Telegramme mit einer dritten Kennung und vierte Telegramme mit einer vierten Kennung, die einen identischen Nutzdatenblock aufweisen. Die in der Vermittlungseinrichtung des zweiten Verteilers festgelegte zweite Vermittlungsregelung leitet von der zweiten Master-Einheit empfangene dritte Telegramme zur zweiten Sende-/Empfangseinrichtung und von der zweiten Master-Einheit empfangene vierte Telegramme zur ersten Sende-/Empfangseinrichtung weiter. Weiterhin leitet die in der Vermittlungseinrichtung des zweiten Verteilers festgelegte zweite Vermittlungsregelung von der ersten Sende-/Empfangseinrichtung empfangene dritte Telegramme und von der zweiten Sende-/Empfangseinrichtung empfangene vierte Telegramme zur zweiten Master-Einheit weiter. Ferner leitet die in der Vermittlungseinrichtung des ersten Verteilers festgelegte erste Vermittlungsregelung von der zweiten Sende-/Empfangseinrichtung empfangene dritte Telegramme zur ersten Sende-/Empfangseinrichtung weiter. Außerdem leitet die in der Vermittlungseinrichtung des ersten Verteilers festgelegte erste Vermittlungsregelung von der ersten Sende-/Empfangseinrichtung empfangene vierte Telegramme zur zweiten Sende-/Empfangseinrichtung weiter.

Mit der Doppelringtopologie kann bei Auftreten eines Streckenfehlers auf dem einen Kommunikationspfad auf die Telegramübertragung auf den anderen Kommunikationspfad umgeschaltet werden, wobei die beiden zusätzlich im Master-Slave-Automatisierungssystem vorgesehenen Verteiler bzw. deren vorgespeicherten Vermittlungsregelungen bewirken, dass Telegramme auf beiden Kommunikationspfaden auch beim Umschalten zwischen den zwei Master-Einheiten den Telegrammübertragungsweg korrekt umlaufen.

Die Slave-Einheit kann weiter eine Kopplungseinrichtung aufweisen, die ausgelegt ist, beim Auftreten eines Datenübertragungsfehlers zu dem mit der erste Sende-/Empfangseinrichtung verbundenen Teilnehmer den ersten Kommunikationspfad und den zweiten Kommunikationspfad in der ersten Sende-/Empfangseinrichtung kurzzuschließen und beim Auftreten eines Datenübertragungsfehlers zu dem mit der zweiten Sende-/Empfangseinrichtung verbundenen Teilnehmer den ersten Kommunikationspfad und den zweiten Kommunikationspfad in der zweiten Sende-/Empfangseinrichtung kurzzuschließen.

In dem ersten Betriebsmodus leitet die in der Vermittlungseinrichtung festgelegte erste Vermittlungsregelung von der ersten Sende-/Empfangseinrichtung empfangene erste Telegramme und von der zweiten Sende-/Empfangseinrichtung empfangene zweite Telegramme zur ersten Master-Einheit weiter. Ferner leitet die in der Vermittlungseinrichtung des zweiten Verteilers festgelegte zweite Vermittlungsregelung von der ersten Sende-/Empfangseinrichtung empfangene zweite Telegramme zur zweiten Sende-/Empfangseinrichtung weiter.

In dem zweiten Betriebsmodus leitet die in der Vermittlungseinrichtung des ersten Verteilers festgelegte erste Vermittlungsregelung von der ersten Sende-/Empfangseinrichtung empfangene dritte Telegramme zur zweiten Sende-/Empfangseinrichtung weiter. Ferner leitet die in der Vermittlungseinrichtung festgelegte zweite Vermittlungsregelung von der zweiten Sende-/Empfangseinrichtung empfangene dritte Telegramme und von der ersten Sende-/Empfangseinrichtung empfangene vierte Telegramme zur zweiten Master-Einheit weiter.

Mit dieser Auslegung des Automatisierungssystems mit einer Master-Slave-Struktur kann bei Auftreten von Streckenfehlern auch nur auf einem Kommunikationspfad in der Doppelringtopologie eine automatische Neukonfiguration der Telegrammübertragungswege vorgenommen werden. Das Verhalten der Teilnehmer im Automatisierungssystem unterscheidet sich im Neukonfigurationsfall, also bei Auftreten eines Streckenfehlers, nicht vom Verhalten im Normalbetrieb. Die automatische Neukonfiguration durch die beiden zusätzlich im Master-Slave-Automatisierungssystem vorgesehenen Verteiler bzw. durch deren vorgespeicherte Vermittlungsregelungen sorgt für eine hohe Dynamik beim Umschaltvorgang und ermöglicht damit das Einhalten von Echtzeitanforderungen im Automatisierungssystem.

Wenn der erste Betriebsmodus der Standard-Betriebsmodus ist, leitet im ersten Betriebsmodus die in der Vermittlungseinrichtung des zweiten Verteilers festgelegte zweite Vermittlungsregelung von der ersten Sende-/Empfangseinrichtung empfangene Telegramme zusätzlich zur zweiten Master-Einheit weiter.

Mit dieser Vorgehensweise wird bewirkt, dass immer beide Master-Einheiten, also auch die Ersatz-Master-Einheit, den kompletten Telegrammverkehr erhalten, damit beim Umschalten von der Haupt-Master-Einheit auf die Ersatz-Master-Einheit die Ersatz-Master-Einheit ohne Verzögerung den Steuerungsvorgang im Automatisierungssystem auf der Grundlage des aktuellen Status fortsetzen kann.

Die Steuereinrichtung der zweiten Master-Einheit kann dann den Standard-Betriebsmodus überwachen, um bei Feststellen einer Unterbrechung des Standard-Betriebsmodus den zweiten Betriebsmodus aufzunehmen.

Mit dieser Vorgehensweise wird dafür gesorgt, dass die Ersatz-Master-Einheit bei einem Ausfall der Haupt-Master-Einheit ohne Verzögerung den Betrieb aufnimmt, um den Steuerungsvorgang im Automatisierungssystem ohne Unterbrechung fortzusetzen.

Die Steuereinrichtung der zweiten Master-Einheit kann weiter ausgelegt sein, bei einem Wiederaufnehmen des Standard-Betriebsmodus die im zweiten Betriebsmodus von der Steuereinrichtung der zweiten Master-Einheit empfangenen Telegramme zur Steuereinrichtung der ersten Master-Einheit zu übertragen.

Diese Vorgehensweise bewirkt, dass der Standard-Betriebsmodus ohne Verzögerung beispielsweise nach dem Beheben der Haupt-Master-Einheit wieder aufgenommen werden kann.

Die Erfindung wird anhand der beigefügten Zeichnungen näher erläutert.
- Fig. 1: zeigt in schematischer Darstellung ein Master-Slave-Automatisierungssystem mit einer Doppelringstruktur, die eine erste Master-Einheit als Haupt-Master-Einheit mit einem ersten Verteiler und eine zweite Master-Einheit als Ersatz-Master-Einheit mit einem zweiten Verteiler aufweist.
- Figur 2: zeigt in schematischer Darstellung den möglichen Aufbau einer Slave-Einheit.
- Figur 3: zeigt in schematischer Darstellung das Automatisierungssystem aus Fig. 1, wobei Fig. 3A einen ersten Betriebsmodus, der als Standard-Betriebsmodus dient, und Figur 1B einen zweiten Betriebsmodus, der als Ersatz-Betriebsmodus dient, wiedergibt.
- Fig. 4: zeigt in schematischer Darstellung das Automatisierungssystem aus Fig. 1, wobei Figur 4A den ersten Betriebsmodus und Figur 4B den zweiten Betriebsmodus jeweils bei Auftreten eines Streckenfehlers wiedergibt.

In der Industrieautomation werden Netzwerke eingesetzt, um verteilt angeordnete Feldgeräte einer Sensor-/Aktorebene mit einer Steuerungsebene zu verbinden. Die Automatisierungssysteme, auch Feldbussysteme genannt, weisen in der Regel einen seriellen Bus auf, an dem die Netzwerkteilnehmer angeschlossen sind. Dabei werden von den Herstellern verschiedene Feldbuskonzepte eingesetzt, die sich in Bezug auf die Verbindungsstruktur, den Buszugang und das normierte Feldbusprotokoll unterscheiden.

Das Netzwerkprotokoll legt fest, wie der Datenaustausch zwischen den Teilnehmern am Netzwerk durchgeführt werden soll. Dabei bestimmt das Netzwerkprotokoll die Regeln und Formate für das Kommunikationsverhalten der Teilnehmer. Der vom Netzwerkprotokoll festgelegte Nachrichtenaufbau enthält alle für den Datenaustausch wichtigen Informationen, wie Absender und Empfänger, Nachrichtentyp, Nachrichtengröße und Prüfsumme zum Nachvollziehen einer fehlerfreien Übertragung. Diese Informationen werden den Nutzdaten in der Nachricht als Header vorangestellt oder als Trailer angehängt.

Als Kommunikationsstandard für Netzwerke mit kurzer Reichweite, insbesondere auch in Automatisierungssystemen, hat sich das Ethernet-Protokoll etabliert. Das Ethernet-Protokoll unterteilt die zu übertragenden Daten in sogenannte Frames, deren Aufbau im Standard IEEE 802.3 festgelegt ist. Dem eigentlichen Ethernet-Frame sind eine Präambel und ein Startbit, das sogenannte Start Frame Delimiter SFD vorgeschaltet. Daran schließt sich dann das eigentliche Ethernet-Telegramm an. Das Ethernet-Telegramm setzt sich aus einem Kopfabschnitt, dem Header, einem Nutzdatenblock und einem Endabschnitt, dem Trailer zusammen.

Der Header startet mit einem 6-Byte-Feld für die Zieladresse, an das sich ein weiteres 6-Byte-Feld mit der Quelladresse anschließt. Dann kann ein weiteres 6-Byte-Feld, das sogenannte Tag-Feld, mit zusätzlichen Steuerdaten im Header folgen, das insbesondere Priorisierungsinformationen enthält. Der Header schließt mit einem 2-Byte-Feld, dem sogenannte Type-Feld, ab, das Auskunft gibt über das Protokoll, mit dem die Daten im Nutzdatenblock zu verarbeiten sind.

Der sich an den Header anschließende Nutzdatenblock kann eine Länge von 1500 Bytes aufweisen, wobei in verschiedenen Ethernet-Protokoll-Erweiterungen auch größere Datenblöcke erlaubt sein können. Der Nutzdatenblock kann von dem sogenannten PAD-Feld abgeschlossen werden, um die festlegte Mindestlänge des Ethernet-Frames zu garantieren.

An den Nutzdatenblock schließt der Trailer an, der ein 6-Byte-Feld mit einer Prüfsumme aufweist. Wenn ein Ethernet-Telegramm erstellt wird, wird eine CRC-Berechnung über die Bitfolge durchgeführt und die Prüfsumme an den Datenblock angehängt. Der Empfänger führt nach dem Empfang die gleiche Berechnung aus. Stimmt die empfangene Prüfsumme nicht mit der selbst berechneten Prüfsumme überein, geht der Empfänger von einer fehlerhaften Übertragung aus. Das Ethernet-Telegramm wird dann verworfen.

Der Einsatz des Ethernet-Standards in der Industrieautomation ermöglicht es, Echtzeitlösungen bereitzustellen. Echtzeitfähige Feldbussysteme, die auf dem Ethernet-Standard basieren, sind beispielsweise PROFINET, EtherCAT, Powerlink oder SERCOS III. Das jeweils eingesetzte Feldbusprotokoll wird dabei als Type-Feld im Header des Ethernet-Frames angezeigt.

Neben dem Ethernet-Standard können in Automatisierungssystemen jedoch auch andere Feldbus-Protokolle, wie beispielsweise das CANopen, Interbus oder Profibus, eingesetzt werden.

Automatisierungssysteme werden in der Regel mit einer Master-Slave-Struktur betrieben. Die Master-Einheit im Automatisierungssystem ist die Steuerung, die die Buszugriffsberechtigung besitzt und Daten auf den Feldbus ausgeben kann. Die Slave-Einheit im Feldbussystem sind die Feldgeräte, wie beispielsweise E/A-Geräte, Ventile, Antriebe, Sensoren, Messumformer etc. Sie besitzen keine Buszugriffsberechtigung und dürfen empfangene Daten nur quittieren und auf Anforderungen durch die Master-Einheit Daten übermitteln.

Bei Master-Slave-Automatisierungssystemen erfolgt die Steuerung über ein Automatisierungssystem dann in der Regel so, dass die Master-Einheit vorzugsweise zyklisch Steuerungsvorgänge durchführt, um auf der Grundlage von Eingangsdaten von Slave-Einheiten Ausgangsdaten für diese und/oder andere Slave-Einheit zu erzeugen.

Die Master-Einheit verschickt nach Abschluss eines Steuerprozesszyklus die Ausgangsdaten in Form von Telegrammen auf dem Feldbus, wobei die Slave-Einheit die der jeweiligen Slave-Einheit zugeordneten Ausgangsdaten aus den Telegrammen entnehmen und mit diesen Ausgangsdaten einen lokalen Teilnehmerprozess ausführen kann. Die vom lokalen Teilnehmerprozess ermittelten Daten werden dann wiederum von der Slave-Einheit an die Master-Einheit übertragen und anschließend als Eingangsdaten für den nächsten Steuerprozesszyklus von der Master-Einheit genutzt.

Automatisierungssysteme mit einer Master-Slave-Struktur sind oft so ausgelegt, dass die einzelnen Slave-Einheiten über das Übertragungsmedium zu einer Kette zusammengeschlossen sind, wobei jede Slave-Einheit mit zwei Nachbarn, die erste und die letzte Slave-Einheit in der Kette dabei mit der Master-Einheit verbunden sind, sodass sich eine Ringstruktur ergibt. Die Datenübertragung auf dem Datenbus erfolgt in eine Richtung ausgehend von der Master-Einheit zur ersten benachbarten Slave-Einheit und von dort zur nächsten bis zur letzten Slave-Einheit und dann zurück zur Master-Einheit.

Im Automatisierungssystem mit einer Mehrzahl von Teilnehmern, die über einen Datenbus verbunden sind, können mehrere Master-Einheiten integriert sein, die den verschiedenen Betriebsmodi zugeordnet sind. Eine solche Ausgestaltung bietet sich insbesondere an, um die Datenkommunikation beim Ausfall der Master-Einheit durch den Steuerungsvorgang im Master-Slave-Automatisierungssystem ohne Unterbrechung fortsetzen zu können. Die zweite Master-Einheit dient als Ersatz-Master-Einheit im Master-Slave-Automatisierungssystem, die nach Ausfall der Haupt-Master-Einheit dann den Telegramm-Verkehr mit den Slave-Einheiten auszuführt.

Um mit einem geringen zusätzlichen Hardwareaufwand im Master-Slave-Automatisierungssystem automatisch zwei Betriebsmodi zu ermöglichen, beispielsweise um bei einem Ausfall der aktuell für die Steuerung des Automatisierungssystems zuständigen Haupt-Master-Einheit automatisch den Telegrammübertragungsweg mit der Ersatz-Master-Einheit fortzusetzen, sind die beiden Master-Einheiten jeweils über einen Verteiler mit als Ringstruktur ausgeführten Datenbus verbunden. Die beiden Verteiler weisen jeweils eine Vermittlungseinrichtung, die mit einer Steuereinrichtung der zugeordneten Master-Einheit verbunden ist, auf.

Die Steuereinrichtung der Master-Einheit ist ausgelegt, Telegramme zu erzeugen, die jeweils einen Steuerdatenblock mit einer individuellen Kennung und einen Nutzdatenblock umfassen.

Die beiden Verteiler weisen weiterhin jeweils eine erste Sende-/Empfangseinrichtung und eine zweite Sende-/Empfangseinrichtung auf, die mit der Vermittlungseinrichtung im Verteiler verbunden sind. Die erste Sende-/Empfangseinrichtung und die zweite Sende-/Empfangseinrichtung des Verteilers sind identisch aufgebaut. Die Kennzeichnung der Sende-/Empfangseinrichtung als erste Sende-/Empfangseinrichtung und die zweite Sende-/Empfangseinrichtung des Verteilers sind so gewählt, dass eine in der Vermittlungseinrichtung des ersten beziehungsweise zweiten Verteilers festgelegte erste beziehungsweise zweite Vermittlungsregelung von der zugeordneten ersten beziehungsweise zweiten Master-Einheit erzeugte Telegramme immer zur ersten Sende-/Empfangseinrichtung weiterleitet, um die Telegramme auf dem an die ersten Sende-/Empfangseinrichtung angeschlossenen Datenbus auszugeben.

Die Master-Einheit und der zugeordnete Verteiler können als getrennte Bauteile ausgebildet sein. In diesem Fall ist zwischen der Steuereinrichtung der Master-Einheit und der Vermittlungseinrichtung des Verteilers eine Telegramm-Übertragungseinrichtung geschaltet bestehend aus einer der Master-Einheit zugeordneten Sende-/Empfangseinrichtung und einer dem Verteiler zugeordneten Sende-/Empfangseinrichtung, die über einen Datenbus miteinander verbunden sind. Die der Master-Einheit zugeordnete Sende-/Empfangseinrichtung ist über eine interne Datenverbindung an die Steuereinrichtung der Master-Einheit angeschlossen. Als Master-Einheit kann so eine herkömmliche Master-Einheit ohne zusätzliche Hardware eingesetzt werden, die beispielsweise auf einem Industrie-PC realisiert ist. Der Verteiler ist dann als Zusatzbauteil für die Master-Einheit realisiert, wobei die dem Verteiler zugeordnete Sende-/Empfangseinrichtung mit einer internen Datenverbindung an die Vermittlungseinrichtung des Verteilers angeschlossen ist. Es besteht jedoch auch die Möglichkeit, die Master-Einheit und den Verteiler in ein einzelnes Bauteil zu integrieren, wobei die Steuereinrichtung der Master-Einheit und die Vermittlungseinrichtung des Verteilers dann über eine interne Datenverbindung direkt miteinander verbunden sind. Das Bauteil kann beispielsweise als anwendungsspezifische integrierte Schaltung (application-specific integrated circuit, ASIC) realisiert sein.

Die ersten Sende-/Empfangseinrichtungen und die zweiten Sende-/Empfangseinrichtungen der beiden Verteiler sind jeweils über den ringförmigen Datenbus miteinander verbunden, um Telegramme auf dem Datenbus zu übertragen. In den ringförmigen Datenbus zwischen den beiden Verteilern sind die Slave-Einheiten geschaltet.

Jede Slave-Einheit weist eine Verarbeitungseinheit, eine erste Sende-/Empfangseinrichtung und eine zweite Sende-/Empfangseinrichtung auf, wobei die Verarbeitungseinheit mit der ersten Sende-/Empfangseinrichtung und der zweiten Sende-/Empfangseinrichtung verbunden und ausgelegt ist, um zwischen der ersten Sende-/Empfangseinrichtung und der zweiten Sende-/Empfangseinrichtung ausgetauschte Telegramme zu verarbeiten. Die erste Sende-/Empfangseinrichtung und die zweite Sende-/Empfangseinrichtung der Slave-Einheit sind jeweils mit dem ringförmigen Datenbus verbunden, um Telegramme auf dem Datenbus mit der ersten Sende-/Empfangseinrichtung beziehungsweise zweiten Sende-/Empfangseinrichtung des ersten beziehungsweise zweiten Verteilers auszutauschen.

Im Weiteren wird angenommen, dass die erste Sende-/Empfangseinrichtung wenigstens einer Slave-Einheit über den Datenbus mit der ersten Sende-/Empfangseinrichtung des ersten Verteilers verbunden ist, um Telegramme auf dem Datenbus von der ersten Sende-/Empfangseinrichtung des ersten Verteilers zu empfangen. Ferner wird angenommen, dass die zweite Sende-/Empfangseinrichtung der wenigstens einen Slave-Einheit über den Datenbus mit der ersten Sende-/Empfangseinrichtung des zweiten Verteilers verbunden ist, um Telegramme nach einem Datenaustausch mit der Verarbeitungseinheit beim Durchlauf durch die Slave-Einheit auf dem Datenbus zur ersten Sende-/Empfangseinrichtung des zweiten Verteilers weiterzuleiten. Grundsätzlich besteht aber die Möglichkeit, dass Slave-Einheiten im Datenbus sowohl zwischen den ersten Sende-/Empfangseinrichtungen der beiden Verteiler als auch zwischen den zweiten Sende-/Empfangseinrichtungen der beiden Verteiler angeordnet sind.

In einem ersten Betriebsmodus leitet die in der Vermittlungseinrichtung des ersten Verteilers festgelegte erste Vermittlungsregelung von der ersten Master-Einheit empfangene Telegramme zur ersten Sende-/Empfangseinrichtung weiter. Ferner leitet die in der Vermittlungseinrichtung des ersten Verteilers festgelegte erste Vermittlungsregelung von der zweiten Sende-/Empfangseinrichtung empfangene Telegramme zur ersten Master-Einheit weiter. Die in der Vermittlungseinrichtung des zweiten Verteilers festgelegte zweite Vermittlungsregelung leitet außerdem von der ersten Sende-/Empfangseinrichtung empfangene erste Telegramme zur zweiten Sende-/Empfangseinrichtung weiter.

In einem zweiten Betriebsmodus leitet die in der Vermittlungseinrichtung des zweiten Verteilers festgelegte zweite Vermittlungsregelung von der zweiten Master-Einheit empfangene Telegramme zur zweiten Sende-/Empfangseinrichtung weiter. Ferner leitet die in der Vermittlungseinrichtung des zweiten Verteilers festgelegte zweite Vermittlungsregelung von der ersten Sende-/Empfangseinrichtung empfangene Telegramme zur zweiten Master-Einheit weiter. Die in der Vermittlungseinrichtung des ersten Verteilers festgelegte erste Vermittlungsregelung leitet außerdem von der zweiten Sende-/Empfangseinrichtung empfangene Telegramme zur ersten Sende-/Empfangseinrichtung weiter.

Die beiden zusätzlich im Automatisierungssystem vorgesehenen Verteiler bzw. deren vorgespeicherte Vermittlungsregelungen sorgen dafür, dass unabhängig davon, ob die Telegramme im Automatisierungssystem von der ersten Master-Einheit oder der zweiten Master-Einheit erzeugt werden, die Telegramme im Datenbus umlaufen und dabei von allen an den Datenbus angeschlossenen Slave-Einheiten verarbeitet werden. Die Neukonfiguration des Telegrammübertragungsweges beim Umschalten von der einen Master-Einheit zur anderen Master-Einheit beispielsweise aufgrund des Ausfalls der aktuell für die Steuerung des Automatisierungssystems zuständigen Master-Einheit erfolgt automatisch in Echtzeit.

Um eine hohe Fehlertoleranz insbesondere bei Streckenfehlern im Automatisierungssystem, d. h. bei Ausfall ganzer Übertragungsabschnitte mit Slave-Einheiten, beispielsweise durch Leitungsbruch zu gewährleisten, weisen Master-Slave-Automatisierungssysteme ferner oft einen zweiten Ersatz-Kommunikationspfad auf, der die Master-Einheiten mit den Slave-Einheiten zu einer weiteren Ringstruktur verbindet.

Der Datenbus weist dann einen ersten Kommunikationspfad und einen zweiten Kommunikationspfad auf, wobei die ersten Sende-/Empfangseinrichtungen des ersten Verteilers und des zweiten Verteilers jeweils mit dem ersten Kommunikationspfad und dem zweiten Kommunikationspfad des Datenbusses verbunden sind, um Telegramme auf dem ersten Kommunikationspfad und dem zweiten Kommunikationspfad des Datenbusses zu übertragen.

Die erste Sende-/Empfangseinrichtung der wenigstens einen Slave-Einheit ist mit dem ersten Kommunikationspfad und dem zweiten Kommunikationspfad des Datenbusses verbunden, um Telegramme auf dem ersten Kommunikationspfad und dem zweiten Kommunikationspfad des Datenbusses mit der ersten Sende-/Empfangseinrichtung des ersten Verteilers auszutauschen. Die zweite Sende-/Empfangseinrichtung der Slave-Einheit ist mit dem ersten Kommunikationspfad und dem zweiten Kommunikationspfad des Datenbusses verbunden, um Telegramme auf dem ersten Kommunikationspfad und dem zweiten Kommunikationspfad des Datenbusses mit der ersten Sende-/Empfangseinrichtung des zweiten Verteilers auszutauschen.

In dem ersten Betriebsmodus erzeugt die Steuereinrichtung der ersten Master-Einheit erste Telegramme mit einer ersten Kennung und zweite Telegramme mit einer zweiten Kennung, die einen identischen Nutzdatenblock aufweisen. Die in der Vermittlungseinrichtung des ersten Verteilers festgelegte erste Vermittlungsregelung leitet dann von der ersten Master-Einheit empfangene erste Telegramme zur ersten Sende-/Empfangseinrichtung und von der ersten Master-Einheit empfangene zweite Telegramme zur zweiten Sende-/Empfangseinrichtung weiter. Weiterhin leitet die in der Vermittlungseinrichtung des ersten Verteilers festgelegte erste Vermittlungsregelung von der ersten Sende-/Empfangseinrichtung empfangene zweite Telegramme und von der zweiten Sende-/Empfangseinrichtung empfangene erste Telegramme zur ersten Master-Einheit weiter.

Ferner leitet die in der Vermittlungseinrichtung des zweiten Verteilers festgelegte zweite Vermittlungsregelung von der zweiten Sende-/Empfangseinrichtung empfangene zweite Telegramme zur ersten Sende-/Empfangseinrichtung weiter. Außerdem leitet die in der Vermittlungseinrichtung des zweiten Verteilers festgelegte zweite Vermittlungsregelung von der ersten Sende-/Empfangseinrichtung empfangene erste Telegramme zur zweiten Sende-/Empfangseinrichtung weiter.

In dem zweiten Betriebsmodus erzeugt die Steuereinrichtung der zweiten Master-Einheit dritte Telegramme mit einer dritten Kennung und vierte Telegramme mit einer vierten Kennung, die einen identischen Nutzdatenblock aufweisen. Die in der Vermittlungseinrichtung des zweiten Verteilers festgelegte zweite Vermittlungsregelung leitet von der zweiten Master-Einheit empfangene dritte Telegramme zur zweiten Sende-/Empfangseinrichtung und von der zweiten Master-Einheit empfangene vierte Telegramme zur ersten Sende-/Empfangseinrichtung weiter. Weiterhin leitet die in der Vermittlungseinrichtung des zweiten Verteilers festgelegte zweite Vermittlungsregelung von der ersten Sende-/Empfangseinrichtung empfangene dritte Telegramme und von der zweiten Sende-/Empfangseinrichtung empfangene vierte Telegramme zur zweiten Master-Einheit weiter. Ferner leitet die in der Vermittlungseinrichtung des ersten Verteilers festgelegte erste Vermittlungsregelung von der zweiten Sende-/Empfangseinrichtung empfangene dritte Telegramme zur ersten Sende-/Empfangseinrichtung weiter. Außerdem leitet die in der Vermittlungseinrichtung des ersten Verteilers festgelegte erste Vermittlungsregelung von der ersten Sende-/Empfangseinrichtung empfangene vierte Telegramme zur zweiten Sende-/Empfangseinrichtung weiter.

Mit der Doppelringtopologie kann bei Auftreten eines Streckenfehlers auf dem einen Kommunikationspfad auf die Telegramübertragung auf den anderen Kommunikationspfad umgeschaltet werden, wobei die beiden zusätzlich im Master-Slave-Automatisierungssystem vorgesehenen Verteiler bzw. deren vorgespeicherten Vermittlungsregelungen bewirken, dass Telegramme auf beiden Kommunikationspfaden auch beim Umschalten zwischen den zwei Master-Einheiten den Telegrammübertragungsweg korrekt umlaufen. Dadurch, dass die Master-Einheiten immer zwei Telegramme mit einem identischen Nutzdatenblock umlaufen lassen, wird zuverlässig dafür gesorgt, dass auch beim Ausfall eines Kommunikationspfades im Datenbus immer ein Telegramm alle Slave-Einheiten am Datenbus durchläuft und dabei von den Verarbeitungseinheiten in den Slave-Einheiten interpretiert und verarbeitet wird. Die Master-Einheit erhält also wenigstens ein vollständig von allen Slave-Einheiten am Datenbus verarbeitetes Telegramm zurück. Im Fall, dass beide Telegramme vollständig von allen Slave-Einheiten am Datenbus verarbeitet worden sind, kann die Master-Einheit eines der beiden Telegramme verwerfen.

Um auch bei Auftreten von Streckenfehlern auf nur einem Kommunikationspfad in der Doppelringtopologie eine automatische Neukonfiguration der Telegrammübertragungswege vorzunehmen, weisen die Slave-Einheiten jeweils weiter eine Kopplungseinrichtung auf, die ausgelegt ist, beim Auftreten eines Datenübertragungsfehlers zu dem mit der ersten Sende-/Empfangseinrichtung verbundenen Teilnehmer den ersten Kommunikationspfad und den zweiten Kommunikationspfad in der ersten Sende-/Empfangseinrichtung kurzzuschließen und beim Auftreten eines Datenübertragungsfehlers zu dem mit der zweiten Sende-/Empfangseinrichtung verbundenen Teilnehmer den ersten Kommunikationspfad und den zweiten Kommunikationspfad in der zweiten Sende-/Empfangseinrichtung kurzzuschließen.

In dem ersten Betriebsmodus leitet die in der Vermittlungseinrichtung festgelegte erste Vermittlungsregelung von der ersten Sende-/Empfangseinrichtung empfangene erste Telegramme und von der zweiten Sende-/Empfangseinrichtung empfangene zweite Telegramme zur ersten Master-Einheit weiter. Ferner leitet die in der Vermittlungseinrichtung des zweiten Verteilers festgelegte zweite Vermittlungsregelung von der ersten Sende-/Empfangseinrichtung empfangene zweite Telegramme zur zweiten Sende-/Empfangseinrichtung weiter.

In dem zweiten Betriebsmodus leitet die in der Vermittlungseinrichtung des ersten Verteilers festgelegte erste Vermittlungsregelung von der ersten Sende-/Empfangseinrichtung empfangene dritte Telegramme zur zweiten Sende-/Empfangseinrichtung weiter. Ferner leitet die in der Vermittlungseinrichtung des zweiten Verteilers festgelegte zweite Vermittlungsregelung von der zweiten Sende-/Empfangseinrichtung empfangene dritte Telegramme und von der zweiten Sende-/Empfangseinrichtung empfangene vierte Telegramme zur zweiten Master-Einheit weiter.

Mit dieser Auslegung des Master-Slave-Automatisierungssystems wird bei einem Streckenfehler auf einem Kommunikationspfad in der Doppelringtopologie eine automatische Neukonfiguration der Telegrammübertragungswege vorgenommen. Das Verhalten der Teilnehmer am Automatisierungssystem unterscheidet sich im Neukonfigurationsfall nicht vom Verhalten im Normalbetrieb. Die automatische Neukonfiguration durch die beiden zusätzlich im Master-Slave-Automatisierungssystem vorgesehenen Verteiler bzw. deren vorgespeicherte Vermittlungsregelungen sorgt für eine hohe Dynamik beim Umschaltvorgang und ermöglicht damit das Einhalten von Echtzeitanforderungen im Automatisierungssystem.

Die Kopplungseinrichtung in der Slave-Einheit ist so ausgelegt, dass alle Telegramme sowohl im Normalbetreib als auch im Kurzschlussbetrieb, dann wenn die Kopplungseinrichtung beim Auftreten eines Datenübertragungsfehlers zu dem mit der ersten beziehungsweise zweiten Sende-/Empfangseinrichtung verbundenen Teilnehmer den ersten Kommunikationspfad und den zweiten Kommunikationspfad in der jeweiligen Sende-/Empfangseinrichtung kurzschließt, immer die Verarbeitungseinheit der Slave-Einheit von den Telegrammen einmal durchlaufen wird. Es ist so gewährleistet, dass die Telegramme von der Verarbeitungseinheit der Slave-Einheit interpretiert und verarbeitet werden können.

Die Steuereinrichtung der ersten beziehungsweise zweiten Master-Einheit kann in den beiden Telegrammen mit einem identischen Nutzdatenblock zusätzlich ein auf einen vorgegebenen Wert gesetztes Zählerfeld aufweisen. Die Verarbeitungseinheit jeder Slave-Einheit verändert dann beim Durchlauf des Telegramms den Wert des Zählerfeldes um einen vorgegebenen Wert. Die Steuereinrichtung der ersten beziehungsweise zweiten Master-Einheit wertet dann den Wert der Zählerfelder der beiden auf dem Datenbus umgelaufenen Telegramme aus, um festzustellen, ob alle an den Datenbus angeschlossenen Slave-Einheiten das jeweilige Telegramm verarbeitet haben. Durch Korrelieren der Werte in den Zählerfeldern der beiden empfangenen Telegramme kann auch festgestellt werden, zwischen welchen Slave-Einheiten ein Streckenfehler im Kommunikationspfad des Datenbusses aufgetreten ist bzw. ob oder wo eine Slave-Einheit komplett ausgefallen ist.

Bevorzugt erfolgt die Auswertung der Zählerfelder der beiden auf dem ersten und zweiten Kommunikationspfad empfangenen umlaufenden Telegramme durch Aufaddieren der Zählerfeldwerte. Der Gesamtwert gibt dann an, ob alle angeschlossenen Slave-Einheiten aktiv sind, da deren Anzahl sich direkt im Summenwert widerspiegelt.

Die Fehlertoleranz des Master-Slave-Automatisierungssystems wird weiter verbessert, wenn im Lesebetrieb, d. h. dann, wenn die Slave-Einheiten Daten zur Master-Einheit übertragen sollen, die beiden Telegramme mit dem identischen Nutzdatenblock gegenläufig auf dem ersten und dem zweiten Kommunikationspfad umlaufen, wobei die Slave-Einheiten beim Durchlauf des jeweiligen Telegramms Daten in den Nutzdatenblock einschreiben. Die Steuereinrichtung der Master-Einheit verodert dann die Nutzdatenblocks der beiden auf dem ersten Kommunikationspfad und dem zweiten Kommunikationspfad umgelaufenen Telegramme.

Mit dieser Vorgehensweise wird im Master-Slave-Automatisierungssystem auf einfache Weise, insbesondere auch im Neukonfigurationsfall, dann, wenn die Telegramm-Übertragungswege aufgrund eines Streckenfehlers durch Kurzschließen des ersten Kommunikationspfads und des zweiten Kommunikationspfads in Slave-Einheiten verändert werden und einzelne Teilnehmer auf Fehlerbetrieb umgeschaltet haben, ein zuverlässiger Lesebetrieb gewährleistet. Durch das Verodern der Nutzdatenblocks der beiden empfangenen Telegramme wird ein kombinierter Nutzdatenblock erzeugt, in dem unbesehen davon, wie die Telegramme über den ersten und den zweiten Kommunikationspfad zur Master-Einheit rückgekoppelt werden, alle von den Slave-Einheiten zu übermittelnden Daten enthalten sind.

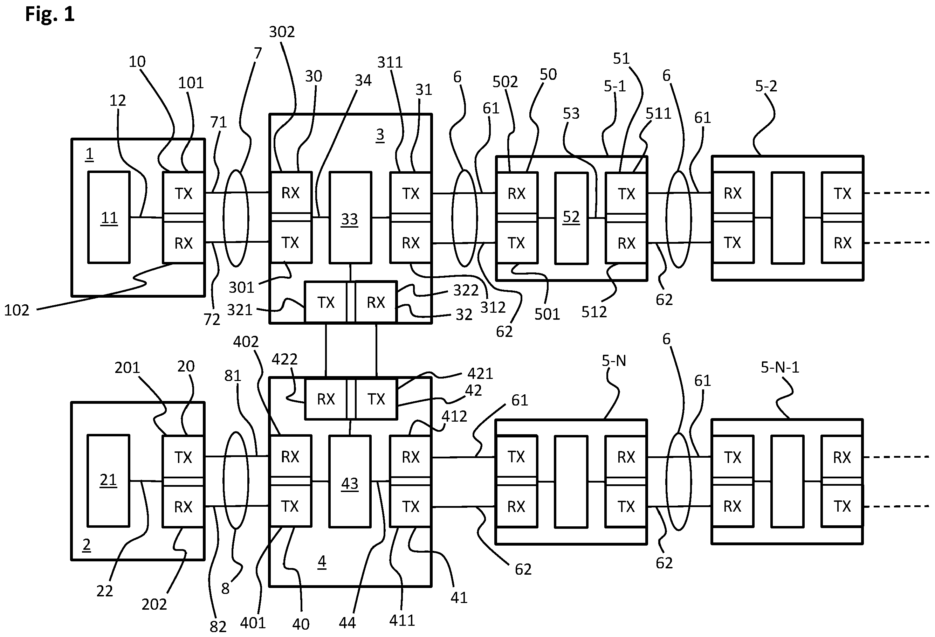

Fig. 1 zeigt schematisch den möglichen Aufbau eines fehlertoleranten Master-Slave-Automatisierungssystems mit einer Doppelringausführung des Datenbusses. Das Master-Slave-Automatisierungssystem weist eine erste Master-Einheit 1, im Weiteren auch als Haupt-Master-Einheit bezeichnet, und eine zweite Master-Einheit 2, im Weiteren auch als Ersatz-Master-Einheit bezeichnet, einen ersten Verteiler 3, einen zweiten Verteiler 4 und eine Mehrzahl von N Slave-Einheiten 5, die als Slave-Einheiten 5-1, 5-2, ..., 5-N-1, 5-N nummeriert sind.

Die Haupt-Master-Einheit 1 und die Ersatz-Master-Einheit 2 besitzen den gleichen Aufbau. Die Haupt-Master-Einheit 1 weist eine Sende-/Empfangseinrichtung 10, im Weiteren auch als Port_P0 bezeichnet, auf, der eine Sendeeinheit TX 101 und eine Empfangseinheit RX 102 umfasst. Ferner enthält die Master-Einheit 1 eine Steuereinrichtung 11, die über eine Datenverbindung 12 an den Port_P0 10 angeschlossen ist. Die Ersatz-Master-Einheit 2 weist eine Sende-/Empfangseinrichtung 20, im Weiteren auch als Port_P0 bezeichnet, auf, der eine Sendeeinheit TX 201 und eine Empfangseinheit RX 202 umfasst. Weiterhin enthält die Ersatz-Master-Einheit 2 eine Steuereinrichtung 21, die über eine Datenverbindung 22 an den Port_P0 20 angeschlossen ist.

Der erste Verteiler 3 und der zweite Verteiler 4 sind auch gleich aufgebaut. Der erste Verteiler 3 weist eine Master-Sende-/Empfangseinrichtung 30, im Weiteren auch als Port_P0 bezeichnet, der eine Sendeeinheit TX 301 und eine Empfangseinheit RX 302 umfasst, eine erste Sende-/Empfangseinrichtung 31, im Weiteren auch als Port_P1 bezeichnet, der eine Sendeeinheit TX 311 und eine Empfangseinheit RX 312 umfasst, und eine zweite Sende-/Empfangseinrichtung 32, im Weiteren auch als Port_P2 bezeichnet, der eine Sendeeinheit TX 321 und eine Empfangseinheit RX 322 umfasst, auf. Ferner ist eine Vermittlungseinrichtung 33 vorgesehen, die über eine interne Datenverbindung 34 an den Port_P0 30, den Port_P1 31 und den Port_P2 32 angeschlossen ist. Der zweite Verteiler 4 weist eine Master-Sende-/Empfangseinrichtung 40, im Weiteren auch als Port_P0 bezeichnet, der eine Sendeeinheit TX 401 und eine Empfangseinheit RX 402 umfasst, eine erste Sende-/Empfangseinrichtung 41, im Weiteren auch als Port_P1 bezeichnet, der eine Sendeeinheit TX 411 und eine Empfangseinheit RX 412 umfasst, und eine zweite Sende-/Empfangseinrichtung 42, im Weiteren auch als Port_P2 bezeichnet, der eine Sendeeinheit TX 421 und eine Empfangseinheit RX 422 umfasst, auf. Weiterhin ist eine Vermittlungseinrichtung 43 vorgesehen, die über eine interne Datenverbindung 44 an den Port_P0 40, den Port_P1 41 und den Port_P2 42 angeschlossen ist.

Das Master-Slave-Automatisierungssystem besitzt weiter einen Slave-Datenbus 6 mit zwei unidirektionalen Kommunikationspfaden, die als erster Kommunikationspfad 61 und zweiter Kommunikationspfad 62 bezeichnet sind. Der Slave-Datenbus 6 verbindet den ersten Verteiler 3, die Slave-Einheiten 5-1, 5-2, ..., 5-N-1, 5-N und den zweiten Verteiler 4 seriell miteinander.

Der erste Verteiler 3 ist über die Sendeeinheit TX 311 des Port_P1 31 an den ersten Kommunikationspfad 61 als Telegramm-Auskoppelstelle und über die Empfangseinheit RX 312 des Port_P1 31 an den zweiten Kommunikationspfad 62 als Telegramm-Einkoppelstelle angeschlossen. Ferner ist der zweite Verteiler 4 über die Sendeeinheit TX 411 des Port_P1 41 an den zweiten Kommunikationspfad 62 als Telegramm-Auskoppelstelle und über die Empfangseinheit RX 412 des Port_P1 41 an den ersten Kommunikationspfad 61 als Telegramm-Einkoppelstelle angeschlossen.

Die Sendeeinheit TX 321 des Port_P2 32 des ersten Verteilers 3 ist über den zweiten Kommunikationspfad 62 mit der Empfangseinheit RX 422 des Port_P2 42 des zweiten Verteilers 4 verbunden. Ferner ist die Empfangseinheit RX 322 des Port_P2 32 des ersten Verteilers 3 über den ersten Kommunikationspfad 61 mit der Sendeeinheit TX 421 des Port_P2 42 des zweiten Verteilers 4 verbunden.

Der Port_P0 10 der Haupt-Master-Einheit 1 ist über einen Haupt-Datenbus 7 an den Port_P0 30 des ersten Verteilers 1 angeschlossen. Dabei ist die Sendeeinheit TX 101 des Port_P0 10 der Haupt-Master-Einheit 1 über einen ersten unidirektionalen Kommunikationspfad 71 mit der Empfangseinheit RX 302 des Port_P0 30 des ersten Verteilers 3 verbunden. Ferner ist die Empfangseinheit RX 102 des Port_P0 10 der Haupt-Master-Einheit 1 über einen zweiten unidirektionalen Kommunikationspfad 72 mit der Sendeeinheit TX 301 des Port_P0 30 des ersten Verteilers 3 verbunden.

Der Port_P0 20 der Ersatz-Master-Einheit 2 ist über einen Ersatz-Datenbus 8 an den Port_P0 40 des zweiten Verteilers 4 angeschlossen. Dabei ist die Sendeeinheit TX 201 des Port_P0 20 der Ersatz-Master-Einheit 2 über einen ersten unidirektionalen Kommunikationspfad 81 mit der Empfangseinheit RX 402 des Port_P0 40 des zweiten Verteilers 4 verbunden. Ferner ist die Empfangseinheit RX 202 des Port_P0 20 der Ersatz-Master-Einheit 2 über einen zweiten unidirektionalen Kommunikationspfad 82 mit der Sendeeinheit TX 401 des Port_P0 40 des zweiten Verteilers 4 verbunden.

Der Haupt-Datenbus 7 und der Ersatz-Datenbus 8 können dabei jeweils als Abzweigung des Slave-Datenbusses 6 ausgeführt sein, der ringförmig den ersten Verteiler 3 nacheinander mit den Slave-Einheiten 5-1, 5-2, ..., 5-N-1, 5-N und dem zweiten Verteiler 4 und dann wieder mit dem ersten Verteiler 3 verbindet, wobei die zwei unidirektionalen Kommunikationspfade 61, 62 gegenläufig betrieben werden. Grundsätzlich besteht jedoch die Möglichkeit, auch zwischen dem ersten Verteiler 3 und dem zweiten Verteiler 4 im Slave-Datenbus Slave-Einheiten anzuordnen.

Alle Slave-Einheiten 5-1, 5-2, ..., 5-N-1, 5-N besitzen den gleichen Aufbau. Exemplarisch wird die Struktur einer Slave-Einheit 5 erläutert. Die Slave-Einheit 5 weist von der Haupt-Master-Einheit 1 aus betrachtet zum Anschluss an einen vorherigen Teilnehmer eine erste Sende-/Empfangseinrichtung 50, im Weiteren auch als Port_P1 bezeichnet, zum Anschluss an den nächsten Teilnehmer eine zweite Sende-/Empfangseinrichtung 51, im Weiteren auch als Port_P2 bezeichnet, auf. Der Port_P1 50 umfasst eine Sendeeinheit TX 501 und eine Empfangseinheit RX 502, wobei die Sendeeinheit TX 501 des Port_P1 50 mit dem zweiten Kommunikationspfad 62 und die Empfangseinheit RX 502 des Port_P1 50 mit dem ersten Kommunikationspfad 61 verbunden ist. Der Port_P2 51 umfasst eine Sendeeinheit TX 511 und eine Empfangseinheit RX 512, wobei die Sendeeinheit TX 511 des Port_P1 51 mit dem ersten Kommunikationspfad 61 und die Empfangseinheit RX512 des Port_P1 51 mit dem zweiten Kommunikationspfad 62 verbunden ist. Zwischen dem Port_P1 50 und dem Port_P2 51 ist eine Verarbeitungseinrichtung 52 geschaltet, die über eine interne Datenverbindung 53 an den Port_P1 50 und den Port_P2 51 angeschlossen ist.

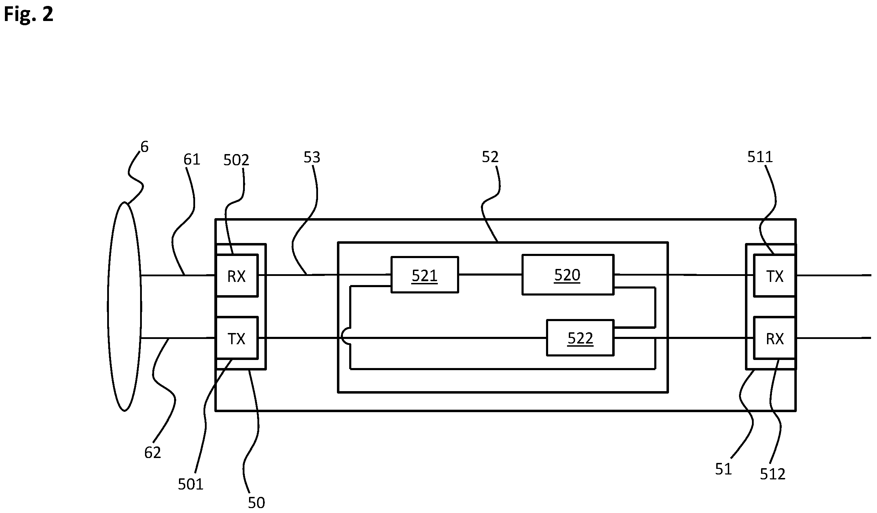

Eine mögliche Ausgestaltung einer Slave-Einheit 5 ist in Figur 2 dargestellt. Die Verarbeitungseinrichtung 52 umfasst einen Telegramm-Verarbeitungseinheit 520 und eine Kopplungseinrichtung 521, die einen ersten Umschalter 5211 und einen zweiten Umschalter 5212 umfasst, auf. Der erste Umschalter 5211 und der zweite Umschalter 5212 sind jeweils als 2-1 Multiplexer ausgelegt.

Die Sendeeinheit TX 501 und die Empfangseinheit RX 502 des Port_P1 50, die Sendeeinheit TX 511 und die Empfangseinheit RX 512 des Port_P2 51, der erste Umschalter 5211, der zweite Umschalter 5212 und die Telegramm-Verarbeitungseinheit 520 sind über die internen Datenverbindung 53 miteinander verschaltet. Die Empfangseinheit RX 502 des Port_P1 50 ist dabei über eine Datenleitung der internen Datenverbindung 53 mit dem ersten Eingang des ersten Umschalters 5211 verbunden. Der zweite Eingang des ersten Umschalters 5211 ist an die Empfangseinheit RX 512 des Port_P2 51 über eine Datenleitung der internen Datenverbindung 53 angeschlossen. Der Ausgang des ersten Umschalters 5211 ist über eine Datenleitung der internen Datenverbindung 53 mit der Telegramm-Verarbeitungseinheit 520 verbunden.

Der zweite Umschalter 5212 ist über eine Datenleitung der internen Datenverbindung 53 mit seinem ersten Eingang an die Telegramm-Verarbeitungseinheit 520 und über eine Datenleitung der internen Datenverbindung 53 mit seinem zweiten Eingang an die Empfangseinheit RX 512 des Port_P2 51 angeschlossen. Der Ausgang des zweiten Umschalters 5212 ist mit der Sendeeinheit TX 501 des Port_P1 50 verbunden. Ferner ist die Telegramm-Verarbeitungseinheit 520 über eine Datenleitung der internen Datenverbindung 53 mit der Sendeeinheit TX 511 des Port_P2 51 verbunden.

Mit dieser Auslegung der Slave-Einheit 5 kann bei Auftreten von Streckenfehlern zu benachbarten Teilnehmern in einem oder in beiden Kommunikationspfaden in Echtzeit eine Neukonfiguration der Telegramm-Übertragungswege vorgenommen werden, um so trotz des Streckenfehlers einen störungsfreien Betrieb zu gewährleisten. Die in Fig. 2 gezeigte Ausführung der Slave-Einheit 5 hat dabei den Vorteil, dass in jeder Slave-Einheit nur eine einzelne Telegramm-Verarbeitungseinheit in der Verarbeitungseinrichtung vorgesehen sein muss, die unbesehen davon, ob die Kopplungseinrichtung mit den Umschaltern in der Slave-Einheit sich im Normalbetrieb oder im Störbetrieb, bei dem ein Kurzschluss vom ersten Kommunikationspfad und dem zweiten Kommunikationspfad erfolgt, befindet, immer von wenigstens einem der beiden Telegramme mit einem identischen Nutzdatenblock, die gegenläufig auf dem ersten Kommunikationspfad beziehungsweise dem zweiten Kommunikationspfad des Datenbusses umlaufen, durchlaufen wird. So lassen sich der Hardware-Aufwand und damit die Kosten reduzieren. Darüber hinaus unterscheidet sich das Verhalten der Slave-Einheit 5 im Redundanzfall, also bei Auftreten eines Streckenfehlers, nicht vom Verhalten im Normalbetrieb. Dies sorgt gleichzeitig für eine hohe Dynamik beim Umschaltvorgang.

Die Steuereinrichtung 11 der Haupt-Master-Einheit 1 und die Ersatz-Master-Einheit 2 besitzen den gleichen Aufbau. Die Haupt-Master-Einheit 1 weist eine Sende-/Empfangseinrichtung 10, im Weiteren auch als Port_P0 bezeichnet, auf, der eine Sendeeinheit TX 101 und eine Empfangseinheit RX 102 umfasst. Ferner enthält die Master-Einheit 1 eine Steuereinrichtung 11, die über eine Datenverbindung 12 an den Port_P0 10 angeschlossen ist. Die Ersatz-Master-Einheit 2 weist eine Sende-/Empfangseinrichtung 20, im Weiteren auch als Port_P0 bezeichnet, auf, der eine Sendeeinheit TX 201 und eine Empfangseinheit RX 202 umfasst. Weiterhin enthält die Ersatz-Master-Einheit 2 eine Steuereinrichtung 21, die über eine Datenverbindung 22 an den Port_P0 20 angeschlossen ist.

Das in Fig. 1 gezeigte Master-Slave-Automatisierungssystem wird in einem ersten Betriebsmodus, der den Standard-Betriebsmodus darstellt, von der Haupt-Master-Einheit 1 gesteuert. In einem zweiten Betriebsmodus, der als Ersatz-Betriebsmodus dient, wird die Steuerung von der Ersatz-Master-Einheit 2 übernommen.

Im Rahmen des Steuerungsvorgangs erzeugt die Steuereinrichtung der jeweiligen Master-Einheit, im Standard-Betriebsmodus die Steuereinrichtung 11 der Haupt-Master-Einheit 1 und im Ersatz-Betriebsmodus die Steuereinrichtung 21 der Ersatz-Master-Einheit 2 Telegramme mit einer Kennung, die zur Identifizierung der jeweiligen Master-Einheit dient. Die Master-Einheit kann dabei alle von der Master-Einheit erzeugten Telegramme mit derselben Kennung versehen.

Im Falle einer Doppelringstruktur des Datenbusses, wie sie in Fig. 1 gezeigt ist, erzeugt die Steuereinrichtung der jeweils den Telegrammverkehr steuernden Master-Einheit aber immer zwei Telegramme mit demselben Nutzdatenblock, wobei die beiden Telegramme unterschiedliche Kennungen aufweisen, die jedoch jeweils einzeln für sich die Telegramme erzeugende Master-Einheit kennzeichnen. Die Telegramm-Kennung ist dabei vorzugsweise im Header des Telegramms eingetragen. Bei einem Ethernet-Telegramm kann zur Kennungseintragung das Tag-Feld für zusätzliche Steuerdaten genutzt werden. Die Telegramm-Kennung kann auch in der Quelladresse des Ethernet-Telegramms enthalten sein.

Zur Steuerung der Telegramm-Durchleitung weisen die Vermittlungseinrichtung 33 des ersten Verteilers 3 bzw. die Vermittlungseinrichtung 43 des zweiten Verteilers 4 eine erste bzw. zweite Vermittlungsregelung, im Weiteren auch als Transfer-Tabelle bezeichnet, auf. In der Transfer-Tabelle sind die von der Haupt-Master-Einheit 1 bzw. der Ersatz-Master-Einheit 2 vergebenen Telegramm-Kennungen gegebenenfalls auch mehrfach gelistet, wobei jeder gelisteten Telegramm-Kennung zwei Port-Kennungen zugeordnet sind, nämlich der Port des Verteilers, auf dem Telegramme mit der Telegramm-Kennung empfangen werden, im Weiteren auch als Empfangsport bezeichnet, und der Port des Verteilers, auf dem die Telegramme weiter gesendet werden, im Weiteren auch als Sendeport bezeichnet.

Beim Empfang eines Telegramms über die Empfangseinheit RX eines Ports erfasst die Vermittlungseinrichtung des jeweiligen Verteilers die Telegramm-Kennung und leitet das Telegramm anschließend an die Sendeeinheit TX des Ports weiter, der in der Transfer-Tabelle für die Telegramm-Kennung und den Empfangsport als Sendeports vermerkt ist.

Die Transfer-Tabelle kann in einem Speicher der Vermittlungseinrichtung des Verteilers abgelegt sein. Die Transfer-Tabelle kann dabei beim Hochfahren des Automatisierungssystems beispielsweise von der dem Verteiler zugeordneten Master-Einheit in den Speicher der Vermittlungseinrichtung des Verteilers geladen werden. Es besteht auch die Möglichkeit, die Transfer-Tabelle direkt in den Verteiler, beispielsweise über eine von außen zugängliche Schnittstelle, einzuprogrammieren.

Im Folgenden wird davon ausgegangen, dass die Steuereinrichtung 11 der Haupt-Master-Einheit 1 erste Telegramme mit einer ersten Kennung 1 und zweite Telegramme mit einer zweiten Kennung 2, die einen identischen Nutzdatenblock enthalten, erzeugt. Ferner wird angenommen, dass die Steuereinrichtung 21 der Ersatz-Master-Einheit 2 dritte Telegramme mit einer dritten Kennung 3 und vierte Telegramme mit einer vierten Kennung 4, die einen identischen Nutzdatenblock aufweisen, bereitstellt.

Nachstehend sind die Transfer-Tabellen des ersten Verteilers 3 und des zweiten Verteilers 4 festgehalten, auf deren Grundlage die Telegramm-Durchleitung in dem in Fig. 1 gezeigten Master-Slave-Automatisierungssystem im ersten Verteiler 3 beziehungsweise im zweiten Verteiler 4 gesteuert wird.

| Transfer-Tabelle des ersten Verteilers 3 | | |
|---|---|---|
| Telegramm-Kennung | Empfangsport | Sendeport |
| 1 | P0 | P1 |
| 1 | P2 | P0 |
| 1 | P1 | P0, P2 |
| 2 | P0 | P2 |
| 2 | P1 | P0 |
| 2 | P2 | P0 |
| 3 | P2 | P0, P1 |
| 3 | P1 | P0, P2 |
| 4 | P1 | P0, P2 |
| 4 | P2 | P0 |

| Transfer-Tabelle des zweiten Verteilers 4 | | |
|---|---|---|
| Telegramm-Kennung | Empfangsport | Sendeport |
| 1 | P1 | P0, P2 |
| 1 | P2 | P0 |
| 2 | P2 | P0, P1 |
| 2 | P1 | P0, P2 |
| 3 | P0 | P2 |
| 3 | P1 | P0 |
| 3 | P2 | P1 |
| 4 | P0 | P1 |
| 4 | P2 | P0 |
| 4 | P1 | P0, P2 |

Das Routing mit Hilfe der vorstehenden Transfer-Tabellen des ersten Verteilers 3 beziehungsweise des zweiten Verteilers 4 sorgen automatisch und unabhängig davon, ob das Master-Slave-Automatisierungssystem im Standard-Betriebsmodus von der Haupt-Master-Einheit 1 oder im Ersatz-Betriebsmodus von der Ersatz-Master-Einheit 2 betreiben wird, für eine korrekte Telegramm-Weiterleitung im Master-Slave-Automatisierungssystem. Dies gilt auch bei Auftreten eines Streckenfehlers, also dann, wenn Slave-Einheiten den ersten Kommunikationspfad 61 und den zweiten Kommunikationspfad 62 des Slave-Datenbusses 6 auf Grund einer Unterbrechung im Slave-Datenbus 6 kurzschließen.

Im Folgenden werden die Telegramm-Übertragungen im Master-Slave-Automatisierungssystem gemäß Fig. 1 getrennt für den Standard-Betriebsmodus und den Ersatz-Betriebsmodus erläutert, wobei zusätzlich sowohl für den Standard-Betriebsmodus als auch den Ersatz-Betriebsmodus das Auftreten eines Streckenfehlers berücksichtigt wird.

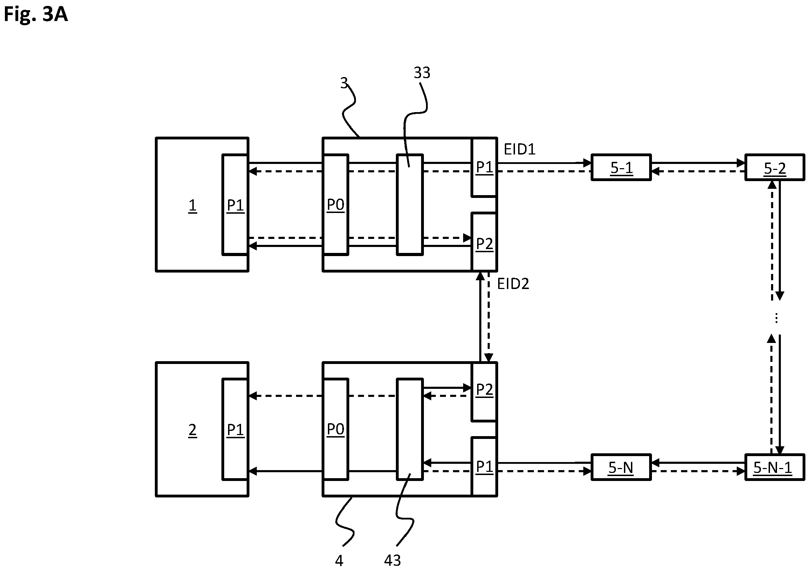

Fig. 3A zeigt den Standard-Betriebsmodus im Master-Slave-Automatisierungssystem gemäß Fig. 1, wobei die Telegramm-Übertragungsrichtung in den Kommunikationspfaden durch Pfeile angezeigt ist. Als durchgezogenen Linie in Fig. 3A ist der Übertragungsweg für die von der Haupt-Master-Einheit 1 versandten ersten Telegramme mit der Kennung 1 dargestellt. Der Übertragungsweg für die von der Haupt-Master-Einheit 1 versandten zweiten Telegramme mit der Kennung 2 ist als punktierte Linie in Fig. 3A eingetragen.

Im Standard-Betriebsmodus des Master-Slave-Automatisierungssystem wird das von der Steuereinrichtung 11 der Haupt-Master-Einheit 1 erzeugte erste Telegramm mit der Kennung 1 und das von der Steuereinrichtung 11 der Haupt-Master-Einheit 1 erzeugte zweite Telegramm mit der Kennung 2, die einen identischen Nutzdatenblock aufweisen, über den Port_P0 10 auf dem Haupt-Datenbus 7 zum Port_P0 30 des ersten Verteilers 3 übertragen.

Das erste Telegramm mit der Kennung 1 und das zweite Telegramm mit der Kennung 2 können dabei seriell nacheinander über die Sendeeinheit TX 101 übertragen werden. Alternativ besteht auch die Möglichkeit, eine parallele Übertragung auszuführen, wenn die Sendeeinheit TX 101 des Port_P0 10 der Haupt-Master-Einheit 1 beziehungsweise die Empfangseinheit RX 302 des Port_P0 30 des ersten Verteilers 3 jeweils zwei eigenständige Bausteine aufweisen.

Nachfolgend wird der Umlauf des ersten Telegramms mit der Kennung 1 ausgehend vom ersten Verteiler 3 erläutert:
Nach dem Empfang über Port_P0 30 wird das erste Telegramm mit der Kennung 1 im ersten Verteiler 3 über die interne Datenverbindung 34 zur Vermittlungseinrichtung 33 weitergeleitet. Die Vermittlungseinrichtung 33 des ersten Verteilers 3 erfasst die Telegramm-Kennung und routet das Telegramm anhand der Transfer-Tabelle des ersten Verteilers 3. Zur Verdeutlichung ist nochmals der Ausschnitt der Transfer-Tabelle des ersten Verteilers 3 für die Durchleitung von ersten Telegrammen mit der Kennung 1 im Standard-Betriebsmodus wiedergegeben.

| Fig. 3A: Transfer-Tabelle des ersten Verteilers 3 im Standard-Betriebsmodus | | |
|---|---|---|
| Telegrammkennung | Empfangsport | Sendeport |
| 1 | P0 | P1 |
| 1 | P2 | P0 |

Die Vermittlungseinrichtung 33 des ersten Verteilers 3 leitet gemäß der Transfer-Tabelle das erste Telegramm mit der Kennung 1, das auf dem Port_P0 30 empfangen wurde, über die interne Datenverbindung 34 zum Port_P1 31 des ersten Verteilers 3 weiter, der das Telegramm auf dem ersten Kommunikationspfad 61 des Slave-Datenbusses 6 ausgibt.

Das erste Telegramm mit der Kennung 1 durchläuft nacheinander die am ersten Kommunikationspfad 61 angeordneten Slave-Einheiten 5-1 bis 5-N. Das erste Telegramm mit der Kennung 1 wird dabei jeweils vom Port_P1 50 der Slave-Einheit 5 empfangen und über die interne Datenverbindung 53 an die Verarbeitungseinrichtung 52 der Slave-Einheit 5 weitergeleitet. Die Telegramm-Verarbeitungseinheit 520 der Verarbeitungseinrichtung 52 interpretiert das durchlaufende erste Telegramm mit der Kennung 1 und führt einen Datenaustausch mit dem Nutzdatenblock des Telegramms durch. Nach der Verarbeitung wird das erste Telegramm mit der Kennung 1 dann über die interne Datenverbindung 53 dem Port_P2 51 der Slave-Einheit 5 übergeben, der das Telegramm auf dem ersten Kommunikationspfad 61 weiter verschickt.

In Telegramm-Übertragungsrichtung gesehen, die letzte Slave-Einheit 5-N am ersten Kommunikationspfad 61 des Slave-Datenbusses 6 überträgt nach der Verarbeitung des ersten Telegramms mit der Kennung 1 zum Port_P1 41 des zweiten Verteilers 4. Nach dem Empfang auf dem Port_P1 41 des zweiten Verteilers 4 wird das erste Telegramm mit der Kennung 1 im zweiten Verteiler 4 über die interne Datenverbindung 44 an die Vermittlungseinrichtung 43 weitergeleitet, die das Telegramm auf der Grundlage der im zweiten Verteiler 4 abgespeicherten Transfer-Tabelle routet. Zur Verdeutlichung ist nochmals der Ausschnitt der Transfer-Tabelle des zweiten Verteilers 4 für die Durchleitung von ersten Telegrammen mit der Kennung 1 im Standard-Betriebsmodus wiedergegeben.

| Fig. 3A: Transfer-Tabelle des zweiten Verteilers 4 im Standard-Betriebsmodus | | |
|---|---|---|
| Telegrammkennung | Empfangsport | Sendeport |
| 1 | P1 | P0, P2 |

Das erste Telegramm mit der ersten Kennung 1, das von den Slave-Einheiten auf dem ersten Kommunikationspfad 61 verarbeitet wurde, wird von der Vermittlungseinrichtung 43 des zweiten Verteilers 4 über die interne Datenverbindung 44 zum Port_P2 42 geroutet, über den das erste Telegramm mit der Kennung 1 auf den ersten Kommunikationspfad 61 des Slave-Datenbusses 6 ausgegeben wird.

Zusätzlich leitet die Vermittlungseinrichtung 43 des zweiten Verteilers 4 das erste Telegramm mit der Kennung 1 über die interne Datenverbindung 44 an den Port_P0 40 weiter. Der Port_P0 40 des zweiten Verteilers 4 überträgt das erste Telegramm mit der Kennung 1 dann über den Ersatz-Datenbus 8 zum Port_P0 20 der Ersatz-Master-Einheit 2.

Das über den Port_P2 42 des zweiten Verteilers 4 ausgegebene erste Telegramm mit der Kennung 1 wird vom Port_P2 32 des ersten Verteilers 3 auf dem ersten Kommunikationspfad 61 des Slave-Datenbusses 6 empfangen und von der Vermittlungseinrichtung 33 des ersten Verteilers 3 entsprechend dem vorstehenden Ausschnitt der Transfer-Tabelle des ersten Verteilers 3 über die interne Datenverbindung 34 an den Port_P0 30 geroutet, der das erste Telegramm mit der Kennung 1 auf dem Haupt-Datenbus 7 zum Port_P0 10 der Haupt-Master-Einheit 1 überträgt.

Nachfolgend wird der Umlauf des zweiten Telegramms mit der Kennung 2 ausgehend vom ersten Verteiler 3 erläutert:
Nach dem Empfang über den Port_P0 30 wird das zweite Telegramm mit der Kennung 2 im ersten Verteiler 3 über die interne Datenverbindung 34 zur Vermittlungseinrichtung 33 weitergeleitet. Die Vermittlungseinrichtung 33 des ersten Verteilers 3 routet das Telegramm dann anhand der Transfer-Tabelle des ersten Verteilers 3, von der hier nochmals der Ausschnitt der Transfer-Tabelle des ersten Verteilers 3 für die Durchleitung von zweiten Telegrammen mit der Kennung 2 im Standard-Betriebsmodus wiedergegeben ist.

| Fig. 3A: Transfer-Tabelle des ersten Verteilers 3 im Standard-Betriebsmodus | | |
|---|---|---|
| Telegrammkennung | Empfangsport | Sendeport |
| 2 | P0 | P2 |
| 2 | P1 | P0 |

Wie der Transfer-Tabelle zu entnehmen ist, leitet die Vermittlungseinrichtung 33 des ersten Verteilers 3 nach Auswertung der Telegramm-Kennung das zweite Telegramm mit der Kennung 2 zum Port_P2 32 weiter, der das Telegramm auf den zweiten Kommunikationspfad 62 des Slave-Datenbusses 6 ausgibt.

Das zweite Telegramm mit der Kennung 2 wird dann vom zweiten Verteiler 4 auf dem Port_P2 42 empfangen und von der Vermittlungseinrichtung 43 des zweiten Verteilers 4 gemäß der Transfer-Tabelle geroutet. Nachstehend ist der Ausschnitt der Transfer-Tabelle des zweiten Verteilers 4 für die Durchleitung von zweiten Telegrammen mit der Kennung 2 im Standard-Betriebsmodus wiedergeben:

| Fig. 3A: Transfer-Tabelle des zweiten Verteilers 4 im Standard-Betriebsmodus | | |
|---|---|---|
| Telegramm-Kennung | Empfangsport | Sendeport |
| 2 | P2 | P0, P1 |

Das auf dem Port_P2 42 empfangene zweite Telegramm mit der Kennung 2 wird von der Vermittlungseinrichtung 43 des zweiten Verteilers 4 gemäß der Transfer-Tabelle über die interne Datenverbindung 34 sowohl zum Port_P0 40 als auch zum Port_P1 41 geroutet.

Der Port_P0 40 des zweiten Verteilers 4 überträgt das zweite Telegramm mit der Kennung 2 dann über den Ersatz-Datenbus 8 zum Port_P0 20 der Ersatz-Master-Einheit 2.

Vom Port_P1 41 des zweiten Verteilers 4 wird das zweite Telegramm mit der Kennung 2 auf den zweiten Kommunikationspfad 62 des Slave-Datenbusses 6 ausgegeben. Das zweite Telegramm mit der Kennung 2 durchläuft nacheinander die am zweiten Kommunikationspfad 62 angeordneten Slave-Einheiten 5-1 bis 5-N, wobei das zweite Telegramm mit der Kennung 2 gegenläufig zum ersten Telegramm mit der Kennung 1 auf ersten Kommunikationspfad 61 umläuft, also von der Slave-Einheit 5-N über die Slave-Einheit 5-N-1 bis zur Slave-Einheit 5-1 weitergeleitet wird.

Das zweite Telegramm mit der Kennung 2 wird dabei jeweils vom Port_P2 51 der Slave-Einheit 5 empfangen und über die interne Datenverbindung 53 an die Verarbeitungseinrichtung 52 der Slave-Einheit 5 weitergeleitet. Bei einer Ausführung der Slave-Einheit, wie sie in Fig. 2 gezeigt ist, wird im Standard-Betriebsmodus nur das erste Telegramm mit der Telegramm-Kennung 1, das auf dem ersten Kommunikationspfad 61 des Slave-Datenbusses 6 umläuft, von der Telegramm-Verarbeitungseinheit 520 in der Verarbeitungseinrichtung 52 der Slave-Einheit 5 verarbeitet. Das auf dem zweiten Kommunikationspfad 62 des Slave-Datenbusses 6 gegenläufig zum ersten Telegramm mit der Kennung 1 umlaufende zweite Telegramm mit der Kennung 2 wird dagegen von der Slave-Einheit 5 unverarbeitet durchgeleitet.

Hierzu sind im Standard-Betriebsmodus der erste Umschalter 5211 und der zweite Umschalter 5212 in der Kopplungseinrichtung 521 der Verarbeitungseinrichtung 52 so eingestellt, dass nur das auf dem ersten Kommunikationspfad 61 empfangene erste Telegramm mit der Kennung 1 über die Telegramm-Verarbeitungseinheit 520 der Verarbeitungseinrichtung 52 läuft, um verarbeitet zu werden. Das zweite Telegramm mit der zweiten Kennung 2 wird dagegen von dem ersten Umschalter 5211 und dem zweiten Umschalter 5212 in der Kopplungseinrichtung 521 auf der internen Datenverbindung 53 direkt vom Port_P2 51 zum Port_P1 50 übertragen.

In Telegramm-Übertragungsrichtung gesehen, die letzte Slave-Einheit 5-1 am zweiten Kommunikationspfad 62 des Slave-Datenbusses 6 überträgt das zweite Telegramm mit der Kennung 2 zum Port_P1 31 des ersten Verteilers 3. Das zweite Telegramm mit der Kennung 2 wird über die interne Datenverbindung 34 an die Vermittlungseinrichtung 33 des ersten Verteilers 3 weitergeleitet, die das Telegramm auf der Grundlage der im ersten Verteiler 3 abgespeicherten vorstehenden Transfer-Tabelle zum Port_P0 30 routet, von wo aus das zweite Telegramm mit der Kennung 2 auf dem Haupt-Datenbus 7 zum Port_P0 10 der Haupt-Master-Einheit 1 rückkoppelt wird.

Nach Abschluss des Umlaufes des ersten Telegramms mit der Kennung 1 und des zweiten Telegramms mit der Kennung 2 liegen sowohl in der Steuereinrichtung 11 der Haupt-Master-Einheit 1 als auch in der Steuereinrichtung 21 der Ersatz-Master-Einheit 2 beide Telegramme identisch vor. Im Standard-Betriebsmodus des Master-Slave-Automatisierungssystem wird dann von der Steuereinrichtung 11 der Haupt-Master-Einheit 1 das rückgekoppelte erste Telegramm mit der Kennung 1, mit dem allen Slave-Einheiten 5-1 bis 5-N einen Datenaustausch mit dem Nutzdatenblock des Telegramms ausgeführt haben, weiterverarbeitet.

Gleichzeitig erfolgt auch in der Steuereinrichtung 21 der Ersatz-Master-Einheit 2 eine Weiterverarbeitung des ersten Telegramms mit der Kennung 1. Die Ersatz-Master-Einheit 2 kann dann beim Umschalten von der Haupt-Master-Einheit 1 auf die Ersatz-Master-Einheit 2 beispielweise nach Ausfall der Haupt-Master-Einheit 1 ohne Verzögerung den Steuerungsvorgang im Master-Slave-Automatisierungssystem auf der Grundlage des aktuellen Status fortsetzen.

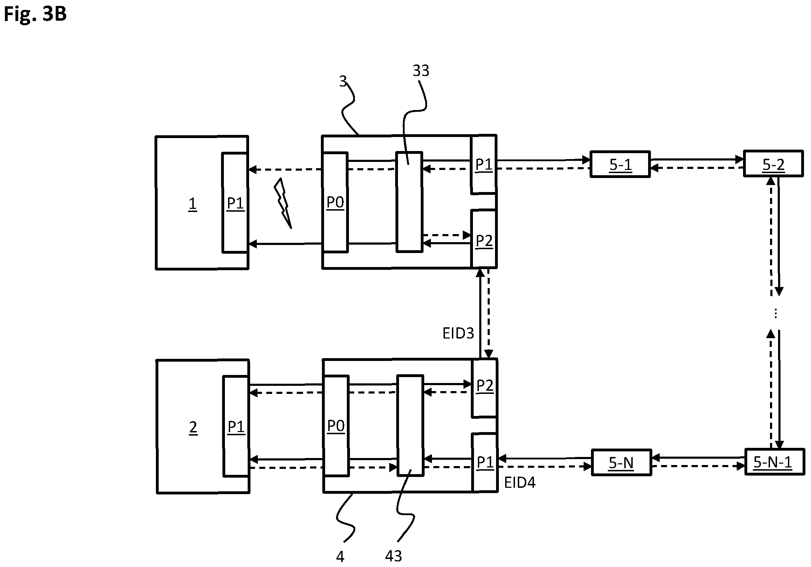

Fig. 3B zeigt den Ersatz-Betriebsmodus im Master-Slave-Automatisierungssystem gemäß Fig. 1 nach Ausfall der Haupt-Master-Einheit 1, bei dem die Ersatz-Master-Einheit 2 den Telegrammverkehr im Master-Slave-Automatisierungssystem steuert. Die durchgezogene Linie in Fig. 3B gibt den Übertragungsweg für die von der Ersatz-Master-Einheit 2 versandten dritten Telegramme mit der Kennung 3 wieder. Der Übertragungsweg für die von der Ersatz-Master-Einheit 2 versandten vierten Telegramme mit der Kennung 4 ist als punktierte Linie in Fig. 3B eingetragen.

Im Ersatz-Betriebsmodus des Master-Slave-Automatisierungssystem wird das von der Steuereinrichtung 21 der Ersatz-Master-Einheit 2 erzeugte dritte Telegramm mit der Kennung 3 und das von der Steuereinrichtung 21 der Ersatz-Master-Einheit 2 erzeugte vierte Telegramm mit der Kennung 4, die einen identischen Nutzdatenblock aufweisen, über den Port_P0 10 auf dem Ersatz-Datenbus 8 zum Port_P0 40 des zweiten Verteilers 4 übertragen.

Das dritte Telegramm mit der Kennung 3 und das vierte Telegramm mit der Kennung 4 können dabei seriell nacheinander von der Sendeeinheit TX 201 des Port_P0 20 der Ersatz-Master-Einheit 2 übertragen werden. Alternativ besteht auch die Möglichkeit, eine parallele Übertragung auszuführen, wenn die Sendeeinheit TX 201 des Port_P0 20 der Ersatz-Master-Einheit 2 beziehungsweise die Empfangseinheit RX 402 des Port_P0 40 des zweiten Verteilers 4 jeweils zwei eigenständige Bausteine aufweisen.

Nachfolgend wird der Umlauf des dritten Telegramms mit der Kennung 3 ausgehend vom zweiten Verteiler 4 erläutert:
Nach dem Empfang über Port_P0 40 wird das dritte Telegramm mit der Kennung 3 im zweiten Verteiler 4 über die interne Datenverbindung 44 zur Vermittlungseinrichtung 43 weitergeleitet. Die Vermittlungseinrichtung 43 des zweiten Verteilers 4 erfasst die Telegramm-Kennung und routet das Telegramm dann anhand der Transfer-Tabelle des zweiten Verteilers 4. Zur Verdeutlichung ist der Ausschnitt der Transfer-Tabelle des zweiten Verteilers 4 für die Durchleitung von dritten Telegrammen mit der Kennung 3 im Ersatz-Betriebsmodus wiedergegeben.

| Fig. 3B: Transfer-Tabelle des zweiten Verteilers 4 im Ersatz-Betriebsmodus | | |
|---|---|---|
| Telegrammkennung | Empfangsport | Sendeport |
| 3 | P0 | P2 |
| 3 | P1 | P0 |

Das auf dem Port_P0 30 des zweiten Verteilers 4 empfangene dritte Telegramm mit der Kennung 3 wird von der Vermittlungseinrichtung 43 des dritten Verteilers 4 gemäß der Transfer-Tabelle über die interne Datenverbindung 44 zum Port_P2 42 geroutet, der das Telegramm auf dem ersten Kommunikationspfad 61 des Slave-Datenbusses 6 zum Port_P2 32 des ersten Verteilers 3 überträgt.

Nach dem Empfang auf dem Port_P2 32 des ersten Verteilers 3 wird das dritte Telegramm mit der Kennung 3 im ersten Verteiler 3 über die interne Datenverbindung 34 an die Vermittlungseinrichtung 33 weitergeleitet, die das Telegramm auf der Grundlage der im ersten Verteiler 3 abgespeicherten Transfer-Tabelle routet. Nachstehend ist der Ausschnitt der Transfer-Tabelle des ersten Verteilers 3 für die Durchleitung von dritten Telegrammen mit der Kennung 3 im Ersatz-Betriebsmodus wiedergeben.

| Fig. 3B: Transfer-Tabelle des ersten Verteilers 3 im Ersatz-Betriebsmodus | | |
|---|---|---|
| Telegrammkennung | Empfangsport | Sendeport |
| 3 | P2 | P0, P1 |

Das auf dem Port_P2 32 empfangene dritte Telegramm mit der Kennung 3 wird von der Vermittlungseinrichtung 33 des ersten Verteilers 2 über die interne Datenverbindung 34 sowohl zum Port_P0 30 als auch zum Port_P1 31 weitergeleitet.

Der Port_P0 30 des ersten Verteilers 3 versucht das dritte Telegramm mit der Kennung 3 dann über den Haupt-Datenbus 7 zum Port_P0 10 der Haupt-Master-Einheit 1 zu übertragen. Da die Haupt-Master-Einheit 1 jedoch ausgefallen ist, erfolgt kein Empfang des Telegramms.

Vom Port_P1 31 des ersten Verteilers 3 wird das dritte Telegramm mit der Kennung 3 auf den ersten Kommunikationspfad 61 des Slave-Datenbusses 6 ausgegeben. Das dritte Telegramm mit der Kennung 3 durchläuft nacheinander die am ersten Kommunikationspfad 61 angeordneten Slave-Einheiten 5-1 bis 5-N. Das dritte Telegramm mit der Kennung 3 wird dabei jeweils vom Port_P1 50 der Slave-Einheit 5 empfangen und über die interne Datenverbindung 53 an die Telegramm-Verarbeitungseinheit 520 der Verarbeitungseinrichtung 52 weitergeleitet, die einen Datenaustausch mit dem Nutzdatenblock des Telegramms durchführt. Nach der Verarbeitung wird das dritte Telegramm mit der Kennung 3 über die interne Datenverbindung 53 an den Port_P2 51 der Slave-Einheit 5 übergeben, der das Telegramm dann auf dem ersten Kommunikationspfad 61 weiter verschickt.

In Telegramm-Übertragungsrichtung gesehen, die letzte Slave-Einheit 5-N am ersten Kommunikationspfad 61 des Slave-Datenbusses 6 überträgt nach der Verarbeitung das dritte Telegramm mit der Kennung 3 zum Port_P1 41 des vierten Verteilers 4. Nach dem Empfang auf dem Port_P1 41 des vierten Verteilers 4 wird das dritte Telegramm mit der Kennung 3 im zweiten Verteiler 4 über die interne Datenverbindung 44 an die Vermittlungseinrichtung 43 weitergeleitet, die das Telegramm auf der Grundlage der im zweiten Verteiler 4 abgespeicherten vorstehenden Transfer-Tabelle zum Port_P0 40 routet. Das über den Port_P0 40 des zweiten Verteilers 4 auf dem Ersatz-Datenbus 8 ausgegebene dritte Telegramm mit der Kennung 3 wird vom Port_P0 20 der Ersatz-Master-Einheit 2 empfangen.

Nachfolgend wird der Umlauf des vierten Telegramms mit der Kennung 4 ausgehend vom zweiten Verteiler 4 erläutert:
Nach dem Empfang über Port_P0 40 wird das vierte Telegramm mit der Kennung 4 im zweiten Verteiler 4 über die interne Datenverbindung 44 zur Vermittlungseinrichtung 43 weitergeleitet. Die Vermittlungseinrichtung 43 des zweiten Verteilers 4 routet das Telegramm dann anhand der Transfer-Tabelle des zweiten Verteilers 4, von der hier der Ausschnitt der Transfer-Tabelle des zweiten Verteilers 4 für die Durchleitung von vierten Telegrammen mit der Kennung 4 im Ersatz-Betriebsmodus wiedergegeben ist.

| Fig. 3B: Transfer-Tabelle des zweiten Verteilers 4 im Ersatz-Betriebsmodus | | |
|---|---|---|
| Telegrammkennung | Empfangsport | Sendeport |
| 4 | P0 | P1 |
| 4 | P2 | P0 |

Wie der Transfer-Tabelle zu entnehmen ist, leitet die Vermittlungseinrichtung 43 des zweiten Verteilers 4 nach Auswertung der Telegramm-Kennung das vierte Telegramm mit der Kennung 4 zum Port_P1 41 weiter, der das Telegramm auf dem zweiten Kommunikationspfad 62 des Slave-Datenbusses 6 ausgibt.

Das vierte Telegramm mit der Kennung 4 durchläuft nacheinander die im zweiten Kommunikationspfad 62 angeordneten Slave-Einheiten 5-1 bis 5-N, wobei das vierte Telegramm mit der Kennung 4 gegenläufig zum dritten Telegramm mit der Kennung 3 auf ersten Kommunikationspfad 61 umläuft und von der Slave-Einheit 5-N, dann zur Slave-Einheit 5-N-1 bis zur Slave-Einheit 5-1 weitergereicht wird.

Das vierte Telegramm mit der Kennung 4 wird dabei jeweils vom Port_P2 51 der Slave-Einheit 5 empfangen und über die interne Datenverbindung 53 an die Verarbeitungseinrichtung 52 der Slave-Einheit 5 weitergeleitet. Bei einer Ausführung der Slave-Einheit, wie sie in Fig. 2 gezeigt ist, wird im Ersatz-Betriebsmodus analog zum Standard-Betriebsmodus nur das dritte Telegramm mit der Telegramm-Kennung 3, das auf dem ersten Kommunikationspfad 61 des Slave-Datenbusses 6 umläuft, von der Telegramm-Verarbeitungseinheit 520 der Verarbeitungseinrichtung 52 in der Slave-Einheit 5 verarbeitet. Das auf dem zweiten Kommunikationspfad 62 des Slave-Datenbusses 6 gegenläufig zum dritten Telegramm mit der Kennung 3 umlaufende vierte Telegramm mit der Kennung 4 wird dagegen von der Slave-Einheit 5 unverarbeitet durchgeleitet. Hierzu sind im Ersatz-Betriebsmodus analog zum Standard-Betriebsmodus der erste Umschalter 5211 und der zweite Umschalter 5212 in der Kopplungseinrichtung 521 der Verarbeitungseinrichtung 52 so eingestellt, dass nur das auf dem ersten Kommunikationspfad 61 empfangene dritte Telegramm mit der Kennung 3 über die Telegramm-Verarbeitungseinheit 520 der Verarbeitungseinrichtung 54 läuft, um verarbeitet zu werden. Das vierte Telegramm mit der vierten Kennung 4 wird dagegen von dem ersten Umschalter 5211 und dem zweiten Umschalter 5212 auf der internen Datenverbindung 53 direkt vom Port_P2 51 zum Port_P1 50 übertragen.

In Telegramm-Übertragungsrichtung gesehen, die letzte Slave-Einheit 5-1 am zweiten Kommunikationspfad 62 des Slave-Datenbusses 6 überträgt das vierte Telegramm mit der Kennung 4 zum Port_P1 31 des ersten Verteilers 3. Das vierte Telegramm mit der Kennung 4 wird dann über die interne Datenverbindung 34 an die Vermittlungseinrichtung 33 des ersten Verteilers 3 weitergeleitet, der das Telegramm auf der Grundlage der im ersten Verteiler abgespeicherten Transfer-Tabelle routet. Nachstehend ist der Ausschnitt der Transfer-Tabelle des ersten Verteilers 3 für die Durchleitung von vierten Telegrammen mit der Kennung 4 im Ersatz-Betriebsmodus wiedergeben:

| Fig. 3B: Transfer-Tabelle des ersten Verteilers 3 im Ersatz-Betriebsmodus | | |
|---|---|---|
| Telegrammkennung | Empfangsport | Sendeport |
| 4 | P1 | P0, P2 |

Das auf dem Port_P1 31 empfangene vierte Telegramm mit der Kennung 4 wird von der Vermittlungseinrichtung 33 des ersten Verteilers 3 gemäß der Transfer-Tabelle über die interne Datenverbindung 34 sowohl zum Port_P0 30 als auch zum Port_P2 32 geroutet.

Der Port_P0 30 des ersten Verteilers 3 versucht das vierte Telegramm mit der Kennung 4 dann über den Haupt-Datenbus 7 zum Port_P0 10 der Haupt-Master-Einheit 1 zu übertragen. Da die Haupt-Master-Einheit 1 jedoch ausgefallen ist, erfolgt kein Empfang des Telegramms.

Das über den Port_P2 32 des ersten Verteilers 3 ausgegebene vierte Telegramm mit der Kennung 4 wird vom Port_P2 42 des zweiten Verteilers 4 auf dem zweiten Kommunikationspfad 62 des Slave-Datenbusses 6 empfangen und von der Vermittlungseinrichtung 43 des zweiten Verteilers 4 entsprechend dem vorstehenden Ausschnitt der Transfer-Tabelle des zweiten Verteilers 4 über die interne Datenverbindung 44 an den Port_P0 40 geroutet, der das vierte Telegramm mit der Kennung 4 auf dem Ersatz-Datenbus 8 zum Port_P0 20 der Ersatz-Master-Einheit 2 übertragt.

Nach Abschluss des Umlaufes des dritten Telegramms mit der Kennung 3 und des vierten Telegramms mit der Kennung 4 wird im Ersatz-Betriebsmodus des Master-Slave-Automatisierungssystems dann von der Steuereinrichtung 21 der Ersatz-Master-Einheit 2 das rückgekoppelte dritte Telegramm mit der Kennung 3, mit dem alle Slave-Einheiten 5-1 bis 5-N einen Datenaustausch mit dem Nutzdatenblock des Telegramms ausgeführt haben, weiterverarbeitet.

Die Steuereinrichtung 21 der Ersatz-Master-Einheit 2 im Master-Slave-Automatisierungssystem ist ausgelegt, den Standard-Betriebsmodus, bei dem die Steuereinrichtung 11 der Haupt-Master-Einheit 1 den Telegrammverkehr steuert, zu überwachen, um bei Feststellen eines Ausfalls der Haupt-Master-Einheit 1 den Ersatz-Betriebsmodus aufzunehmen. Die Steuereinrichtung 21 der Ersatz-Master-Einheit 2 kann dabei ohne Verzögerung den Telegrammverkehr aufnehmen, da die Steuereinrichtung 21 der Ersatz-Master-Einheit 2 im Standard-Betriebsmodus parallel zur Haupt-Master-Einheit 1 die nach der Verarbeitung durch die Slave-Einheiten 5-1 bis 5-N rückgekoppelten ersten Telegrammen mit der Kennung 1 erhalten hat und somit auf dem Laufenden ist, was den aktuellen Status des Steuerungsvorgangs betrifft.

Die Steuereinrichtung 21 der Ersatz-Master-Einheit 2 ist dann weiter ausgelegt, beim Zurückschalten in den Standard-Betriebsmodus, dann, wenn die Haupt-Master-Einheit 1 wieder aktiv ist, die im Ersatz-Betriebsmodus von der Steuereinrichtung 21 der Ersatz-Master-Einheit 2 empfangenen, durch die Slave-Einheiten 5-1 bis 5-N verarbeiteten vierten Telegramme mit der Kennung 4 zur Steuereinrichtung 11 der Haupt-Master-Einheit 1 zu übertragen. Die Steuereinrichtung 11 der Haupt-Master-Einheit 1 kann so im Standard-Betriebsmodus nahtlos an den Telegrammverkehr im Ersatz-Betriebsmodus anschließen.

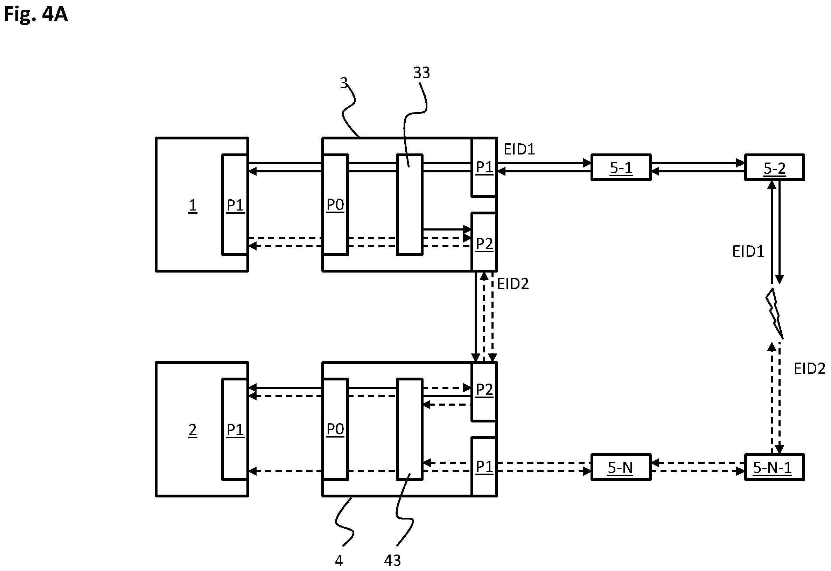

Fig. 4A zeigt den Standard-Betriebsmodus im Master-Slave-Automatisierungssystem gemäß Fig. 1, wobei im Slave-Datenbus 6 ein Streckenfehler aufgetreten ist. Das Master-Slave-Automatisierungssystem besitzt bei Auftreten eines Streckenfehlers im Slave-Datenbus 6 die Fähigkeit zur automatischen Neukonfiguration, um so die Telegrammübertragung im Automatisierungssystem aufrecht zu erhalten. Bei Auftreten eines Streckenfehlers im Slave-Datenbus 6 gehen die beiden an die Fehlerstelle angrenzenden Slave-Einheiten automatisch in einen Fehlerbetrieb über, bei dem die Kopplungseinrichtung 521 in der Verarbeitungseinrichtung 52 der Slave-Einheit 5 in der in Fig. 2 gezeigten Ausführungsform mit Hilfe des ersten Umschalters 5211 und des zweiten Umschalters 5212 den ersten Kommunikationspfad 61 und den zweiten Kommunikationspfad 62 kurzschließt, um die Telegramme von dem einen Kommunikationspfad auf den anderen Kommunikationspfad umzulenken.

Wie im regulären Standard-Betriebsmodus des Master-Slave-Automatisierungssystem wird von der Steuereinrichtung 11 der Haupt-Master-Einheit 1 ein erstes Telegramm mit der Kennung 1 und ein zweites Telegramm mit der Kennung 2, die einen identischen Nutzdatenblock aufweisen, erzeugt und über den Port_P0 10 auf dem Haupt-Datenbus 7 zum Port_P0 30 des ersten Verteilers 3 übertragen.

Durch das Kurzschließen von dem ersten Kommunikationspfad 61 und dem zweiten Kommunikationspfad 62 in den beiden an die Fehlerstelle im Slave-Datenbus 6 angrenzenden Slave-Einheiten, was in Fig. 4A nicht explizit gezeigt ist, erfolgt eine schleifenförmige Telegrammübertragung über den ersten Kommunikationspfad 61 und den zweiten Kommunikationspfad 62 des Slave-Datenbusses 6. Als durchgezogenen Linie ist in Fig. 4A der Übertragungsweg für die von der Haupt-Master-Einheit 1 versandten ersten Telegramme mit der Kennung 1 dargestellt. Der Übertragungsweg für die von der Haupt-Master-Einheit 1 versandten zweiten Telegramme mit der Kennung 2 ist als punktierte Linie in Fig. 3A eingetragen.

Nachfolgend wird der Umlauf des ersten Telegramms mit der Kennung 1 ausgehend vom ersten Verteiler 3 erläutert, wobei nachstehend der Ausschnitt der Transfer-Tabelle des ersten Verteilers 3 für die Durchleitung von ersten Telegrammen mit der Kennung 1 im Standard-Betriebsmodus bei einem Streckenfehler wiedergegeben ist:

| Fig. 4A: Transfer-Tabelle des ersten Verteilers 3 im Standard-Betriebsmodus bei einem Streckenfehler | | |
|---|---|---|
| Telegrammkennung | Empfangsport | Sendeport |
| 1 | P0 | P1 |
| 1 | P2 | P0 |
| 1 | P1 | P0, P2 |

Nach dem Empfang über Port_P0 30 wird das erste Telegramm mit der Kennung 1 im ersten Verteiler 3 über die interne Datenverbindung 34 zur Vermittlungseinrichtung 33 weitergeleitet. Die Vermittlungseinrichtung 33 des ersten Verteilers 3 routet gemäß der Transfer-Tabelle das erste Telegramm mit der Kennung 1 über die interne Datenverbindung 34 zum Port_P1 31 des ersten Verteilers 3 weiter.

Das erste Telegramm mit der Kennung 1 wird dann vom Port_P1 31 des ersten Verteilers 3 auf dem ersten Kommunikationspfad 61 des Slave-Datenbusses 6 ausgegeben. Das erste Telegramm mit der Kennung 1 durchläuft nacheinander die am ersten Kommunikationspfad 61 angeordneten Slave-Einheiten bis zur Slave-Einheit, die an den Streckenfehler angrenzt. Das erste Telegramm mit der Kennung 1 wird dabei jeweils vom Port_P1 50 der Slave-Einheit 5 empfangen und über die interne Datenverbindung 53 an die Verarbeitungseinrichtung 52 der Slave-Einheit 5 weitergeleitet, deren Telegramm-Verarbeitungseinheit 520 mit dem durchlaufenden ersten Telegramm mit der Kennung 1 einen Datenaustausch durchführt. Nach der Verarbeitung des Telegramms wird das erste Telegramm mit der Kennung 1 dann über die interne Datenverbindung 53 dem Port_P2 51 der Slave-Einheit 5 übergeben, der das Telegramm auf dem ersten Kommunikationspfad 61 weiter verschickt.

In der an den Streckenfehler angrenzenden Slave-Einheit wird das erste Telegramm mit der Kennung 1 nach der Verarbeitung durch die Telegramm-Verarbeitungseinheit 520 statt an Port_P2 51 durch eine entsprechende Umstellung im zweiten Umschalter 5212 der Kopplungseinrichtung 521 an den Port_P1 50 zurückgeleitet, der das erste Telegramm mit der Kennung 1 auf dem zweiten Kommunikationspfad 62 ausgibt. Das erste Telegramm mit der Kennung 1 durchläuft dann gegenläufig, ohne weiter verarbeitet zu werden, die Slave-Einheiten am zweiten Kommunikationspfad 62 bis zur ersten Slave-Einheit 5-1.

Die erste Slave-Einheit 5-1 überträgt dann das erste Telegramm mit der Kennung 1 zum Port_P1 31 des ersten Verteilers 3. Das erste Telegramm mit der Kennung 1 wird über die interne Datenverbindung 34 an die Vermittlungseinrichtung 33 des ersten Verteilers 3 weitergeleitet, die das Telegramm auf der Grundlage der im ersten Verteiler 3 abgespeicherten vorstehenden Transfer-Tabelle sowohl zum Port_P0 30 als auch zum Port_P2 32 routet.

Der Port_P0 30 des ersten Verteilers 3 überträgt das erste Telegramm mit der Kennung 1 auf dem Haupt-Datenbus 7 zum Port_P0 10 der Haupt-Master-Einheit 1.

Zusätzlich verschickt der Port_P2 32 des ersten Verteilers 3 das erste Telegramm mit der Kennung 1 auf dem ersten Kommunikationspfad 61 zum Port_P2 42 des zweiten Verteilers 4. Das erste Telegramm mit der Kennung 1 wird im zweiten Verteiler 4 über die interne Datenverbindung 44 an die Vermittlungseinrichtung 43 weitergeleitet, die das Telegramm auf der Grundlage der im zweiten Verteiler 4 abgespeicherten Transfer-Tabelle routet, von der nachstehend der entsprechende Ausschnitt der Transfer-Tabelle des zweiten Verteilers 4 für die Durchleitung von ersten Telegrammen mit der Kennung 1 im Standard-Betriebsmodus bei einem Streckenfehler wiedergegeben ist.

| Fig. 4A: Transfer-Tabelle des zweiten Verteilers 4 im Standard-Betriebsmodus bei einem Streckenfehler | | |
|---|---|---|
| Telegrammkennung | Empfangsport | Sendeport |
| 1 | P2 | P0 |

Die Vermittlungseinrichtung 43 des zweiten Verteilers 4 leitet das erste Telegramm mit der Kennung 1 über die interne Datenverbindung 44 an den Port_P0 40 weiter. Der Port_P0 40 des zweiten Verteilers 4 überträgt das erste Telegramm mit der Kennung 1 dann über den Ersatz-Datenbus 8 zum Port_P0 20 der Ersatz-Master-Einheit 2.

Nachfolgend wird der Umlauf des zweiten Telegramms mit der Kennung 2 ausgehend vom ersten Verteiler 3 erläutert:
Nach dem Empfang über den Port_P0 30 wird das zweite Telegramm mit der Kennung 2 im ersten Verteiler 3 über die interne Datenverbindung 34 zur Vermittlungseinrichtung 33 weitergeleitet. Die Vermittlungseinrichtung 33 des ersten Verteilers 3 routet das Telegramm dann anhand der Transfer-Tabelle des ersten Verteilers 3, von der nochmals der Ausschnitt der Transfer-Tabelle des ersten Verteilers 3 für die Durchleitung von zweiten Telegrammen mit der Kennung 2 im Standard-Betriebsmodus bei einem Streckenfehler wiedergegeben ist.

| Fig. 4A: Transfer-Tabelle des ersten Verteilers 3 im Standard-Betriebsmodus bei einem Streckenfehler | | |
|---|---|---|
| Telegrammkennung | Empfangsport | Sendeport |
| 2 | P0 | P2 |
| 2 | P1 | P0 |
| 2 | P2 | P0 |

Wie der Transfer-Tabelle zu entnehmen ist, leitet die Vermittlungseinrichtung 33 des ersten Verteilers 3 nach Auswertung der Telegramm-Kennung das zweite Telegramm mit der Kennung 2 zum Port_P2 32 weiter, der das Telegramm auf den zweiten Kommunikationspfad 62 des Slave-Datenbusses 6 ausgibt.

Das zweite Telegramm mit der Kennung 2 wird dann vom zweiten Verteiler 4 auf dem Port_P2 42 empfangen und von der Vermittlungseinrichtung 43 des zweiten Verteilers 4 gemäß der Transfer-Tabelle geroutet. Nachstehend ist der Ausschnitt der Transfer-Tabelle des zweiten Verteilers 4 für die Durchleitung von zweiten Telegrammen mit der Kennung 2 im Standard-Betriebsmodus bei einem Streckenfehler wiedergeben:

| Fig. 4A: Transfer-Tabelle des zweiten Verteilers 4 im Standard-Betriebsmodus bei einem Streckenfehler | | |
|---|---|---|
| Telegramm-Kennung | Empfangsport | Sendeport |
| 2 | P2 | P0, P1 |
| 2 | P1 | P0, P2 |

Das auf dem Port_P2 42 empfangene zweite Telegramm mit der Kennung 2 wird von der Vermittlungseinrichtung 43 des zweiten Verteilers 4 gemäß der Transfer-Tabelle über die interne Datenverbindung 34 sowohl zum Port_P0 40 als auch zum Port_P1 41 geroutet.

Der Port_P0 40 des zweiten Verteilers 4 überträgt das zweite Telegramm mit der Kennung 2 dann über den Ersatz-Datenbus 8 zum Port_P0 20 der Ersatz-Master-Einheit 2.

Vom Port_P1 41 des zweiten Verteilers 4 wird das zweite Telegramm mit der Kennung 2 auf den zweiten Kommunikationspfad 62 des Slave-Datenbusses 6 ausgegeben. Das zweite Telegramm mit der Kennung 2 durchläuft nacheinander die am zweiten Kommunikationspfad 62 angeordneten Slave-Einheiten bis zur Slave-Einheit, die an den Streckenfehler angrenzt, wobei das zweite Telegramm mit der Kennung 2 gegenläufig zum ersten Telegramm mit der Kennung 1 auf ersten Kommunikationspfad 61, also ausgehend von der Slave-Einheit 5-N umläuft.

Das zweite Telegramm mit der Kennung 2 wird dabei jeweils vom Port_P2 51 der Slave-Einheit 5 empfangen und über die interne Datenverbindung 53 an die Verarbeitungseinrichtung 52 der Slave-Einheit 5 weitergeleitet, die das zweite Telegramm mit der Kennung 2 durch eine entsprechende Einstellung des ersten Umschalter 5211 und des zweiten Umschalters 5212 in der Kopplungseinrichtung 521 unverarbeitet zum Port_P1 50 durchgeleitet, der das Telegramm auf dem zweiten Kommunikationspfad 62 weiter verschickt.

In der an den Streckenfehler angrenzenden Slave-Einheit jedoch wird das zweite Telegramm mit der Kennung 2 statt an Port_P1 50 durch eine entsprechende Umstellung im ersten Umschalter 5211 der Kopplungseinrichtung 521 zur Telegramm-Verarbeitungseinheit 520 in der Verarbeitungseinrichtung 52 weitergeleitet, die einen Datenaustausch mit dem Nutzdatenblock des Telegramms ausführt.

Nach der Verarbeitung des zweiten Telegramms mit der Kennung 2 durch die Telegramm-Verarbeitungseinheit 520 in der Verarbeitungseinrichtung 52 wird das Telegramm dann über die interne Datenverbindung 53 an den Port_P2 51 der Slave-Einheit 5 übergeben, der das Telegramm auf dem ersten Kommunikationspfad 61 gegenläufig zur Telegramm-Empfangsrichtung zum zweiten Verteiler 4 zurückschickt.

Das zweite Telegramm mit der Kennung 2 durchläuft dann nacheinander die am ersten Kommunikationspfad 61 angeordneten Slave-Einheiten, wobei die Telegramm-Verarbeitungseinheit 520 in der Verarbeitungseinrichtung 52 das durchlaufende Telegramm verarbeitet. Die letzte Slave-Einheit 5-N am ersten Kommunikationspfad 61 des Slave-Datenbusses 6 überträgt nach der Verarbeitung das zweite Telegramm mit der Kennung 2 zum Port_P1 41 des zweiten Verteilers 4.

Das zweite Telegramm mit der Kennung 2 wird im zweiten Verteiler 4 über die interne Datenverbindung 44 an die Vermittlungseinrichtung 43 weitergeleitet, die das Telegramm auf der Grundlage der im zweiten Verteiler 4 abgespeicherten Transfer-Tabelle sowohl zum Port_P0 40 als auch zum Port_P2 42 routet.

Der Port_P0 40 des zweiten Verteilers 4 überträgt das zweite Telegramm mit der Kennung 2 über den Ersatz-Datenbus 8 zum Port_P0 20 der Ersatz-Master-Einheit 2.

Das vom Port_P2 42 des zweiten Verteilers 4 auf dem ersten Kommunikationspfad 61 des Slave-Datenbusses 6 ausgegebene zweite Telegramm mit der Kennung 2 wird vom Port_P2 32 des ersten Verteilers 3 empfangen und von der Vermittlungseinrichtung 33 des ersten Verteilers 3 entsprechend dem vorstehenden Ausschnitt der Transfer-Tabelle des ersten Verteilers 3 über die interne Datenverbindung 34 an den Port_P0 30 geroutet, der das zweite Telegramm mit der Kennung 2 auf dem Haupt-Datenbus 7 zum Port_P0 10 der Haupt-Master-Einheit 1 übertragt.

Nach Abschluss des Umlaufes des ersten Telegramms mit der Kennung 1 und des zweiten Telegramms mit der Kennung 2 liegen sowohl in der Steuereinrichtung 11 der Haupt-Master-Einheit 1 als auch in der Steuereinrichtung 21 der Ersatz-Master-Einheit 2 beide Telegramme identisch vor. Die Steuereinrichtung 11 der Haupt-Master-Einheit 1 und die Steuereinrichtung 21 der Ersatz-Master-Einheit 2 verodert dann im Standard-Betriebsmodus bei einem Streckenfehler die Nutzdatenblocks des ersten Telegramms mit der Kennung 1 und des zweiten Telegramms mit der Kennung 2, so dass ein kombinierter Nutzdatenblock erzeugt wird, in dem unbesehen davon, wie die Telegramme über den ersten und den zweiten Kommunikationspfad rückgekoppelt wurden, alle von den Slave-Einheiten zu übermittelnden Daten enthalten sind.

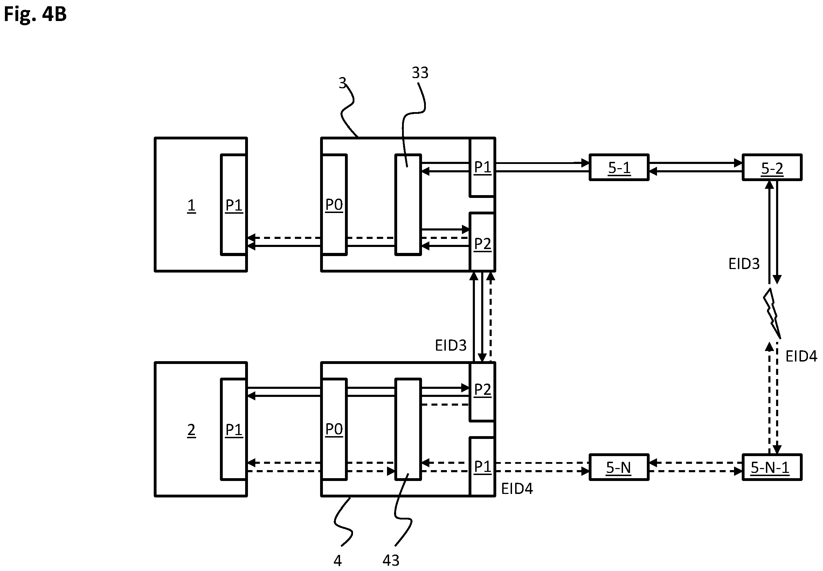

Fig. 4B zeigt den Ersatz-Betriebsmodus im Master-Slave-Automatisierungssystem gemäß Fig. 1 nach Ausfall der Haupt-Master-Einheit 1, bei dem die Ersatz-Master-Einheit 2 den Telegrammverkehr im Master-Slave-Automatisierungssystem steuert, wobei zusätzlich im Slave-Datenbus 6 ein Streckenfehler aufgetreten ist. Bei Auftreten eines Streckenfehlers im Slave-Datenbus 6 gehen die beiden an die Fehlerstelle angrenzenden Slave-Einheiten automatisch in einen Fehlerbetrieb über, bei dem die Kopplungseinrichtung 521 in der Verarbeitungseinrichtung 52 der Slave-Einheit 5 in der in Fig. 2 gezeigten Ausführungsform mit Hilfe des ersten Umschalters 5211 und des zweiten Umschalters 5212 den ersten Kommunikationspfad 61 und den zweiten Kommunikationspfad 62 kurzschließt, um die Telegramme von dem einen Kommunikationspfad auf den anderen Kommunikationspfad umzulenken.

Wie im regulären Ersatz-Betriebsmodus des Master-Slave-Automatisierungssystem wird von der Steuereinrichtung 21 der Ersatz-Master-Einheit 2 ein drittes Telegramm mit der Kennung 3 und ein viertes Telegramm mit der Kennung 4, die einen identischen Nutzdatenblock aufweisen, erzeugt und über den Port_P0 20 auf dem Ersatz-Datenbus 8 zum Port_P0 40 des zweiten Verteilers 4 übertragen.

Durch das Kurzschließen von dem ersten Kommunikationspfad 61 und dem zweiten Kommunikationspfad 62 in den beiden an die Fehlerstelle im Slave-Datenbus 6 angrenzenden Slave-Einheiten, was in Fig. 4B nicht explizit gezeigt ist, erfolgt eine schleifenförmige Telegrammübertragung über den ersten Kommunikationspfad 61 und den zweiten Kommunikationspfad 62 des Slave-Datenbusses 6. Als durchgezogenen Linie ist in Fig. 4B der Übertragungsweg für die von der Ersatz-Master-Einheit 2 versandten dritten Telegramme mit der Kennung 3 dargestellt. Der Übertragungsweg für die von der Ersatz-Master-Einheit 2 versandten vierten Telegramme mit der Kennung 4 ist als punktierte Linie in Fig. 4B eingetragen.

Nachfolgend wird der Umlauf des dritten Telegramms mit der Kennung 3 ausgehend vom zweiten Verteiler 4 erläutert, wobei hier der Ausschnitt der Transfer-Tabelle des zweiten Verteilers 4 für die Durchleitung von dritten Telegrammen mit der Kennung 3 im Ersatz-Betriebsmodus bei einem Streckenfehler wiedergegeben ist:

| Fig. 4B: Transfer-Tabelle des zweite Verteilers 4 im Ersatz-Betriebsmodus bei einem Streckenfehler | | |
|---|---|---|
| Telegrammkennung | Empfangsport | Sendeport |
| 3 | P0 | P2 |
| 3 | P1 | P0 |
| 3 | P2 | P1 |

Nach dem Empfang über Port_P0 40 wird das dritte Telegramm mit der Kennung 3 im zweiten Verteiler 4 über die interne Datenverbindung 44 zur Vermittlungseinrichtung 43 weitergeleitet. Die Vermittlungseinrichtung 43 des zweiten Verteilers 4 routet das Telegramm dann anhand der Transfer-Tabelle zum Port_P2 42 des zweiten Verteilers 4, der das dritte Telegramm mit der Kennung 3 auf dem ersten Kommunikationspfad 61 des Slave-Datenbusses 6 zum Port_P2 32 des ersten Verteilers 3 überträgt.

Im ersten Verteiler 3 wird das dritte Telegramm mit der Kennung 3 im ersten Verteiler 3 über die interne Datenverbindung 34 an die Vermittlungseinrichtung 33 weitergeleitet, die das Telegramm auf der Grundlage der im ersten Verteiler 3 abgespeicherten Transfer-Tabelle routet. Nachstehend ist der Ausschnitt der Transfer-Tabelle des ersten Verteilers 3 für die Durchleitung von dritten Telegrammen mit der Kennung 3 im Ersatz-Betriebsmodus bei einem Streckenfehler wiedergeben.

| Fig. 4B: Transfer-Tabelle des ersten Verteilers 3 im Ersatz-Betriebsmodus bei einem Streckenfehler | | |
|---|---|---|
| Telegrammkennung | Empfangsport | Sendeport |
| 3 | P2 | P0, P1 |
| 3 | P1 | P0, P2 |

Das auf dem Port_P2 32 empfangene dritte Telegramm mit der Kennung 3 wird von der Vermittlungseinrichtung 33 des ersten Verteilers 3 über die interne Datenverbindung 34 sowohl zum Port_P0 30 als auch zum Port_P1 31 weitergeleitet.

Der Port_P0 40 des ersten Verteilers 3 versucht das dritte Telegramm mit der Kennung 3 dann über den Haupt-Datenbus 7 zum Port_P0 10 der Haupt-Master-Einheit 1 zu übertragen. Da die Haupt-Master-Einheit 1 jedoch ausgefallen ist, erfolgt kein Empfang des Telegramms.

Vom Port_P1 31 des ersten Verteilers 3 wird das dritte Telegramm mit der Kennung 3 auf den ersten Kommunikationspfad 61 des Slave-Datenbusses 6 ausgegeben. Das dritte Telegramm mit der Kennung 3 durchläuft nacheinander die am ersten Kommunikationspfad 61 angeordneten Slave-Einheiten bis zur Slave-Einheit, die an den Streckenfehler angrenzt. Das dritte Telegramm mit der Kennung 3 wird dabei jeweils vom Port_P1 50 der Slave-Einheit 5 empfangen und über die interne Datenverbindung 53 an die Verarbeitungseinrichtung 52 der Slave-Einheit 5 weitergeleitet, deren Telegramm-Verarbeitungseinheit 520 mit dem durchlaufenden dritten Telegramm mit der Kennung 3 einen Datenaustausch durchführt. Nach der Verarbeitung wird das dritte Telegramm mit der Kennung 3 dann über die interne Datenverbindung 53 an den Port_P2 51 der Slave-Einheit 5 übergeben, der das Telegramm dann auf dem ersten Kommunikationspfad 61 weiter verschickt.

In der an den Streckenfehler angrenzenden Slave-Einheit wird das dritte Telegramm mit der Kennung 3 nach der Verarbeitung durch die Verarbeitungseinheit 520 statt an Port_P2 51 durch eine entsprechende Umstellung im zweiten Umschalter 5212 der Kopplungseinrichtung 521 an den Port_P1 50 zurückgeleitet, der das dritte Telegramm mit der Kennung 3 auf dem zweiten Kommunikationspfad 62 ausgibt. Das dritte Telegramm mit der Kennung 3 durchläuft dann gegenläufig, ohne weiter verarbeitet zu werden, die Slave-Einheiten am zweiten Kommunikationspfad 62 bis zur ersten Slave-Einheit 5-1.

Die erste Slave-Einheit 5-1 überträgt dann das dritte Telegramm mit der Kennung 3 zum Port_P1 31 des ersten Verteilers 3. Das dritte Telegramm mit der Kennung 3 wird über die interne Datenverbindung 34 an die Vermittlungseinrichtung 33 des ersten Verteilers 3 weitergeleitet, die das Telegramm auf der Grundlage der im ersten Verteiler 3 abgespeicherten vorstehenden Transfer-Tabelle zum Port_P0 30 und zum Port_P2 32 routet.

Der Port_P0 40 des ersten Verteilers 3 versucht das dritte Telegramm mit der Kennung 3 dann wieder über den Haupt-Datenbus 7 zum Port_P0 10 der Haupt-Master-Einheit 1 zu übertragen. Da die Haupt-Master-Einheit 1 jedoch ausgefallen ist, erfolgt kein Empfang des Telegramms.

Zusätzlich verschickt der Port_P2 40 des ersten Verteilers 3 das dritte Telegramm mit der Kennung 3 auf dem ersten Kommunikationspfad 61 zum Port_P2 42 des zweiten Verteilers 4. Das dritte Telegramm mit der Kennung 3 wird im zweiten Verteiler 4 über die interne Datenverbindung 44 an die Vermittlungseinrichtung 43 weitergeleitet, die das Telegramm auf der Grundlage der im zweiten Verteiler 4 abgespeicherten Transfer-Tabelle zum Port_P0 40 des zweiten Verteilers 4 routet.

Der Port_P0 40 des zweiten Verteilers 4 überträgt das dritte Telegramm mit der Kennung 3 auf dem Ersatz-Datenbus 8 zum Port_P0 20 der Ersatz-Master-Einheit 2.

Nachfolgend wird der Umlauf des vierten Telegramms mit der Kennung 4 ausgehend vom zweiten Verteiler 4 erläutert:
Nach dem Empfang über Port_P0 40 wird das vierte Telegramm mit der Kennung 4 im zweiten Verteiler 4 über die interne Datenverbindung 44 zur Vermittlungseinrichtung 43 weitergeleitet. Die Vermittlungseinrichtung 43 des zweiten Verteilers 4 routet das Telegramm dann anhand der Transfer-Tabelle des zweiten Verteilers 4, von der zur Verdeutlichung nochmals der Ausschnitt der Transfer-Tabelle des zweiten Verteilers 4 für die Durchleitung von vierten Telegrammen mit der Kennung 4 im Ersatz-Betriebsmodus bei einem Streckenfehler wiedergegeben ist.

| Fig. 3B: Transfer-Tabelle des zweiten Verteilers 4 im Ersatz-Betriebsmodus bei einem Streckenfehler | | |
|---|---|---|
| Telegrammkennung | Empfangsport | Sendeport |
| 4 | P0 | P1 |
| 4 | P2 | P0 |
| 4 | P2 | P0, P2 |

Wie der Transfer-Tabelle zu entnehmen ist, leitet die Vermittlungseinrichtung 43 des zweiten Verteilers 3 nach Auswertung der Telegramm-Kennung das vierte Telegramm mit der Kennung 4 zum Port_P1 41 weiter, der das Telegramm auf dem zweiten Kommunikationspfad 62 des Slave-Datenbusses 6 ausgibt.

Das vierte Telegramm mit der Kennung 4 durchläuft nacheinander die am zweiten Kommunikationspfad 62 angeordneten Slave-Einheiten bis zur Slave-Einheit, die an den Streckenfehler angrenzt, wobei das vierte Telegramm mit der Kennung 4 gegenläufig zum dritten Telegramm mit der Kennung 3 auf dem zweiten Kommunikationspfad 62 also ausgehend von der Slave-Einheit 5-N umläuft.

Das vierte Telegramm mit der Kennung 4 wird dabei jeweils vom Port_P2 51 der Slave-Einheit 5 empfangen und über die interne Datenverbindung 53 an die Verarbeitungseinrichtung 52 der Slave-Einheit 5 übergeben, die das vierte Telegramm mit der Kennung 4 unverarbeitet an den Port_P1 50 weiterleitet, von wo aus das Telegramm auf dem zweiten Kommunikationspfad 62 verschickt wird.

In der an den Streckenfehler angrenzenden Slave-Einheit wird das vierte Telegramm mit der Kennung 4 durch eine entsprechende Umstellung im ersten Umschalter 5211 der Kopplungseinrichtung 521 statt an den Port_P1 50 an die Telegramm-Verarbeitungseinheit 520 übergeben, die mit dem vierten Telegramm mit der Kennung 4 einen Datenaustausch durchführt. Das verarbeitete vierte Telegramm mit der Kennung 4 wird dann vom Port_P2 51 der Slave-Einheit auf dem zweiten Kommunikationspfad 62 ausgeben.

Das vierte Telegramm mit der Kennung 4 durchläuft anschließend gegenläufig die Slave-Einheiten am zweiten Kommunikationspfad 62 bis zur ersten Slave-Einheit 5-1, wobei die Telegramm-Verarbeitungseinheit 520 der Verarbeitungseinrichtung 52 mit dem durchlaufenden vierten Telegramm mit der Kennung 4 jeweils einen Datenaustausch durchführt.

Die letzte Slave-Einheit 5-N überträgt dann das vierte Telegramm mit der Kennung 4 zum Port_P1 41 des zweiten Verteilers 4. Das zweite Telegramm mit der Kennung 4 wird über die interne Datenverbindung 44 an die Vermittlungseinrichtung 43 des zweiten Verteilers 4 weitergeleitet, die das Telegramm auf der Grundlage der im zweiten Verteiler 4 abgespeicherten vorstehenden Transfer-Tabelle sowohl zum Port_P0 40 als auch zum Port_P2 42 routet.

Der Port_P0 40 des zweiten Verteilers 4 überträgt das vierte Telegramm mit der Kennung 4 auf dem Ersatz-Datenbus 8 zum Port_P0 20 der Ersatz-Master-Einheit 2.

Das über den Port_P2 42 des zweiten Verteilers 4 ausgegebene vierte Telegramm mit der Kennung 4 wird vom Port_P2 32 des ersten Verteilers 3 auf dem zweiten Kommunikationspfad 62 des Slave-Datenbusses 6 empfangen und von der Vermittlungseinrichtung 33 des ersten Verteilers 3 entsprechend dem vorstehenden Ausschnitt der Transfer-Tabelle des ersten Verteilers 3 über die interne Datenverbindung 34 an den Port_P0 30 geroutet.

Der Port_P0 30 des ersten Verteilers 3 versucht das vierte Telegramm mit der Kennung 4 dann über den Haupt-Datenbus 7 zum Port_P0 10 der Haupt-Master-Einheit 1 zu übertragen. Da die Haupt-Master-Einheit 1 jedoch ausgefallen ist, erfolgt kein Empfang des Telegramms.

Nach Abschluss des Umlaufes des dritten Telegramms mit der Kennung 3 und des vierten Telegramms mit der Kennung 4 werden von der Steuereinrichtung 21 der Ersatz-Master-Einheit 2 im Ersatz-Betriebsmodus bei einem Streckenfehler die Nutzdatenblocks des dritten Telegramms mit der Kennung 3 und des vierten Telegramms mit der Kennung 4 verodert, wodurch ein kombinierter Nutzdatenblock erzeugt wird, in dem unbesehen davon, wie die Telegramme über den ersten und den zweiten Kommunikationspfad rückgekoppelt wurden, alle von den Slave-Einheiten zu übermittelnden Daten enthalten sind.

Die Steuereinrichtung 21 der Ersatz-Master-Einheit 2 ist weiter ausgelegt, beim Zurückschalten in den Standard-Betriebsmodus, dann, wenn die Haupt-Master-Einheit 1 wieder aktiv ist, die im Ersatz-Betriebsmodus von der Steuereinrichtung 21 der der Ersatz-Master-Einheit 2 empfangenen, durch die Slave-Einheiten 5-1 bis 5-N verarbeiteten dritten Telegramme mit der Kennung 3 und vierten Telegrammen mit der Kennung 4 zur Steuereinrichtung 11 der Haupt-Master-Einheit 1 zu übertragen. Die Steuereinrichtung 11 der Haupt-Master-Einheit 1 kann so bei Rückkehr in den Standard-Betriebsmodus nahtlos an der den Telegrammverkehr im Ersatz-Betriebsmodus anschließen.

### Bezugszeichenliste

- 1: Haupt-Master-Einheit
- 2: Ersatz-Master-Einheit
- 3: erster Verteiler
- 4: zweiter Verteiler
- 5: Slave-Einheit
- 6: Slave-Datenbus
- 7: Haupt-Datenbus
- 8: Ersatz-Datenbus
- Port_P0 10: Sende-/Empfangseinrichtung der Haupt-Master-Einheit
- TX 101: Sendeeinheit des Port_P0 10
- RX 102: Empfangseinheit des Port_P0 10
- 11: Steuereinrichtung der Haupt-Master-Einheit
- 12: Datenverbindung
- Port_P0 20: Sende-/Empfangseinrichtung der Ersatz-Master-Einheit
- TX 201: Sendeeinheit des Port_P0 20
- RX 202: Empfangseinheit des Port_P0 20
- 21: Steuereinrichtung der Ersatz-Master-Einheit
- 22: Datenverbindung
- Port_P0 30: Master-Sende-/Empfangseinrichtung des ersten Verteilers
- TX 301: Sendeeinheit des Port_P0 30
- RX 302: Empfangseinheit des Port_P0 30
- Port_P1 31: erste Sende-/Empfangseinrichtung des ersten Verteilers
- TX 311: Sendeeinheit des Port_P1 31
- RX 312: Empfangseinheit des Port_P1 31
- Port_P2 32: zweite Sende-/Empfangseinrichtung des ersten Verteilers
- TX 321: Sendeeinheit des Port_P2 32
- RX 322: Empfangseinheit des Port_P2 32
- 33: Vermittlungseinrichtung
- 34: Datenverbindung
- Port_P0 40: Master-Sende-/Empfangseinrichtung des zweiten Verteilers
- TX 401: Sendeeinheit des Port_P0 40
- RX 402: Empfangseinheit des Port_P0 40
- Port_P1 41: erste Sende-/Empfangseinrichtung des zweiten Verteilers
- TX 411: Sendeeinheit des Port_P1 41
- RX 412: Empfangseinheit des Port_P1 41
- Port_P2 42: zweite Sende-/Empfangseinrichtung des zweiten Verteilers
- TX 421: Sendeeinheit des Port_P2 42
- RX 422: Empfangseinheit des Port_P2 42
- 43: Vermittlungseinrichtung
- 44: Datenverbindung
- Port_P1 50: erste Sende-/Empfangseinrichtung der Slave-Einheit
- TX 501: Sendeeinheit des Port_P1 50
- RX 502: Empfangseinheit des Port_P1 50
- Port_P1 51: zweite Sende-/Empfangseinrichtung der Slave-Einheit
- TX 511: Sendeeinheit des Port_P1 51
- RX 512: Empfangseinheit des Port_P1 51
- 52: Verarbeitungseinrichtung
- 53: Datenverbindung
- 61: erster Kommunikationspfad
- 62: zweiter Kommunikationspfad
- 71: erster unidirektionaler Kommunikationspfad
- 72: zweiter unidirektionaler Kommunikationspfad
- 81: erster unidirektionaler Kommunikationspfad
- 82: zweiter unidirektionaler Kommunikationspfad
- 520: Telegramm-Verarbeitungseinheit
- 521: Kopplungseinrichtung
- 5211: erster Umschalter
- 5212: zweiter Umschalter

## Patentansprüche

1. Automatisierungssystem mit
einer Mehrzahl von Teilnehmern und einem ringförmigen Datenbus,
wobei die Teilnehmer eine erste Master-Einheit (1), einen ersten Verteiler (3), eine zweite Master-Einheit (2), einen zweiten Verteiler (4) und wenigstens eine Slave-Einheit (5) aufweisen, wobei die erste Master-Einheit (1) und die zweite Master-Einheit (2) jeweils eine Steuereinrichtung (11, 21) aufweisen, die ausgelegt ist, Telegramme zu erzeugen, wobei die Telegramme jeweils einen Steuerdatenblock mit einer individuellen Kennung und einen Nutzdatenblock aufweisen,
**dadurch gekennzeichnet, dass**
der erste Verteiler (3) eine Vermittlungseinrichtung (33), eine erste Sende-/Empfangseinrichtung (31) und eine zweite Sende-/Empfangseinrichtung (32) aufweist, wobei die Vermittlungseinrichtung (33) mit der Steuereinrichtung (11) der ersten Master-Einheit (1) und der ersten und zweiten Sende-/Empfangseinrichtung (31, 32) verbunden ist, um nach Auswerten von in den Telegrammen enthaltenen individuellen Kennungen auf der Grundlage einer in der Vermittlungseinrichtung (33) festgelegten ersten Vermittlungsregelung die Telegramme zwischen der Steuereinrichtung (11) der ersten Master-Einheit (1), der ersten Sende-/Empfangseinrichtung (31) und der zweiten Sende-/Empfangseinrichtung (32) zu übertragen,
wobei der zweite Verteiler (4) eine Vermittlungseinrichtung (43), eine erste Sende-/Empfangseinrichtung (41) und eine zweite Sende-/Empfangseinrichtung (42) aufweist, wobei die Vermittlungseinrichtung (43) mit der Steuereinrichtung (21) der zweiten Master-Einheit (2) und der ersten und zweiten Sende-/Empfangseinrichtung (41, 42) verbunden ist, um nach Auswerten von in den Telegrammen enthaltenen individuellen Kennungen auf der Grundlage einer in der Vermittlungseinrichtung (43) festgelegten zweiten Vermittlungsregelung die Telegramme zwischen der Steuereinrichtung (21) der zweiten Master-Einheit (2), der ersten Sende-/Empfangseinrichtung (41) und der zweiten Sende-/Empfangseinrichtung (42) zu übertragen,
wobei die ersten Sende-/Empfangseinrichtungen (31, 41) des ersten Verteilers (3) und des zweiten Verteilers (4) über den ringförmigen Datenbus (6) verbunden sind, um Telegramme zwischen den ersten Sende-/Empfangseinrichtungen (31, 41) des ersten Verteilers (3) und des zweiten Verteilers (4) zu übertragen,
wobei die zweiten Sende-/Empfangseinrichtungen (32, 42) des ersten Verteilers (3) und des zweiten Verteilers (4) über den ringförmigen Datenbus (6) verbunden sind, um Telegramme zwischen den zweiten Sende-/Empfangseinrichtungen (32, 42) des ersten Verteilers (3) und des zweiten Verteilers (4) zu übertragen,
wobei die Slave-Einheit (5) eine Verarbeitungseinrichtung (52), eine erste Sende-/Empfangseinrichtung (50) und eine zweite Sende-/Empfangseinrichtung (51) aufweist, wobei die Verarbeitungseinrichtung (52) mit der ersten Sende-/Empfangseinrichtung (50) und der zweiten Sende-/Empfangseinrichtung (51) verbunden und ausgelegt ist, um zwischen der ersten Sende-/Empfangseinrichtung (50) und der zweiten Sende-/Empfangseinrichtung (51) ausgetauschte Telegramme zu verarbeiten, und wobei die erste Sende-/Empfangseinrichtung (50) mit dem Datenbus (6) verbunden ist, um Telegramme auf dem Datenbus (6) mit der ersten Sende-/Empfangseinrichtung (31) des ersten Verteilers (3) auszutauschen, wobei die zweite Sende-/Empfangseinrichtung (51) mit dem Datenbus (6) verbunden ist, um Telegramme auf dem Datenbus (6) mit der ersten Sende-/Empfangseinrichtung (41) des zweiten Verteilers (4) auszutauschen, wobei in einem ersten Betriebsmodus
die in der Vermittlungseinrichtung (33) des ersten Verteilers (4) festgelegte erste Vermittlungsregelung von der ersten Master-Einheit (1) empfangene Telegramme zur ersten Sende-/Empfangseinrichtung (41) weiterleitet,
die in der Vermittlungseinrichtung (33) des ersten Verteilers (3) festgelegte erste Vermittlungsregelung durch die zweite Sende-/Empfangseinrichtung (32) empfangene Telegramme zur ersten Master-Einheit (1) weiterleitet,
und
die in der Vermittlungseinrichtung (43) des zweiten Verteilers (4) festgelegte zweite Vermittlungsregelung durch die erste Sende-/Empfangseinrichtung (41) empfangene erste Telegramme zur zweiten Sende-/Empfangseinrichtung (42) weiterleitet,
wobei in einem zweiten Betriebsmodus
die in der Vermittlungseinrichtung (43) des zweiten Verteilers (4) festgelegte zweite Vermittlungsregelung von der zweiten Master-Einheit (2) empfangene Telegramme zur zweiten Sende-/Empfangseinrichtung (42) weiterleitet,
die in der Vermittlungseinrichtung (43) des zweiten Verteilers (4) festgelegte zweite Vermittlungsregelung durch die erste Sende-/Empfangseinrichtung (41) empfangene Telegramme zur zweiten Master-Einheit (2) weiterleitet, und
die in der Vermittlungseinrichtung (33) des ersten Verteilers (3) festgelegte erste Vermittlungsregelung durch die zweite Sende-/Empfangseinrichtung (32) empfangenen Telegramme zur ersten Sende-/Empfangseinrichtung (31) weiterleitet.

2. Automatisierungssystem nach Anspruch 1,
wobei der Datenbus (6) einen ersten Kommunikationspfad (61) und einen zweiten Kommunikationspfad (62) umfasst,
wobei die ersten Sende-/Empfangseinrichtungen (31, 41) des ersten Verteilers (3) und des zweiten Verteilers (4) jeweils mit dem ersten Kommunikationspfad (61) und dem zweiten Kommunikationspfad (62) des Datenbusses (6) verbunden sind, um Telegramme auf dem ersten Kommunikationspfad (61) und dem zweiten Kommunikationspfad (62) des Datenbusses (6) zu übertragen,
wobei die erste Sende-/Empfangseinrichtung (50) der Slave-Einheit (5) mit dem ersten Kommunikationspfad (61) und dem zweiten Kommunikationspfad (62) des Datenbusses (6) verbunden sind, um Telegramme auf dem ersten Kommunikationspfad (61) und dem zweiten Kommunikationspfad (62) des Datenbusses (6) mit der ersten Sende-/Empfangseinrichtung (31) des ersten Verteilers (3) auszutauschen,
wobei die zweite Sende-/Empfangseinrichtung (51) der Slave-Einheit (5) mit dem ersten Kommunikationspfad (61) und dem zweiten Kommunikationspfad (62) des Datenbusses (6) verbunden ist, um Telegramme auf dem ersten Kommunikationspfad (61) und dem zweiten Kommunikationspfad (62) des Datenbusses (6) mit der ersten Sende-/Empfangseinrichtung (41) des zweiten Verteilers (4) auszutauschen,
wobei in dem ersten Betriebsmodus
die Steuereinrichtung (11) der ersten Master-Einheit (1) erste Telegramme mit einer ersten Kennung und zweite Telegramme mit einer zweiten Kennung, die einen identischen Nutzdatenblock aufweisen, erzeugt,
die in der Vermittlungseinrichtung (33) des ersten Verteilers (3) festgelegte erste Vermittlungsregelung von der ersten Master-Einheit (1) empfangene erste Telegramme zur ersten Sende-/Empfangseinrichtung (31) und von der ersten Master-Einheit (1) empfangene zweite Telegramme zur zweiten Sende-/Empfangseinrichtung (32) weiterleitet,
die in der Vermittlungseinrichtung (33) des ersten Verteilers (3) festgelegte erste Vermittlungsregelung durch die erste Sende-/Empfangseinrichtung (31) empfangene zweite Telegramme und durch die zweite Sende-/Empfangseinrichtung (32) empfangene erste Telegramme zur ersten Master-Einheit (1) weiterleitet,
die in der Vermittlungseinrichtung (43) des zweiten Verteilers (4) festgelegte zweite Vermittlungsregelung durch die zweite Sende-/Empfangseinrichtung (42) empfangene zweite Telegramme zur ersten Sende-/Empfangseinrichtung (41) weiterleitet, und
die in der Vermittlungseinrichtung (43) des zweiten Verteilers (4) festgelegte zweite Vermittlungsregelung durch die erste Sende-/Empfangseinrichtung (41) empfangene erste Telegramme zur zweiten Sende-/Empfangseinrichtung (42) weiterleitet,
wobei in dem zweiten Betriebsmodus
die Steuereinrichtung (21) der zweiten Master-Einheit (2) dritte Telegramme mit einer dritten Kennung und vierte Telegramme mit einer vierten Kennung, die einen identischen Nutzdatenblock aufweisen, erzeugt,
die in der Vermittlungseinrichtung (43) des zweiten Verteilers (4) festgelegte zweite Vermittlungsregelung von der zweiten Master-Einheit (2) empfangene dritte Telegramme zur zweiten Sende-/Empfangseinrichtung (42) und von der zweiten Master-Einheit (2) empfangene vierte Telegramme zur ersten Sende-/Empfangseinrichtung (41) weiterleitet,
die in der Vermittlungseinrichtung (43) des zweiten Verteilers (4) festgelegte zweite Vermittlungsregelung durch die erste Sende-/Empfangseinrichtung (41) empfangene dritte Telegramme und durch die zweite Sende-/Empfangseinrichtung (42) empfangene vierte Telegramme zur zweiten Master-Einheit (2) weiterleitet,
die in der Vermittlungseinrichtung (33) des ersten Verteilers (3) festgelegte erste Vermittlungsregelung durch die zweite Sende-/Empfangseinrichtung (32) empfangene dritte Telegramme zur ersten Sende-/Empfangseinrichtung (31) weiterleitet, und
die in der Vermittlungseinrichtung (33) des ersten Verteilers (3) festgelegte erste Vermittlungsregelung durch die erste Sende-/Empfangseinrichtung (31) empfangene vierte Telegramme zur zweiten Sende-/Empfangseinrichtung (32) weiterleitet.

3. Automatisierungssystem nach Anspruch 2,
wobei die Slave-Einheit (5) weiter eine Kopplungseinrichtung (521) aufweist, die ausgelegt ist, beim Auftreten eines Datenübertragungsfehlers zu dem mit der ersten Sende-/Empfangseinrichtung (50) verbundenen Teilnehmer den ersten Kommunikationspfad (61) und den zweiten Kommunikationspfad (62) in der ersten Sende-/Empfangseinrichtung (50) kurzzuschließen und beim Auftreten eines Datenübertragungsfehlers zu dem mit der zweiten Sende-/Empfangseinrichtung (51) verbundenen Teilnehmer den ersten Kommunikationspfad (61) und den zweiten Kommunikationspfad (62) in der zweiten Sende-/Empfangseinrichtung (51) kurzzuschließen,
wobei in dem ersten Betriebsmodus weiter
die in der Vermittlungseinrichtung (33) des ersten Verteilers (3) festgelegte erste Vermittlungsregelung durch die erste Sende-/Empfangseinrichtung (31) empfangene erste Telegramme und durch die zweite Sende-/Empfangseinrichtung (32) empfangene zweite Telegramme zur ersten Master-Einheit (1) weiterleitet, und
die in der Vermittlungseinrichtung (43) des zweiten Verteilers (4) festgelegte zweite Vermittlungsregelung durch die erste Sende-/Empfangseinrichtung (41) empfangene zweite Telegramme zur zweiten Sende-/Empfangseinrichtung (42) weiterleitet, und
wobei in dem zweiten Betriebsmodus weiter
die in der Vermittlungseinrichtung (33) des ersten Verteilers (3) festgelegte erste Vermittlungsregelung durch die erste Sende-/Empfangseinrichtung (31) empfangene dritte Telegramme zur zweiten Sende-/Empfangseinrichtung (32) weiterleitet, und
die in der Vermittlungseinrichtung (43) des zweiten Verteilers (4) festgelegte zweite Vermittlungsregelung durch die zweite Sende-/Empfangseinrichtung (42) empfangene dritte Telegramme und durch die erste Sende-/Empfangseinrichtung (42) empfangene vierte Telegramme zur zweiten Master-Einheit (2) weiterleitet.

4. Automatisierungssystem nach einem der Ansprüche 1 bis 3,
wobei der erste Betriebsmodus der Standard-Betriebsmodus ist, und
im ersten Betriebsmodus die in der Vermittlungseinrichtung (43) des zweiten Verteilers (4) festgelegte zweite Vermittlungsregelung durch die erste Sende-/Empfangseinrichtung (41) empfangene Telegramme zusätzlich zur zweiten Master-Einheit (2) weiterleitet.

5. Automatisierungssystem nach Anspruch 4,
wobei die Steuereinrichtung (21) der zweiten Master-Einheit (2) ausgelegt ist, den Standard-Betriebsmodus zu überwachen, um bei Feststellen einer Unterbrechung des Standard-Betriebsmodus den zweiten Betriebsmodus aufzunehmen.

6. Automatisierungssystem nach Anspruch 5,
wobei die Steuereinrichtung (21) der zweiten Master-Einheit (2) ausgelegt ist, bei einem Wiederaufnehmen des Standard-Betriebsmodus die im zweiten Betriebsmodus von der Steuereinrichtung (21) der zweiten Master-Einheit (2) empfangene Telegramme zur Steuereinrichtung (11) der ersten Master-Einheit (1) zu übertragen.

7. Verfahren zur Telegrammübertragung in einem Automatisierungssystem mit einer Mehrzahl von Teilnehmern und einem ringförmigen Datenbus,
wobei die Teilnehmer eine erste Master-Einheit (1), einen ersten Verteiler (3), eine zweite Master-Einheit (2), einen zweiten Verteiler (4) und wenigstens eine Slave-Einheit (5) aufweisen, wobei die erste Master-Einheit (1) und die zweite Master-Einheit (2) jeweils eine Steuereinrichtung (11, 21) aufweisen, die Telegramme erzeugt, wobei die Telegramme jeweils einen Steuerdatenblock mit einer individuellen Kennung und einen Nutzdatenblock aufweisen,
**dadurch gekennzeichnet, dass**
der erste Verteiler (3) eine Vermittlungseinrichtung (33), eine erste Sende-/Empfangseinrichtung (31) und eine zweite Sende-/Empfangseinrichtung (32) aufweist, wobei die Vermittlungseinrichtung (33) mit der Steuereinrichtung (11) der ersten Master-Einheit (1) und der ersten und zweiten Sende-/Empfangseinrichtung (31, 32) verbunden ist, um nach Auswerten von in den Telegrammen enthaltenen individuellen Kennungen auf der Grundlage einer in der Vermittlungseinrichtung (33) festgelegten ersten Vermittlungsregelung die Telegramme zwischen der Steuereinrichtung (11) der ersten Master-Einheit (1), der ersten Sende-/Empfangseinrichtung (31) und der zweiten Sende-/Empfangseinrichtung (32) zu übertragen,
wobei der zweite Verteiler (4) eine Vermittlungseinrichtung (43), eine erste Sende-/Empfangseinrichtung (41) und eine zweite Sende-/Empfangseinrichtung (42) aufweist, wobei die Vermittlungseinrichtung (43) mit einer Steuereinrichtung (21) der zweiten Master-Einheit (2) und der ersten und zweiten Sende-/Empfangseinrichtung (41, 42) verbunden ist, um nach Auswerten von in den Telegrammen enthaltenen individuellen Kennungen auf der Grundlage einer in der Vermittlungseinrichtung (43) festgelegten zweiten Vermittlungsregelung die Telegramme zwischen der Steuereinrichtung (21) der zweiten Master-Einheit (2), der ersten Sende-/Empfangseinrichtung (41) und der zweiten Sende-/Empfangseinrichtung (42) zu übertragen,
wobei die ersten Sende-/Empfangseinrichtungen (31, 41) des ersten Verteilers (3) und des zweiten Verteilers (4) über den ringförmigen Datenbus (6) verbunden sind, um Telegramme zwischen den ersten Sende-/Empfangseinrichtungen (31, 41) des ersten Verteilers (3) und des zweiten Verteilers (4) zu übertragen,
wobei die zweiten Sende-/Empfangseinrichtungen (32, 42) des ersten Verteilers (3) und des zweiten Verteilers (4) über den ringförmigen Datenbus (6) verbunden sind, um Telegramme zwischen den zweiten Sende-/Empfangseinrichtungen (32, 42) des ersten Verteilers (3) und des zweiten Verteilers (4) zu übertragen,
wobei die Slave-Einheit (5) eine Verarbeitungseinrichtung (52), eine erste Sende-/Empfangseinrichtung (50) und eine zweite Sende-/Empfangseinrichtung (51) aufweist, wobei die Verarbeitungseinrichtung (52) mit der ersten Sende-/Empfangseinrichtung (50) und der zweiten Sende-/Empfangseinrichtung (51) verbunden und ausgelegt ist, um zwischen der ersten Sende-/Empfangseinrichtung (50) und der zweiten Sende-/Empfangseinrichtung (51) ausgetauschte Telegramme zu verarbeiten, und wobei die erste Sende-/Empfangseinrichtung (50) mit dem Datenbus (6) verbunden ist, um Telegramme auf dem Datenbus (6) mit der ersten Sende-/Empfangseinrichtung (31) des ersten Verteilers (3) auszutauschen, wobei die zweite Sende-/Empfangseinrichtung (51) mit dem Datenbus (6) verbunden ist, um Telegramme auf dem Datenbus (6) mit der ersten Sende-/Empfangseinrichtung (41) des zweiten Verteilers (4) auszutauschen,
wobei in einem ersten Betriebsmodus
die in der Vermittlungseinrichtung (33) des ersten Verteilers (3) festgelegte erste Vermittlungsregelung von der ersten Master-Einheit (1) empfangene Telegramme zur ersten Sende-/Empfangseinrichtung (41) weiterleitet,
die in der Vermittlungseinrichtung (33) des ersten Verteilers (3) festgelegte erste Vermittlungsregelung durch die zweite Sende-/Empfangseinrichtung (32) empfangene Telegramme zur ersten Master-Einheit (1) weiterleitet,
und
die in der Vermittlungseinrichtung (43) des zweiten Verteilers (4) festgelegte zweite Vermittlungsregelung durch die erste Sende-/Empfangseinrichtung (41) empfangene erste Telegramme zur zweiten Sende-/Empfangseinrichtung (42) weiterleitet,
wobei in einem zweiten Betriebsmodus
die in der Vermittlungseinrichtung (43) des zweiten Verteilers (4) festgelegte zweite Vermittlungsregelung von der zweiten Master-Einheit (2) empfangene Telegramme zur zweiten Sende-/Empfangseinrichtung (42) weiterleitet,
die in der Vermittlungseinrichtung (43) des zweiten Verteilers (4) festgelegte zweite Vermittlungsregelung durch die erste Sende-/Empfangseinrichtung (41) empfangene Telegramme zur zweiten Master-Einheit (2) weiterleitet, und
die in der Vermittlungseinrichtung (33) des ersten Verteilers (3) festgelegte erste Vermittlungsregelung durch die zweite Sende-/Empfangseinrichtung (32) empfangenen Telegramme zur ersten Sende-/Empfangseinrichtung (31) weiterleitet.

8. Verfahren nach Anspruch 7,
wobei der Datenbus (6) einen ersten Kommunikationspfad (61) und einen zweiten Kommunikationspfad (62) umfasst,
wobei die ersten Sende-/Empfangseinrichtungen (31, 41) des ersten Verteilers (3) und des zweiten Verteilers (4) jeweils mit dem ersten Kommunikationspfad (61) und dem zweiten Kommunikationspfad (62) des Datenbusses (6) verbunden sind, um Telegramme auf dem ersten Kommunikationspfad (61) und dem zweiten Kommunikationspfad (62) des Datenbusses (6) zu übertragen,
wobei die erste Sende-/Empfangseinrichtung (50) der Slave-Einheit (5) mit dem ersten Kommunikationspfad (61) und dem zweiten Kommunikationspfad (62) des Datenbusses (6) verbunden sind, um Telegramme auf dem ersten Kommunikationspfad (61) und dem zweiten Kommunikationspfad (62) des Datenbusses (6) mit der ersten Sende-/Empfangseinrichtung (31) des ersten Verteilers (3) auszutauschen,
wobei die zweite Sende-/Empfangseinrichtung (51) der Slave-Einheit (5) mit dem ersten Kommunikationspfad (61) und dem zweiten Kommunikationspfad (62) des Datenbusses (6) verbunden ist, um Telegramme auf dem ersten Kommunikationspfad (61) und dem zweiten Kommunikationspfad (62) des Datenbusses (6) mit der ersten Sende-/Empfangseinrichtung (41) des zweiten Verteilers (4) auszutauschen,
wobei in dem ersten Betriebsmodus
die Steuereinrichtung (11) der ersten Master-Einheit (1) erste Telegramme mit einer ersten Kennung und zweite Telegramme mit einer zweiten Kennung, die einen identischen Nutzdatenblock aufweisen, erzeugt,
die in der Vermittlungseinrichtung (33) des ersten Verteilers (3) festgelegte erste Vermittlungsregelung von der ersten Master-Einheit (1) empfangene erste Telegramme zur ersten Sende-/Empfangseinrichtung (31) und von der ersten Master-Einheit (1) empfangene zweite Telegramme zur zweiten Sende-/Empfangseinrichtung (32) weiterleitet,
die in der Vermittlungseinrichtung (33) des ersten Verteilers (3) festgelegte erste Vermittlungsregelung durch die erste Sende-/Empfangseinrichtung (31) empfangene zweite Telegramme und durch die zweite Sende-/Empfangseinrichtung (32) empfangene erste Telegramme zur ersten Master-Einheit (1) weiterleitet,
die in der Vermittlungseinrichtung (43) des zweiten Verteilers (4) festgelegte zweite Vermittlungsregelung durch die zweite Sende-/Empfangseinrichtung (42) empfangene zweite Telegramme zur ersten Sende-/Empfangseinrichtung (41) weiterleitet, und
die in der Vermittlungseinrichtung (43) des zweiten Verteilers (4) festgelegte zweite Vermittlungsregelung durch die erste Sende-/Empfangseinrichtung (41) empfangene erste Telegramme zur zweiten Sende-/Empfangseinrichtung (42) weiterleitet,
wobei in dem zweiten Betriebsmodus
die Steuereinrichtung (21) der zweiten Master-Einheit (2) dritte Telegramme mit einer dritten Kennung und vierte Telegramme mit einer vierten Kennung, die einen identischen Nutzdatenblock aufweisen, erzeugt,
die in der Vermittlungseinrichtung (43) des zweiten Verteilers (4) festgelegte zweite Vermittlungsregelung von der zweiten Master-Einheit (2) empfangene dritte Telegramme zur zweiten Sende-/Empfangseinrichtung (42) und von der zweiten Master-Einheit (2) empfangene vierte Telegramme zur ersten Sende-/Empfangseinrichtung (41) weiterleitet,
die in der Vermittlungseinrichtung (43) des zweiten Verteilers (4) festgelegte zweite Vermittlungsregelung durch die erste Sende-/Empfangseinrichtung (41) empfangene dritte Telegramme und durch die zweite Sende-/Empfangseinrichtung (42) empfangene vierte Telegramme zur zweiten Master-Einheit (2) weiterleitet,
die in der Vermittlungseinrichtung (33) des ersten Verteilers (3) festgelegte erste Vermittlungsregelung durch die zweite Sende-/Empfangseinrichtung (32) empfangene dritte Telegramme zur ersten Sende-/Empfangseinrichtung (31) weiterleitet, und
die in der Vermittlungseinrichtung (33) des ersten Verteilers (3) festgelegte erste Vermittlungsregelung durch die erste Sende-/Empfangseinrichtung (31) empfangene vierte Telegramme zur zweiten Sende-/Empfangseinrichtung (32) weiterleitet.

9. Verfahren nach Anspruch 8,
wobei die Slave-Einheit (5) weiter eine Kopplungseinrichtung (521) aufweist, die beim Auftreten eines Datenübertragungsfehlers zu dem mit der ersten Sende-/Empfangseinrichtung (50) verbundenen Teilnehmer den ersten Kommunikationspfad (61) und den zweiten Kommunikationspfad (62) in der ersten Sende-/Empfangseinrichtung (50) kurzschließt und beim Auftreten eines Datenübertragungsfehlers zu dem mit der zweiten Sende-/Empfangseinrichtung (51) verbundenen Teilnehmer den ersten Kommunikationspfad (61) und den zweiten Kommunikationspfad (62) in der zweiten Sende-/Empfangseinrichtung (51) kurzschließt,
wobei in dem ersten Betriebsmodus weiter
die in der Vermittlungseinrichtung (33) des ersten Verteilers (3) festgelegte erste Vermittlungsregelung durch die erste Sende-/Empfangseinrichtung (31) empfangene erste Telegramme und durch die zweite Sende-/Empfangseinrichtung (32) empfangene zweite Telegramme zur ersten Master-Einheit (1) weiterleitet, und
die in der Vermittlungseinrichtung (43) des zweiten Verteilers (4) festgelegte zweite Vermittlungsregelung durch die erste Sende-/Empfangseinrichtung (41) empfangene zweite Telegramme zur zweiten Sende-/Empfangseinrichtung (42) weiterleitet, und
wobei in dem zweiten Betriebsmodus weiter
die in der Vermittlungseinrichtung (33) des ersten Verteilers (3) festgelegte erste Vermittlungsregelung durch die erste Sende-/Empfangseinrichtung (31) empfangene dritte Telegramme zur zweiten Sende-/Empfangseinrichtung (32) weiterleitet, und
die in der Vermittlungseinrichtung (43) des zweiten Verteilers (4) festgelegte zweite Vermittlungsregelung durch die zweite Sende-/Empfangseinrichtung (42) empfangene dritte Telegramme und durch die erste Sende-/Empfangseinrichtung (42) empfangene vierte Telegramme zur zweiten Master-Einheit (2) weiterleitet.

10. Verfahren nach einem der Ansprüche 7 bis 9,
wobei der erste Betriebsmodus der Standard-Betriebsmodus ist, und
im ersten Betriebsmodus die in der Vermittlungseinrichtung (43) des zweiten Verteilers (4) festgelegte zweite Vermittlungsregelung durch die erste Sende-/Empfangseinrichtung (41) empfangene Telegramme zusätzlich zur zweiten Master-Einheit (2) weiterleitet.

11. Verfahren nach Anspruch 10,
wobei die Steuereinrichtung (21) der zweiten Master-Einheit (2) den Standard-Betriebsmodus überwacht, um bei Feststellen einer Unterbrechung des Standard-Betriebsmodus den zweiten Betriebsmodus aufzunehmen.

12. Verfahren nach Anspruch 11,
wobei die Steuereinrichtung (21) der zweiten Master-Einheit (2) bei einem Wiederaufnehmen des Standard-Betriebsmodus die im zweiten Betriebsmodus von der Steuereinrichtung (21) der zweiten Master-Einheit (2) empfangene Telegramme zur Steuereinrichtung (11) der ersten Master-Einheit (1) überträgt.

## Claims

1. An automation system comprising
a plurality of subscribers and a ring-shaped data bus,
wherein the subscribers comprise a first master unit (1), a first distributor (3), a second master unit (2), a second distributor (4) and at least a slave unit (5),
wherein the first master unit (1) and the second master unit (2) each comprise a controller (11, 21) embodied to generate telegrams, wherein the telegrams each comprise a control data block having an individual identifier and a user data block,
**characterized in that**
the first distributor (3) comprises a switching device (33), a first transmitting/receiving device (31) and a second transmitting/receiving device (32), wherein the switching device (33) is connected to the controller (11) of the first master unit (1) and to the first and second transmitting/receiving devices (31, 32) to transmit the telegrams between the controller (11) of the first master unit (1), the first transmitting/receiving device (31) and the second transmitting/receiving device (32) after evaluating individual identifiers contained in the telegrams on the basis of a first switching control set defined in the switching device (33),
wherein the second distributor (4) comprises a switching device (43), a first transmitting/receiving device (41) and a second transmitting/receiving device (42), wherein the switching device (43) is connected to the controller (21) of the second master unit (2) and to the first and second transmitting/receiving device (41, 42) to transmit the telegrams between the controller (21) of the second master unit (2), the first transmitting/receiving devices (41) and of the second transmitting/receiving device (42) after evaluating individual identifiers contained in the telegrams on the basis of a second switching control set defined in the switching device (43),
wherein the first transmitting/receiving device (31, 41) of the first distributor (3) and the second distributor (4) are connected via the ring-shaped data bus (6) in order to transmit telegrams between the first transmitting/receiving devices (31, 41) of the first distributor (3) and of the second distributor (4),
wherein the second transmitting/receiving devices (32, 42) of the first distributor (3) and of the second distributor (4) are connected via the ring-shaped data bus (6) in order to transmit telegrams between the second transmitting/receiving device (32, 42) of the first distributor (3) and of the second distributor (4),
wherein the slave unit (5) comprises a processing device (52), a first transmitting/receiving device (50) and a second transmitting/receiving device (51), wherein the processing device (52) is connected to the first transmitting/receiving device (50) and the second transmitting/receiving device (51) and is embodied to process telegrams exchanged between the first transmitting/receiving device (50) and the second transmitting/receiving device (51), and wherein the first transmitting/receiving device (50) is connected to the data bus (6) to exchange telegrams on the data bus (6) with the first transmitting/receiving device (31) of the first distributor (3), wherein the second transmitting/receiving device (51) is connected to the data bus (6) in order to exchange telegrams on the data bus (6) with the first transmitting/receiving device (41) of the second distributor (4),
wherein in a first operating mode,
the first switching control set defined in the switching device (433) of the first distributor (4) forwards telegrams received from the first master unit (1) to the first transmitting/receiving device (41),
the first switching control set defined in the switching device (33) of the first distributor (3) forwards telegrams received via the second transmitting/receiving device (32) to the first master unit (1),
and
the second switching control set defined in the switching device (43) of the second distributor (4) forwards first telegrams received via the first transmitting/receiving device (41) to the second transmitting/receiving device (42),
wherein in a second operating mode,
the second switching control set defined in the switching device (43) of the second distributor (4) forwards telegrams received from the second master unit (2) to the second transmitting/receiving device (42),
wherein the second switching control set defined in the switching device (43) of the second distributor (4) forwards telegrams received via the first transmitting/receiving device (41) to the second master unit (2), and
the first switching control set defined in the switching device (33) of the first distributor (3) forwards telegrams received via the second transmitting/receiving device (32) to the first transmitting/receiving device (31).

2. The automation system according to claim 1,
wherein the data bus (6) comprises a first communication path (61) and a second communication path (62),
wherein the first transmitting/receiving devices (31, 41) of the first distributor (3) and of the second distributor (4) are respectively connected to the first communication path (61) and the second communication path (62) of the data bus (6) to transmit telegrams on the first communication path (61) and the second communication path (62) of the data bus (6),
wherein the first transmitting/receiving device (50) of the slave unit (5) is connected to the first communication path (61) and the second communication path (62) of the data bus (6) to exchange telegrams on the first communication path (61) and on the second communication path (62) of the data bus (6) with the first transmitting/receiving device (31) of the first distributor (3), wherein the second transmitting/receiving device (51) of the slave unit (5) is connected to the first communication path (61) and to the second communication path (62) of the data bus (6) in order to exchange telegrams on the first communication path (61) and on the second communication path (62) of the data bus (6) with the first transmitting/receiving device (41) of the second distributor (4),
wherein in the first operating mode,
the controller (11) of the first master unit (1) generates first telegrams having a first identifier and second telegrams having a second identifier, which comprise an identical user data block,
the first switching control set defined in the switching device (33) of the first distributor (3) forwards first telegrams received from the first master unit (1) to the first transmitting/receiving device (31) and second telegrams received from the first master unit (1) to the second transmitting/receiving device (32),
the first switching control set defined in the switching device (33) of the first distributor (3) forwards second telegrams received via the first transmitting/receiving device (31) and first telegrams received via the second transmitting/receiving device (32) to the first master unit (1), the second switching control set defined in the switching device (43) of the second distributor (4) forwards second telegrams received via the second transmitting/receiving device (42) to the first transmitting/receiving device (41), and
the second switching control set defined in the switching device (43) of the second distributor (4) forwards first telegrams received via the first transmitting/receiving device (41) to the second transmitting/receiving device (42),
wherein in the second operating mode
the controller (21) of the second master unit (2) generates third telegrams having a third identifier and fourth telegrams having a fourth identifier, which comprise an identical user data block, the second switching control set defined in the switching device (43) of the second distributor (4) forwards third telegrams received from the second master unit (2) to the second transmitting/receiving device (42) and fourth telegrams received from the second master unit (2) to the first transmitting/receiving device (41),
the second switching control set defined in the switching device (43) of the second distributor (4) forwards third telegrams received via the first transmitting/receiving device (41) and fourth telegrams received via the second transmitting/receiving device (42) to the second master unit (2),
the first switching control set defined in the switching device (33) of the first distributor (3) forwards third telegrams received via the second transmitting/receiving device (32) to the first transmitting/receiving device (31), and
the first switching control set defined in the switching device (33) of the first distributor (3) forwards fourth telegrams received via the first transmitting/receiving device (31) to the second transmitting/receiving device (32).

3. The automation system according to claim 2,
wherein the slave unit (5) further comprises a coupling device (521) embodied to short-circuit the first communication path (61) and the second communication path (62) in the first transmitting/receiving device (50) when an error occurs while transmitting data to the subscriber connected to the first transmitting/receiving device (50), , and to short-circuit the first communication path (61) and the second communication path (62) in the second transmitting/receiving device (51) when an error occurs while transmitting data to the subscriber connected to the second transmitting/receiving device (51),
wherein furthermore in the first operation mode,
the first switching control set defined in the switching device (33) of the first distributor (3) forwards first telegrams received via the first transmitting/receiving device (31) and second telegrams received via the second transmitting/receiving device (32) to the first master unit (1), and the second switching control set defined in the switching device (43) of the second distributor (4) forwards second telegrams received via the first transmitting/receiving device (41) to the second transmitting/receiving device (42), and
wherein furthermore in the second operating mode,
the first switching control set defined in the switching device (33) of the first distributor (3) forwards third telegrams received via the first transmitting/receiving device (31) to the second transmitting/receiving device (32), and
the second switching control set defined in the switching device (43) of the second distributor (4) forwards third telegrams received via the second transmitting/receiving device (42) and fourth telegrams received via the first transmitting/receiving device (42) to the second master unit (2).

4. The automation system according to any one of claims 1 to 3,
wherein the first operating mode is the standard operating mode, and
in the first operating mode, the second switching control set defined in the switching device (43) of the second distributor (4) additionally forwards telegrams received via the first transmitting/receiving device (41) to the second master unit (2).

5. The automation system according to claim 4,
wherein the controller (21) of the second master unit (2) is embodied to monitor the standard operating mode to take up the second operating mode upon detecting an interruption of the standard operating mode.

6. The automation system according to claim 5,
wherein the controller (21) of the second master unit (2) is embodied to transmit the telegrams received in the second operating mode from the controller (21) of the second master unit (2) to the controller (11) of the first master unit (1) when the standard operating mode is resumed.

7. A method for transmitting telegrams in an automation system having a plurality of subscribers and a ring-shaped data bus,
wherein the subscribers comprise a first master unit (1), a first distributor (3), a second master unit (2), a second distributor (4) and at least a slave unit (5),
wherein the first master unit (1) and the second master unit (2) each comprise a controller (11, 21) which generates telegrams, wherein the telegrams each comprise a control data block having with an individual identifier and a user data block,
**characterized in that**
the first distributor (3) comprises a switching device (33), a first transmitting/receiving device (31) and a second transmitting/receiving device (32), wherein the switching device (33) is connected to the controller (11) of the first master unit (1) and to the first and second transmitting/receiving devices (31, 32) to transmit the telegrams between the controller (11) of the first master unit (1), the first transmitting/receiving device (31) and the second transmitting/receiving device (32) after evaluating individual identifiers contained in the telegrams on the basis of a first switching control set defined in the switching device (33),
wherein the second distributor (4) comprises a switching device (43), a first transmitting/receiving device (41) and a second transmitting/receiving device (42), wherein the switching device (43) is connected to a controller (21) of the second master unit (2) and of the first and second transmitting/receiving device (41, 42) to transmit the telegrams between the controller (21) of the second master unit (2), the first transmitting/receiving device (41) and the second transmitting/receiving device (42) after evaluating individual identifiers contained in the telegrams on the basis of a second switching control set defined in the switching device (43),
wherein the first transmitting/receiving device (31, 41) of the first distributor (3) and of the second distributor (4) are connected via the ring-shaped data bus (6) to transmit telegrams between the first transmitting/receiving devices (31, 41) of the first distributor (3) and of the second distributor (4),
wherein the second transmitting/receiving devices (32, 42) of the first distributor (3) and of the second distributor (4) are connected via the ring-shaped data bus (6) in order to transmit telegrams between the second transmitting/receiving device (32, 42) of the first distributor (3) and of the second distributor (4),
wherein the slave unit (5) comprises a processing device (52), a first transmitting/receiving device (50) and a second transmitting/receiving device (51), wherein the processing device (52) is connected to the first transmitting/receiving device (50) and to the second transmitting/receiving device (51) and is embodied to process telegrams exchanged between the first transmitting/receiving device (50) and the second transmitting/receiving device (51), and wherein the first transmitting/receiving device (50) is connected to the data bus (6) to exchange telegrams with the first transmitting/receiving device (31) of the first distributor (3) on the data bus (6), wherein the second transmitting/receiving device (51) is connected to the data bus (6) in order to exchange telegrams with the first transmitting/receiving device (41) of the second distributor (4) on the data bus (6),
wherein in a first operating mode,
the first switching control set defined in the switching device (33) of the first distributor (3) forwards telegrams received from the first master unit (1) to the first transmitting/receiving device (41),
the first switching control set defined in the switching device (33) of the first distributor (3) forwards telegrams received via the second transmitting/receiving device (32) to the first master unit (1),
and
the second switching control set defined in the switching device (43) of the second distributor (4) forwards first telegrams received via the first transmitting/receiving device (41) to the second transmitting/receiving device (42),
wherein in a second operating mode,
the second switching control set defined in the switching device (43) of the second distributor (4) forwards telegrams received via the second master unit (2) to the second transmitting/receiving device (42),
the second switching control set defined in the switching device (43) of the second distributor (4) forwards telegrams received via the first transmitting/receiving device (41) to the second master unit (2), and
the first switching control set defined in the switching device (33) of the first distributor (3) forwards telegrams received via the second transmitting/receiving device (32) to the first transmitting/receiving device (31).

8. The method according to claim 7,
wherein the data bus (6) comprises a first communication path (61) and a second communication path (62),
wherein the first transmitting/receiving devices (31, 41) of the first distributor (3) and of the second distributor (4) are each connected to the first communication path (61) and the second communication path (62) of the data bus (6) to transmit on the first communication path (61) and on the second communication path (62) of the data bus (6),
wherein the first transmitting/receiving device (50) of the slave unit (5) is connected to the first communication path (61) and to the second communication path (62) of the data bus (6) to exchange telegrams on the first communication path (61) and on the second communication path (62) of the data bus (6) with the first transmitting/receiving device (31) of the first distributor (3), wherein the second transmitting/receiving device (51) of the slave unit (5) is connected to the first communication path (61) and to the second communication path (62) of the data bus (6) in order to exchange telegrams on the first communication path (61) and the second communication path (62) of the data bus (6) with the first transmitting/receiving device (41) of the second distributor (4),
wherein in the first operating mode,
the controller (11) of the first master unit (1) generates first telegrams having a first identifier and second telegrams having a second identifier, which have an identical user data block,
the first switching control set defined in the switching device (33) of the first distributor (3) forwards first telegrams received from the first master unit (1) to the first transmitting/receiving device (31) and second telegrams received from the first master unit (1) to the second transmitting/receiving device (32),
the first switching control set defined in the switching device (33) of the first distributor (3) forwards second telegrams received via the first transmitting/receiving device (31) and first telegrams received via the second transmitting/receiving device (32) to the first master unit (1), the second switching control set defined in the switching device (43) of the second distributor (4) forwards second telegrams received via the second transmitting/receiving device (42) to the first transmitting/receiving device (41), and
the second switching control set defined in the switching device (43) of the second distributor (4) forwards first telegrams received via the first transmitting/receiving device (41) to the second transmitting/receiving device (42),
wherein in the second operating mode,
the controller (21) of the second master unit (2) generates third telegrams having a third identifier and fourth telegrams having a fourth identifier, which have an identical user data block, the second switching control set defined in the switching device (43) of the second distributor (4) forwards third telegrams received from the second master unit (2) to the second transmitting/receiving device (42) and fourth telegrams received from the second master unit (2) to the first transmitting/receiving device (41)
the second switching control set defined in the switching device (43) of the second distributor (4) forwards third telegrams received via the first transmitting/receiving device (41) and fourth telegrams received via the second transmitting/receiving device (42) to the second master unit (2),
the first switching control set defined in the switching device (33) of the first distributor (3) forwards third telegrams received via the second transmitting/receiving device (32) to the first transmitting/receiving device (31), and
the first switching control set defined in the switching device (33) of the first distributor (3) forwards fourth telegrams received via the first transmitting/receiving device (31) to the second transmitting/receiving device (32).

9. The method according to claim 8,
wherein the slave unit (5) further comprises a coupling device (521) which short-circuits the first communication path (61) and the second communication path (62) in the first transmitting/receiving device (50) when an error occurs while transmitting data to the subscriber connected to the first transmitting/receiving device (50), and short-circuits the first communication path (61) and the second communication path (62) in the second transmitting/receiving device (51) when an error occurs while transmitting data to the subscriber connected to the second transmitting/receiving device (51),
wherein furthermore in the first operation mode,
the first switching control set defined in the switching device (33) of the first distributor (3) forwards first telegrams received via the first transmitting/receiving device (31) and second telegrams received via the second transmitting/receiving device (32) to the first master unit (1), and the second switching control set defined in the switching device (43) of the second distributor (4) forwards second telegrams received via the first transmitting/receiving device (41) to the second transmitting/receiving device (42), and
wherein furthermore in the second operating mode,
the first switching control set defined in the switching device (33) of the first distributor (3) forwards third telegrams received via the first transmitting/receiving device (31) to the second transmitting/receiving device (32), and
the second switching control set defined in the switching device (43) of the second distributor (4) forwards third telegrams received via the second transmitting/receiving device (42) and fourth telegrams received via the first transmitting/receiving device (42) to the second master unit (2).

10. The method according to any one of claims 7 to 9,
wherein the first operating mode is the standard operating mode, and
in the first operating mode, the second switching control set defined in the switching device (43) of the second distributor (4) additionally forwards telegrams received via the first transmitting/receiving device (41) to the second master unit (2).

11. The method according to claim 10,
wherein the controller (21) of the second master unit (2) monitors the standard operating mode to take up the second operating mode if an interruption of the standard operating mode is detected.

12. The method according to claim 11,
wherein the controller (21) of the second master unit (2), upon a resumption of the standard operating mode, transmits the telegrams received in the second operating mode from the controller (21) of the second master unit (2) to the controller (11) of the first master unit (1).

## Revendications

1. Système d'automatisation comprenant
une pluralité d'abonnés et un bus de données en anneau, dans lequel les abonnés comportent une première unité maître (1), un premier distributeur (3), une deuxième unité maître (2), un deuxième distributeur (4) et au moins une unité esclave (5),
dans lequel la première unité maître (1) et la deuxième unité maître (2) comportent chacune un dispositif de commande (11, 21) qui est conçu pour générer des télégrammes, dans lequel les télégrammes comportent chacun un bloc de données de commande ayant un identifiant individuel et un bloc de données utiles, **caractérisé en ce que**
le premier distributeur (3) comporte un dispositif de commutation (33), un premier dispositif émetteur-récepteur (31) et un deuxième dispositif émetteur-récepteur (32), dans lequel le dispositif de commutation (33) est relié au dispositif de commande (11) de la première unité maître (1) et aux premier et deuxième dispositifs émetteurs-récepteurs (31, 32) pour transmettre les télégrammes entre le dispositif de commande (11) de la première unité maître (1), le premier dispositif émetteur-récepteur (31) et le deuxième dispositif émetteur-récepteur (32) après évaluation d'identifiants individuels contenus dans les télégrammes sur la base d'une première règle de commutation définie dans le dispositif de commutation (33),
dans lequel le deuxième distributeur (4) comporte un dispositif de commutation (43), un premier dispositif émetteur-récepteur (41) et un deuxième dispositif émetteur-récepteur (42), dans lequel le dispositif de commutation (43) est relié au dispositif de commande (21) de la deuxième unité maître (2) et aux premier et deuxième dispositifs émetteurs-récepteurs (41, 42) pour transmettre les télégrammes entre le dispositif de commande (21) de la deuxième unité maître (2), le premier dispositif émetteur-récepteur (41) et le deuxième dispositif émetteur-récepteur (42) après évaluation d'identifiants individuels contenus dans les télégrammes sur la base d'une deuxième règle de commutation définie dans le dispositif de commutation (43),
dans lequel les premiers dispositifs émetteurs-récepteurs (31, 41) du premier distributeur (3) et du deuxième distributeur (4) sont reliés par l'intermédiaire du bus de données en anneau (6) pour transmettre des télégrammes entre les premiers dispositifs émetteurs-récepteurs (31, 41) du premier distributeur (3) et du deuxième distributeur (4),
dans lequel les deuxièmes dispositifs émetteurs-récepteurs (32, 42) du premier distributeur (3) et du deuxième distributeur (4) sont reliés par l'intermédiaire du bus de données en anneau (6) pour transmettre des télégrammes entre les deuxièmes dispositifs émetteurs-récepteurs (32, 42) du premier distributeur (3) et du deuxième distributeur (4),
dans lequel l'unité esclave (5) comporte un dispositif de traitement (52), un premier dispositif émetteur-récepteur (50) et un deuxième dispositif émetteur-récepteur (51), dans lequel le dispositif de traitement (52) est relié au premier dispositif émetteur-récepteur (50) et au deuxième dispositif émetteur-récepteur (51) et est conçu pour traiter des télégrammes échangés entre le premier dispositif émetteur-récepteur (50) et le deuxième dispositif émetteur-récepteur (51), et dans lequel le premier dispositif émetteur-récepteur (50) est relié au bus de données (6) pour échanger des télégrammes sur le bus de données (6) avec le premier dispositif émetteur-récepteur (31) du premier distributeur (3), dans lequel le deuxième dispositif émetteur-récepteur (51) est relié au bus de données (6) pour échanger des télégrammes sur le bus de données (6) avec le premier dispositif émetteur-récepteur (41) du deuxième distributeur (4), dans lequel, dans un premier mode de fonctionnement,
la première règle de commutation définie dans le dispositif de commutation (33) du premier distributeur (4) retransmet des télégrammes reçus de la première unité maître (1) au premier dispositif émetteur-récepteur (41), la première règle de commutation définie dans le dispositif de commutation (33) du premier distributeur (3) retransmet des télégrammes reçus par le deuxième dispositif émetteur-récepteur (32) à la première unité maître (1), et
la deuxième règle de commutation définie dans le dispositif de commutation (43) du deuxième distributeur (4) retransmet des premiers télégrammes reçus par le premier dispositif émetteur-récepteur (41) au deuxième dispositif émetteur-récepteur (42),
dans lequel, dans un deuxième mode de fonctionnement,
la deuxième règle de commutation définie dans le dispositif de commutation (43) du deuxième distributeur (4) retransmet des télégrammes reçus de la deuxième unité maître (2) au deuxième dispositif émetteur-récepteur (42),
la deuxième règle de commutation définie dans le dispositif de commutation (43) du deuxième distributeur (4) retransmet des télégrammes reçus par le premier dispositif émetteur-récepteur (41) à la deuxième unité maître (2), et
la première règle de commutation définie dans le dispositif de commutation (33) du premier distributeur (3) retransmet des télégrammes reçus par le deuxième dispositif émetteur-récepteur (32) au premier dispositif émetteur-récepteur (31).

2. Système d'automatisation selon la revendication 1, dans lequel le bus de données (6) comprend une première voie de communication (61) et une deuxième voie de communication (62),
dans lequel les premiers dispositifs émetteurs-récepteurs (31, 41) du premier distributeur (3) et du deuxième distributeur (4) sont respectivement reliés à la première voie de communication (61) et à la deuxième voie de communication (62) du bus de données (6) pour transmettre des télégrammes sur la première voie de communication (61) et la deuxième voie de communication (62) du bus de données (6),
dans lequel le premier dispositif émetteur-récepteur (50) de l'unité esclave (5) est relié à la première voie de communication (61) et à la deuxième voie de communication (62) du bus de données (6) pour échanger des télégrammes sur la première voie de communication (61) et la deuxième voie de communication (62) du bus de données (6) avec le premier dispositif émetteur-récepteur (31) du premier distributeur (3),
dans lequel le deuxième dispositif émetteur-récepteur (51) de l'unité esclave (5) est relié à la première voie de communication (61) et à la deuxième voie de communication (62) du bus de données (6) pour échanger des télégrammes sur la première voie de communication (61) et la deuxième voie de communication (62) du bus de données (6) avec le premier dispositif émetteur-récepteur (41) du deuxième distributeur (4),
dans lequel, dans le premier mode de fonctionnement,
le dispositif de commande (11) de la première unité maître (1) génère des premiers télégrammes avec un premier identifiant et des deuxièmes télégrammes avec un deuxième identifiant, qui comportent un bloc de données utiles identique,
la première règle de commutation définie dans le dispositif de commutation (33) du premier distributeur (3) retransmet des premiers télégrammes reçus de la première unité maître (1) au premier dispositif émetteur-récepteur (31) et des deuxièmes télégrammes reçus de la première unité maître (1) au deuxième dispositif émetteur-récepteur (32),
la première règle de commutation définie dans le dispositif de commutation (33) du premier distributeur (3) retransmet des deuxièmes télégrammes reçus par le premier dispositif émetteur-récepteur (31) et des premiers télégrammes reçus par le deuxième dispositif émetteur-récepteur (32) à la première unité maître (1), la deuxième règle de commutation définie dans le dispositif de commutation (43) du deuxième distributeur (4) retransmet des deuxièmes télégrammes reçus par le deuxième dispositif émetteur-récepteur (42) au premier dispositif émetteur-récepteur (41), et
la deuxième règle de commutation définie dans le dispositif de commutation (43) du deuxième distributeur (4) retransmet des premiers télégrammes reçus par le premier dispositif émetteur-récepteur (41) au deuxième dispositif émetteur-récepteur (42),
dans lequel, dans le deuxième mode de fonctionnement,
le dispositif de commande (21) de la deuxième unité maître (2) génère des troisièmes télégrammes avec un troisième identifiant et des quatrièmes télégrammes avec un quatrième identifiant, qui comportent un bloc de données utiles identique,
la deuxième règle de commutation définie dans le dispositif de commutation (43) du deuxième distributeur (4) retransmet des troisièmes télégrammes reçus de la deuxième unité maître (2) au deuxième dispositif émetteur-récepteur (42) et des quatrièmes télégrammes reçus de la deuxième unité maître (2) au premier dispositif émetteur-récepteur (41),
la deuxième règle de commutation définie dans le dispositif de commutation (43) du deuxième distributeur (4) retransmet des troisièmes télégrammes reçus par le premier dispositif émetteur-récepteur (41) et des quatrièmes télégrammes reçus par le deuxième dispositif émetteur-récepteur (42) à la deuxième unité maître (2), la première règle de commutation définie dans le dispositif de commutation (33) du premier distributeur (3) retransmet des troisièmes télégrammes reçus par le deuxième dispositif émetteur-récepteur (32) au premier dispositif émetteur-récepteur (31), et
la première règle de commutation définie dans le dispositif de commutation (33) du premier distributeur (3) retransmet des quatrièmes télégrammes reçus par le premier dispositif émetteur-récepteur (31) au deuxième dispositif émetteur-récepteur (32).

3. Système d'automatisation selon la revendication 2, dans lequel l'unité esclave (5) comporte en outre un dispositif de couplage (521) qui est conçu, lors de l'apparition d'une erreur de transmission de données vers l'abonné relié au premier dispositif émetteur-récepteur (50), pour court-circuiter la première voie de communication (61) et la deuxième voie de communication (62) dans le premier dispositif émetteur-récepteur (50) et, lors de l'apparition d'une erreur de transmission de données vers l'abonné relié au deuxième dispositif émetteur-récepteur (51), pour court-circuiter la première voie de communication (61) et la deuxième voie de communication (62) dans le deuxième dispositif émetteur-récepteur (51),
dans lequel, en outre, dans le premier mode de fonctionnement,
la première règle de commutation définie dans le dispositif de commutation (33) du premier distributeur (3) retransmet des premiers télégrammes reçus par le premier dispositif émetteur-récepteur (31) et des deuxièmes télégrammes reçus par le deuxième dispositif émetteur-récepteur (32) à la première unité maître (1), et
la deuxième règle de commutation définie dans le dispositif de commutation (43) du deuxième distributeur (4) retransmet des deuxièmes télégrammes reçus par le premier dispositif émetteur-récepteur (41) au deuxième dispositif émetteur-récepteur (42), et
dans lequel, en outre, dans le deuxième mode de fonctionnement,
la première règle de commutation définie dans le dispositif de commutation (33) du premier distributeur (3) retransmet des troisièmes télégrammes reçus par le premier dispositif émetteur-récepteur (31) au deuxième dispositif émetteur-récepteur (32), et
la deuxième règle de commutation définie dans le dispositif de commutation (43) du deuxième distributeur (4) retransmet des troisièmes télégrammes reçus par le deuxième dispositif émetteur-récepteur (42) et des quatrièmes télégrammes reçus par le premier dispositif émetteur-récepteur (42) à la deuxième unité maître (2).

4. Système d'automatisation selon l'une des revendications 1 à 3,
dans lequel le premier mode de fonctionnement est le mode de fonctionnement standard, et
dans le premier mode de fonctionnement, la deuxième règle de commutation définie dans le dispositif de commutation (43) du deuxième distributeur (4) retransmet des télégrammes reçus par le premier dispositif émetteur-récepteur (41) en plus de la deuxième unité maître (2).

5. Système d'automatisation selon la revendication 4, dans lequel le dispositif de commande (21) de la deuxième unité maître (2) est conçu pour surveiller le mode de fonctionnement standard afin de déclencher le deuxième mode de fonctionnement lors de la détection d'une interruption du mode de fonctionnement standard.

6. Système d'automatisation selon la revendication 5, dans lequel le dispositif de commande (21) de la deuxième unité maître (2) est conçu pour transmettre, lors d'une reprise du mode de fonctionnement standard, les télégrammes reçus du dispositif de commande (21) de la deuxième unité maître (2) dans le deuxième mode de fonctionnement au dispositif de commande (11) de la première unité maître (1).

7. Procédé de transmission de télégrammes dans un système d'automatisation comprenant une pluralité d'abonnés et un bus de données en anneau,
dans lequel les abonnés comportent une première unité maître (1), un premier distributeur (3), une deuxième unité maître (2), un deuxième distributeur (4) et au moins une unité esclave (5),
dans lequel la première unité maître (1) et la deuxième unité maître (2) comportent chacune un dispositif de commande (11, 21) qui génère des télégrammes, dans lequel les télégrammes comportent chacun un bloc de données de commande ayant un identifiant individuel et un bloc de données utiles,
**caractérisé en ce que**
le premier distributeur (3) comporte un dispositif de commutation (33), un premier dispositif émetteur-récepteur (31) et un deuxième dispositif émetteur-récepteur (32), dans lequel le dispositif de commutation (33) est relié au dispositif de commande (11) de la première unité maître (1) et aux premier et deuxième dispositifs émetteurs-récepteurs (31, 32) pour transmettre les télégrammes entre le dispositif de commande (11) de la première unité maître (1), le premier dispositif émetteur-récepteur (31) et le deuxième dispositif émetteur-récepteur (32) après évaluation d'identifiants individuels contenus dans les télégrammes sur la base d'une première règle de commutation définie dans le dispositif de commutation (33),
dans lequel le deuxième distributeur (4) comporte un dispositif de commutation (43), un premier dispositif émetteur-récepteur (41) et un deuxième dispositif émetteur-récepteur (42), dans lequel le dispositif de commutation (43) est relié à un dispositif de commande (21) de la deuxième unité maître (2) et aux premier et deuxième dispositifs émetteurs-récepteurs (41, 42) pour transmettre les télégrammes entre le dispositif de commande (21) de la deuxième unité maître (2), le premier dispositif émetteur-récepteur (41) et le deuxième dispositif émetteur-récepteur (42) après évaluation d'identifiants individuels contenus dans les télégrammes sur la base d'une deuxième règle de commutation définie dans le dispositif de commutation (43),
dans lequel les premiers dispositifs émetteurs-récepteurs (31, 41) du premier distributeur (3) et du deuxième distributeur (4) sont reliés par l'intermédiaire du bus de données en anneau (6) pour transmettre des télégrammes entre les premiers dispositifs émetteurs-récepteurs (31, 41) du premier distributeur (3) et du deuxième distributeur (4),
dans lequel les deuxièmes dispositifs émetteurs-récepteurs (32, 42) du premier distributeur (3) et du deuxième distributeur (4) sont reliés par l'intermédiaire du bus de données en anneau (6) pour transmettre des télégrammes entre les deuxièmes dispositifs émetteurs-récepteurs (32, 42) du premier distributeur (3) et du deuxième distributeur (4),
dans lequel l'unité esclave (5) comporte un dispositif de traitement (52), un premier dispositif émetteur-récepteur (50) et un deuxième dispositif émetteur-récepteur (51), dans lequel le dispositif de traitement (52) est relié au premier dispositif émetteur-récepteur (50) et au deuxième dispositif émetteur-récepteur (51) et est conçu pour traiter des télégrammes échangés entre le premier dispositif émetteur-récepteur (50) et le deuxième dispositif émetteur-récepteur (51), et dans lequel le premier dispositif émetteur-récepteur (50) est relié au bus de données (6) pour échanger des télégrammes sur le bus de données (6) avec le premier dispositif émetteur-récepteur (31) du premier distributeur (3), dans lequel le deuxième dispositif émetteur-récepteur (51) est relié au bus de données (6) pour échanger des télégrammes sur le bus de données (6) avec le premier dispositif émetteur-récepteur (41) du deuxième distributeur (4), dans lequel, dans un premier mode de fonctionnement,
la première règle de commutation définie dans le dispositif de commutation (33) du premier distributeur (3) retransmet des télégrammes reçus de la première unité maître (1) au premier dispositif émetteur-récepteur (41), la première règle de commutation définie dans le dispositif de commutation (33) du premier distributeur (3) retransmet des télégrammes reçus par le deuxième dispositif émetteur-récepteur (32) à la première unité maître (1), et
la deuxième règle de commutation définie dans le dispositif de commutation (43) du deuxième distributeur (4) retransmet des premiers télégrammes reçus par le premier dispositif émetteur-récepteur (41) au deuxième dispositif émetteur-récepteur (42),
dans lequel, dans un deuxième mode de fonctionnement,
la deuxième règle de commutation définie dans le dispositif de commutation (43) du deuxième distributeur (4) transmet des télégrammes reçus de la deuxième unité maître (2) au deuxième dispositif émetteur-récepteur (42),
la deuxième règle de commutation définie dans le dispositif de commutation (43) du deuxième distributeur (4) retransmet des télégrammes reçus par le premier dispositif émetteur-récepteur (41) à la deuxième unité maître (2), et
la première règle de commutation définie dans le dispositif de commutation (33) du premier distributeur (3) retransmet des télégrammes reçus par le deuxième dispositif émetteur-récepteur (32) au premier dispositif émetteur-récepteur (31).

8. Procédé selon la revendication 7,
dans lequel le bus de données (6) comprend une première voie de communication (61) et une deuxième voie de communication (62),
dans lequel les premiers dispositifs émetteurs-récepteurs (31, 41) du premier distributeur (3) et du deuxième distributeur (4) sont respectivement reliés à la première voie de communication (61) et à la deuxième voie de communication (62) du bus de données (6) pour transmettre des télégrammes sur la première voie de communication (61) et la deuxième voie de communication (62) du bus de données (6),
dans lequel le premier dispositif émetteur-récepteur (50) de l'unité esclave (5) est relié à la première voie de communication (61) et à la deuxième voie de communication (62) du bus de données (6) pour échanger des télégrammes sur la première voie de communication (61) et la deuxième voie de communication (62) du bus de données (6) avec le premier dispositif émetteur-récepteur (31) du premier distributeur (3),
dans lequel le deuxième dispositif émetteur-récepteur (51) de l'unité esclave (5) est relié à la première voie de communication (61) et à la deuxième voie de communication (62) du bus de données (6) pour échanger des télégrammes sur la première voie de communication (61) et la deuxième voie de communication (62) du bus de données (6) avec le premier dispositif émetteur-récepteur (41) du deuxième distributeur (4),
dans lequel, dans le premier mode de fonctionnement,
le dispositif de commande (11) de la première unité maître (1) génère des premiers télégrammes avec un premier identifiant et des deuxièmes télégrammes avec un deuxième identifiant, qui comportent un bloc de données utiles identique,
la première règle de commutation définie dans le dispositif de commutation (33) du premier distributeur (3) retransmet des premiers télégrammes reçus par la première unité maître (1) au premier dispositif émetteur-récepteur (31) et des deuxièmes télégrammes reçus de la première unité maître (1) au deuxième dispositif émetteur-récepteur (32),
la première règle de commutation définie dans le dispositif de commutation (33) du premier distributeur (3) retransmet des deuxièmes télégrammes reçus par le premier dispositif émetteur-récepteur (31) et des premiers télégrammes reçus par le deuxième dispositif émetteur-récepteur (32) à la première unité maître (1), la deuxième règle de commutation définie dans le dispositif de commutation (43) du deuxième distributeur (4) retransmet des deuxièmes télégrammes reçus par le deuxième dispositif émetteur-récepteur (42) au premier dispositif émetteur-récepteur (41), et
la deuxième règle de commutation définie dans le dispositif de commutation (43) du deuxième distributeur (4) retransmet des premiers télégrammes reçus par le premier dispositif émetteur-récepteur (41) au deuxième dispositif émetteur-récepteur (42),
dans lequel, dans le deuxième mode de fonctionnement,
le dispositif de commande (21) de la deuxième unité maître (2) génère des troisièmes télégrammes avec un troisième identifiant et des quatrièmes télégrammes avec un quatrième identifiant, qui comportent un bloc de données utiles identique,
la deuxième règle de commutation définie dans le dispositif de commutation (43) du deuxième distributeur (4) retransmet des troisièmes télégrammes reçus de la deuxième unité maître (2) au deuxième dispositif émetteur-récepteur (42) et des quatrièmes télégrammes reçus de la deuxième unité maître (2) au premier dispositif émetteur-récepteur (41),
la deuxième règle de commutation définie dans le dispositif de commutation (43) du deuxième distributeur (4) retransmet des troisièmes télégrammes reçus par le premier dispositif émetteur-récepteur (41) et des quatrièmes télégrammes reçus par le deuxième dispositif émetteur-récepteur (42) à la deuxième unité maître (2), la première règle de commutation définie dans le dispositif de commutation (33) du premier distributeur (3) retransmet des troisièmes télégrammes reçus par le deuxième dispositif émetteur-récepteur (32) au premier dispositif émetteur-récepteur (31), et
la première règle de commutation définie dans le dispositif de commutation (33) du premier distributeur (3) retransmet des quatrièmes télégrammes reçus par le premier dispositif émetteur-récepteur (31) au deuxième dispositif émetteur-récepteur (32).

9. Procédé selon la revendication 8,
dans lequel l'unité esclave (5) comporte en outre un dispositif de couplage (521) qui, lors de l'apparition d'une erreur de transmission de données vers l'abonné relié au premier dispositif émetteur-récepteur (50), court-circuite la première voie de communication (61) et la deuxième voie de communication (62) dans le premier dispositif émetteur-récepteur (50) et qui, lors de l'apparition d'une erreur de transmission de données vers l'abonné relié au deuxième dispositif émetteur-récepteur (51), court-circuite la première voie de communication (61) et la deuxième voie de communication (62) dans le deuxième dispositif émetteur-récepteur (51),
dans lequel, en outre, dans le premier mode de fonctionnement,
la première règle de commutation définie dans le dispositif de commutation (33) du premier distributeur (3) retransmet des premiers télégrammes reçus par le premier dispositif émetteur-récepteur (31) et des deuxièmes télégrammes reçus par le deuxième dispositif émetteur-récepteur (32) à la première unité maître (1), et
la deuxième règle de commutation définie dans le dispositif de commutation (43) du deuxième distributeur (4) retransmet des deuxièmes télégrammes reçus par le premier dispositif émetteur-récepteur (41) au deuxième dispositif émetteur-récepteur (42), et
dans lequel, en outre, dans le deuxième mode de fonctionnement,
la première règle de commutation définie dans le dispositif de commutation (33) du premier distributeur (3) retransmet des troisièmes télégrammes reçus par le premier dispositif émetteur-récepteur (31) au deuxième dispositif émetteur-récepteur (32), et
la deuxième règle de commutation définie dans le dispositif de commutation (43) du deuxième distributeur (4) retransmet des troisièmes télégrammes reçus par le deuxième dispositif émetteur-récepteur (42) et des quatrièmes télégrammes reçus par le premier dispositif émetteur-récepteur (42) à la deuxième unité maître (2).

10. Procédé selon l'une des revendications 7 à 9,
dans lequel le premier mode de fonctionnement est le mode de fonctionnement standard, et
dans le premier mode de fonctionnement, la deuxième règle de commutation définie dans le dispositif de commutation (43) du deuxième distributeur (4) retransmet des télégrammes reçus par le premier dispositif émetteur-récepteur (41) en plus de la deuxième unité maître (2).

11. Procédé selon la revendication 10,
dans lequel le dispositif de commande (21) de la deuxième unité maître (2) surveille le mode de fonctionnement standard afin de déclencher le deuxième mode de fonctionnement lors de la détection d'une interruption du mode de fonctionnement standard.

12. Procédé selon la revendication 11,
dans lequel le dispositif de commande (21) de la deuxième unité maître (2) transmet, lors d'une reprise du mode de fonctionnement standard, les télégrammes reçus du dispositif de commande (21) de la deuxième unité maître (2) dans le deuxième mode de fonctionnement au dispositif de commande (11) de la première unité maître (1).
